(19) Europäisches Patentamt
European Patent Office
Office européen des brevets

(11) EP 3 960 713 A1

(12) EUROPEAN PATENT APPLICATION
published in accordance with Art. 153(4) EPC

(43) Date of publication:
**02.03.2022 Bulletin 2022/09**

(21) Application number: **20794061.0**

(22) Date of filing: **27.04.2020**

(51) International Patent Classification (IPC):
***C02F 1/52*** *(2006.01)* ***C02F 1/00*** *(2006.01)*
***C02F 1/28*** *(2006.01)* ***C02F 1/42*** *(2006.01)*
***C02F 1/56*** *(2006.01)*

(52) Cooperative Patent Classification (CPC):
**C02F 1/00; C02F 1/28; C02F 1/42; C02F 1/52; C02F 1/56**

(86) International application number:
**PCT/JP2020/018044**

(87) International publication number:
**WO 2020/218621 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2019 JP 2019085981**

(71) Applicant: **DAIKIN INDUSTRIES, LTD.**
**Osaka-shi, Osaka 530-8323 (JP)**

(72) Inventors:
- **TAIRA, Takahiro**
  **Osaka-shi, Osaka 530-8323 (JP)**
- **HAYASHI, Tadao**
  **Osaka-shi, Osaka 530-8323 (JP)**
- **FUKITA, Nobuo**
  **Osaka-shi, Osaka 530-8323 (JP)**
- **YOSHIDA, Hirotoshi**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

# (54) WATER TREATMENT METHOD AND COMPOSITION

(57) A water treatment method comprising a removal step of removing a polymer (I) containing a polymerization unit (I) based on a monomer represented by the following general formula (I) from water containing the polymer (I) :

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

EP 3 960 713 A1

## Description

TECHNICAL FIELD

The present disclosure relates to a water treatment method and a composition.

BACKGROUND ART

Wastewater generated in association with industrial production may contain various chemical substances used in the production process, and wastewater treatment methods are proposed.

For example, Patent Document 1 discloses a method for treating fluorine-containing wastewater, comprising the steps of adding to fluorine-containing wastewater 15 to 70 mg of aluminum ions per mg of fluorine ions, and adding a flocculant.

Patent Document 2 discloses a wastewater treatment apparatus for removing fluorine from sulfate-containing wastewater, the wastewater treatment apparatus comprising a mixing part for mixing the sulfate-containing wastewater and an aluminum-based inorganic flocculant, a solid-liquid separating part for solid-liquid separating a mixture mixed in the mixing part, and a feeding means for feeding solids obtained by solid-liquid separation in the solid-liquid separating part to the mixing part.

Patent Document 3 discloses a method for treating fluorine-containing wastewater wherein calcium is added to fluorine-containing wastewater to solid-liquid separate fluorine in the wastewater as calcium fluoride insolubilized substances, the method comprising adding calcium to the wastewater, adding a chemical containing a phosphoric acid compound without separating the produced insoluble precipitates, and then adding an aluminum salt having a basicity of 20 to 80%.

Non Patent Document 1, as for a wastewater treatment apparatus for removing fluorine from fluorine-containing wastewater, discloses a method wherein an aluminum-based inorganic flocculant is mixed with wastewater to produce aluminum hydroxide ($Al_2(OH)_3$) floc, and fluorine is adsorbed onto and coprecipitated with the floc.

RELATED ART

PATENT DOCUMENTS

Patent Document 1: Japanese Patent Laid-Open No. 2009-241011
Patent Document 2: Japanese Patent Laid-Open No. 2016-187779
Patent Document 3: International Publication No. WO 2017-017833

NON PATENT DOCUMENTS

Non Patent Document 1: Yuji Wada, "High Class Treatment System of Fluoride-Containing Wastewater", Kagaku To Kogyo, vol. 76, pp. 557-564, 2002

SUMMARY OF THE INVENTION

PROBLEM TO BE SOLVED BY THE INVENTION

The present disclosure provides a novel treatment method for removing a specific polymer from water.

MEANS FOR SOLVING THE PROBLEM

The present disclosure provides a water treatment method comprising a removal step of removing a polymer (I) containing a polymerization unit (I) based on a monomer represented by the following general formula (I) from water containing the polymer (I) (hereinafter, also referred to as the "first treatment method of the present disclosure"):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The polymer (I) is preferably a water-soluble polymer.

The removal step is preferably a step of performing at least one of filtration, adsorption, and flocculation on the water containing the polymer (I).

The removal step is preferably a step of performing flocculation on the water containing the polymer (I).

The removal step is preferably a step of adding an inorganic flocculant to the water containing the polymer (I) .

The inorganic flocculant is preferably at least one metal salt selected from the group consisting of aluminum salts, iron salts, calcium salts, and silicate minerals containing a metal element having a valency of 2 or more and silicon.

The inorganic flocculant is preferably at least one aluminum salt selected from the group consisting of aluminum sulfate and polyaluminum chloride.

The removal step is preferably a step of adding a polymer flocculant to the water containing the polymer (I) .

The polymer flocculant is preferably an anionic polymer flocculant.

The removal step is preferably a step of adding an inorganic flocculant to the water containing the polymer (I) and then adding a polymer flocculant.

The water containing the polymer (I) is preferably water that has undergone a fluoropolymer polymerization step.

The present disclosure also provides a composition comprising a polymer (I) containing a polymerization unit (I) based on a monomer represented by the following general formula (I), water, and a fluorine-containing polymer (excluding the polymer (I)), wherein the composition has a content of the polymer (I) of 250 ppm or less:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The polymer (I) may be a water-soluble polymer in which a proportion of carbon atom-bonded hydrogen atoms replaced by fluorine atoms is 50% or more.

The polymer (I) may be a polymer in which a proportion of carbon atom-bonded hydrogen atoms replaced by fluorine atoms is 50% or more, which contains an ionic group, and which has an ion exchange rate of 53 or less.

The present disclosure also provides a composition comprising a water-soluble polymer in which a proportion of carbon atom-bonded hydrogen atoms replaced by fluorine atoms is 50% or more, water, and a fluorine-containing polymer (excluding the water-soluble polymer), wherein the composition has a content of the water-soluble polymer of 250 ppm or less.

The present disclosure also provides a composition comprising a polymer in which a proportion of carbon atom-bonded hydrogen atoms replaced by fluorine atoms is 50% or more, which contains an ionic group, and which has an ion exchange rate of 53 or less, water, and a fluorine-containing polymer (excluding the polymer), wherein the composition has a content of the polymer of 250 ppm or less.

The fluorine-containing polymer preferably has an ion exchange rate of higher than 53.

The fluorine-containing polymer is preferably polytetrafluoroethylene.

In the composition of the present disclosure, the content of the fluorine-containing polymer is preferably 1 to 5,000 ppm.

The composition of the present disclosure preferably further comprises a metal ion having a valency of 2 or more.

In the composition of the present disclosure, the content of the metal ion having a valency of 2 or more is preferably 0.05 to 1,000 mg/L or more.

The present disclosure further provides a composition comprising a polymer (I) containing a polymerization unit (I) based on a monomer represented by the following general formula (I), water, and a metal ion having a valency of 2 or more, wherein the composition has a content of the polymer (I) of 250 ppm or less:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The present disclosure also provides a composition comprising a water-soluble polymer in which a proportion of carbon atom-bonded hydrogen atoms replaced by fluorine atoms is 50% or more, water, and a metal ion having a valency of 2 or more, wherein the composition has a content of the water-soluble polymer of 250 ppm or less.

The present disclosure also provides a composition comprising a polymer in which a proportion of carbon atom-bonded hydrogen atoms replaced by fluorine atoms is 50% or more, which contains an ionic group, and which has an ion exchange rate of 53 or less, water, and a metal ion having a valency of 2 or more, wherein the composition has a

content of the polymer of 250 ppm or less.

In the composition of the present disclosure, the content of the metal ion having a valency of 2 or more is preferably 0.05 to 1,000 mg/L or more.

The present disclosure also provides a water treatment method comprising a step of removing a water-soluble polymer in which a proportion of carbon atom-bonded hydrogen atoms replaced by fluorine atoms is 50% or more from water containing the water-soluble polymer.

The present disclosure further provides a water treatment method comprising a step of removing a polymer in which a proportion of carbon atom-bonded hydrogen atoms replaced by fluorine atoms is 50% or more, which contains an ionic group, and which has an ion exchange rate of 53 or less from water containing the polymer.

EFFECTS OF INVENTION

The treatment method of the present disclosure is capable of removing a specific polymer such as the above polymer (I) in a novel manner.

DESCRIPTION OF EMBODIMENTS

Before specifically describing the present disclosure, some terms used herein are defined or explained.

The term "organic group" as used herein, unless otherwise specified, means a group containing one or more carbon atoms or a group obtainable by removing one hydrogen atom from an organic compound. Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
RaO-,
RaCO-,
$RaSO_2$- ,
RaCOO-,
RaNRaCO-,
RaCONRa-,
RaOCO-,
$RaOSO_2$-, and
$RaNRbSO_2$- ,
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents, and
Rb is independently H or an alkyl group optionally having one or more substituents.

The organic group is preferably an alkyl group optionally having one or more substituents.

The term "substituent" as used herein, unless otherwise specified, means a group capable of replacing another

atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8, preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms, preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12, preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8, preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12, preferably 2 to 8 carbon atoms in total, and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8, preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total, preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total, preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, aromatic sulfonamide group, and heterocyclic sulfonamide group may be, for example, a methanesulfonamide group, a benzenesulfonamide group, a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8, preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group each may have an aliphatic group, an aliphatic oxy group, a halogen atom, a carbamoyl group, a heterocyclic group ring-fused with the aryl group, and an aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples thereof include alkylthio groups having 1 to 8 carbon atoms in total, more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

The ranges expressed by the endpoints as used herein each include all numerical values within the range (for example, the range of 1 to 10 includes 1.4, 1.9, 2.33, 5.75, 9.98, and the like).

The phrase "at least one" as used herein includes all numerical values equal to or greater than 1 (for example, at least 2, at least 4, at least 6, at least 8, at least 10, at least 25, at least 50, at least 100, and the like).

In the present disclosure, ppm and ppb are values obtained in terms of mass unless specified otherwise.

Hereinafter, the treatment method of the present disclosure will now be described in detail.

The first treatment method of the present disclosure comprises a removal step of removing a polymer (I) containing a polymerization unit (I) based on a monomer represented by the following general formula (I) from water containing the polymer (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The removal step is preferably a step of performing at least one of filtration, adsorption, and flocculation on water containing the polymer (I). The filtration, adsorption, and flocculation may each be performed in combination, and the filtration, adsorption, and flocculation may each be repeated multiple times.

(Filtration)

The filtration method is not limited, and examples thereof include a method involving bringing water containing the polymer (I) into contact with a filtration aid, and a method involving causing water containing the polymer (I) to pass through a filtration membrane. The temperature during filtration is not limited, and may be, for example, 0 to 50°C.

(Method involving bringing water containing polymer (I) into contact with filtration aid)

Water containing the polymer (I), for example, when brought into contact with a filtration aid and then filtered, or when brought into contact with a filtration aid retaining member retaining a filtration aid, is separated into the polymer (I) captured by the filtration aid and a filtrate. The filtration aid is what is commonly used to improve filtration characteristics such as reduction of filtration resistance and prevention of clogging of a filter medium, and is usually a particulate, powdery, or fibrous substance.

The filtration aid functions to capture the polymer (I) in water.

The filtration aid is not limited, and is preferably at least one selected from the group consisting of, for example, diatomaceous earth, filter sand (such as manganese sand, manganese zeolite, activated carbon, anthracite, and ceramic sand), pearlite, and cellulose, and more preferably diatomaceous earth.

The larger the particle size of the filtration aid is, the more suppressed the increase of the filtration pressure is, and the higher the filtration rate is, and therefore the amount of water treated per unit time can be increased. On the other hand, the smaller the particle size of the filtration aid is, the greater the effect of capturing the polymer (I) is, and therefore the concentration of the polymer (I) in the filtrate can be even more reduced.

The average particle size of the filtration aid is preferably 1 to 1,000 μm, more preferably 1 to 500 μm, even more preferably 1 to 200 μm, still more preferably 10 to 100 μm, and particularly preferably 20 to 60 μm. When the average particle size of the filtration aid is 20 μm or more, preferably 40 μm or more, more preferably 60 μm or more, and still more preferably 80 μm or more, the filtration rate can be more increased, and thus the amount of water treated per unit time can be more increased.

When the average particle size of the filtration aid is 80 μm or less, preferably 60 μm or less, more preferably 40 μm or less, and still more preferably 20 μm or less, the effect of capturing the polymer (I) is even more increased, and thus the concentration of the polymer (I) contained in the filtrate can be even more reduced.

The average particle size of the filtration aid means a volume-based average particle size (a volume-average particle size) measured with a laser diffraction particle size distribution measurement apparatus.

The filtration aid is particularly preferably diatomaceous earth having an average particle size of 20 to 60 μm.

The filtration aid may be added to water containing the polymer (I). Filtration performed while directly adding a filtration aid to the filtration-target liquid in this way is generally referred to as "body feeding". Body feeding can effectively suppress an increase of the filtration pressure, and thus has the advantage that the amount of water treated per unit time can be increased, and the filtration operation can be performed for a long period of time while maintaining a high filtration rate.

The filtration aid that is retained by a filtration aid retaining member may be used. The filtration aid retaining member, by retaining the filtration aid, functions to separate (solid-liquid separate) water into the polymer (I) captured by the filtration aid and a filtrate. The filtration aid retaining member may be, for example, a cloth-like member such as filter cloth, filter paper, or metal mesh, a porous material such as sintered metal or sponge, and a filler such as gravel or sand. The kind of the filtration aid retaining member to be used can be suitably selected according to the conditions such as water to be treated.

For example, a layer of the filtration aid may be formed on the surface of the filtration aid retaining member. Forming a layer of the filtration aid on the surface of the filtration aid retaining member before filtration in this way is generally referred to as "precoating". Precoating can effectively prevent clogging of the filtration aid retaining member, thus can suppress an increase of the filtration pressure, and, as a result, can increase the amount of water treated per unit time.

The pore size of the filtration aid retaining member can be suitably set according to the particle size of the filtration aid to be used. The pore size of the filtration aid retaining member may be, for example, 1 to 1,000 μm. The smaller the pore size of the filtration aid retaining member is, the more reliably the filtration aid can be retained. On the other hand, the larger the pore size of the filtration aid retaining member is, the more the pressure loss during filtration can be reduced. When diatomaceous earth is used as the filtration aid, the pore size of the filtration aid retaining member is preferably smaller than the average particle size of the filtration aid, and is preferably, for example, 60% or less of the average particle size of the filtration aid. The material constituting the filtration aid retaining member is not limited, and may be, for example, synthetic fiber such as polypropylene, polyester, polyamide, polyimide, polyacrylonitrile, polytetrafluoroethylene (PTFE), polyphenylene sulfide (PPS), vinylidene chloride, or vinylon, glass fiber, or cotton.

In the first treating method of the present disclosure, body feeding or precoating may be performed singly, or body feeding and precoating may be combined. By combining body feeding and precoating, the polymer (I) in water can be even more efficiently captured, moreover, an increase of the filtration pressure can be even more suppressed, and thus the polymer (I) can be highly efficiently removed over a long period of time.

The amount of the filtration aid can be suitably set according to, for example, the kind of water to be treated and the filtration aid to be used, and is not limited to a specific amount. For example, the amount of the filtration aid added to water in body feeding may be such that the concentration of the filtration aid in water containing the polymer

(I) is 1 to 10,000 ppm, preferably 10 to 1,000 ppm, and more preferably 20 to 100 ppm. The amount of the filtration aid used in precoating may be such that the thickness of the filtration aid layer formed on the surface of the filtration aid retaining member is 0.5 to 10 mm, and preferably 1 to 7 mm.

(Method involving causing water containing polymer (I) to pass through filtration membrane)

By causing water containing the polymer (I) to pass through a filtration membrane, the polymer (I) contained in water can be removed.

The kind of the filtration membrane is not limited, and the filtration membrane may be suitably selected according to water containing the polymer (I), filtration conditions, and the like. The filtration membrane may be any one of a reverse osmosis membrane, a nanofiltration membrane, a filter paper, a microfiltration membrane, and an ultrafiltration membrane, or two or more kinds of filtration membranes may be used in combination. Specifically, a filtration membrane having a pore size of 0.05 nm to 25 μm can be used. A reverse osmosis membrane, a nanofiltration membrane, and an ultrafiltration membrane having a pore size of 0.05 nm to 0.5 μm can be used.

The filtration membrane may have, for example, a NaCl rejection ratio of 10% or more. The NaCl rejection ratio is a value calculated by the following formula after filtering a NaCl solution (raw water) with a filtration membrane to obtain permeated water and measuring the NaCl concentrations of raw water and permeated water:

$$\text{NaCl rejection ratio (\%)} = (1 - (\text{NaCl concentration of permeated water}) / (\text{NaCl concentration of raw water})) \times 100$$

The shape of the filtration membrane is not limited, and may be, for example, flat, spiral, or tubular. When using a plurality of filtration membranes in combination, individual membranes may be arranged in series, or a so-called composite membrane in which a plurality of membranes are stacked in advance may be used. In membrane filtration, the filtration pressure may be suitably set according to the kind of water to be treated, the filtration membrane to be used, and the like.

The filtration is also preferably pressure filtration. By performing pressure filtration, the polymer (I) can be more efficiently removed. A known apparatus can be suitably used in pressure filtration. For example, pressure filtration may be performed using a pressure filtration apparatus equipped with a candle-type filter. When using a pressure filtration apparatus, a cake layer formed on the surface of the filtration aid retaining member can be periodically peeled off by applying internal pressure, and stable water treatment can be performed for a long period of time. Alternatively, water may be separated from the polymer (I) by vacuum filtration. When performing pressure filtration or vacuum filtration, the filtration pressure can be suitably set according to the kind of water to be treated, the filtration aid, the filtration aid retaining member, and the filtration apparatus to be used, and the like.

(Adsorption)

The adsorption can be performed by bringing water containing the polymer (I) into contact with an adsorbent. The method for bringing water containing the polymer (I) into contact with an adsorbent may be a commonly used method. Adsorption can be performed by, for example, a method involving adding an adsorbent to water containing the polymer (I) and stirring the mixture, a column method involving causing water containing the polymer (I) to flow through an adsorbent-packed column, and the like. The packed column used in the column method may be a mobile type, a fixed-bed type, or a fluidized-bed type.

When using a method involving adding an adsorbent to water containing the polymer (I) and stirring the mixture, the adsorbent onto which the polymer (I) is adsorbed and water after adsorption are preferably separated after stirring. The separation method is not limited, and, for example, filtration or the like can be used. The filtration method may be the above-described method of filtering water containing the polymer (I).

The adsorbent is not limited, and at least one selected from the group consisting of, for example, an ion exchange resin, a chelating agent, a synthetic adsorbent, activated carbon, silica gel, clay, and zeolite is preferable. The adsorbent may be alumina, carbon nanotube, or the like.

The adsorbent is more preferably at least one selected from the group consisting of an ion exchange resin, a chelating agent, a synthetic adsorbent, and activated carbon. By using an ion exchange resin, a chelating agent, a synthetic adsorbent, or activated carbon as an adsorbent, the adsorption ratio of the polymer (I) can be improved. A more preferable adsorbent is an ion exchange resin. By using an ion exchange resin, the adsorption ratio of the polymer

(I) can be further increased.

For adsorption, one adsorbent may be used singly, or two or more adsorbents may be used in combination.

The ion exchange resin may be any of a cation exchange resin and an anion exchange resin. The anion exchange resin may be, for example, an anion exchange resin having an amino group and/or a quaternary ammonium group as a functional group. The ion exchange resin is preferably a strongly basic anion exchange resin. The basicity of the anion exchange resin can be variously set according to the kind of a polymer skeleton and/or a functional group. Commercially available anion exchange resins may be used, and, for example, Diaion (TM) SA series and the like manufactured by Mitsubishi Chemical Corporation, A200, A300, PFA694E, and the like manufactured by Purolite, Amberlite (TM) series and Amber Jet (TM) series such as IRA40020H manufactured by Organo Corporation can be used. The cation exchange resin may be, for example, a cation exchange resin having a carboxylic acid group and/or a sulfonic acid group as a functional group. The acidity of the cation exchange resin can be variously set according to the kind of a polymer skeleton and/or a functional group. Commercially available cation exchange resins may be used, and, for example, Diaion (TM) SK series and the like manufactured by Mitsubishi Chemical Corporation, C100 and the like manufactured by Purolite, and Amberlite (TM) series and the like manufactured by Organo Corporation can be used.

The ion exchange resin preferably has a pore size of 1 to 5,000 Å. From the viewpoint of the removal efficiency, the pore size is preferably 50 Å or more, more preferably 100 Å or more, and still more preferably 150 Å or more. The pore size may be 200 Å or more, and may be 250 Å or more.

The pore size may be 1,000 Å or less. The pore size can be calculated by, for example, measuring the specific surface area and the total pore volume by a gas adsorption method.

From the viewpoint of removal efficiency, the ion exchange resin preferably has a total exchange capacity of 0.1 eq/L-Resin or more. The total exchange capacity is more preferably 0.5 eq/L-Resin or more, and still more preferably 0.9 eq/L-Resin or more. A greater total exchange capacity is better, and, for example, the upper limit may be 5.0 eq/L-Resin.

The ion exchange resin is usually spherical, and has an average particle size of about 300 to 1,300 μm.

The chelating agent is usually a compound having a polydentate ligand capable of coordinating with a metal ion to form a chelating compound. The chelating agent is not limited with respect to the material as well as whether it is a gel type or an MR type, and examples include resins obtained by introducing a functional group into a styrene-divinylbenzene copolymer, a phenol polymer, or the like.

The chelating agent is, for example, an iminodiacetic acid type, an iminopropionic acid type, an aminophosphonic acid type such as an aminomethylenephosphonic acid type, a polyamine type, an aminocarboxylic acid type, a dithiocarbamic acid type, a thiol type, an amidoxime type, and a pyridine type.

The chelating agent is preferably spherical, and may have an average particle size of about 300 to 1,300 μm.

Specific examples of the chelating agent include "Uniselec" (trade name) series (manufactured by Unitika Ltd.), "Lewatit" (trade name) series (manufactured by Lanxess), and "Eporus" (R) (trade name) series (manufactured by Miyoshi Oil & Fat Co., Ltd.) (Z-7, Z-100, SE-3, AS-4).

The synthetic adsorbent is a porous resin that does not have an ion exchange group, and known synthetic adsorbents can be employed. Examples of the ion exchange group include an amino group, a quaternary ammonium group, a carboxylic acid group, and a sulfonic acid group. Specific examples of the synthetic adsorbent include styrenic resins such as a styrene-divinylbenzene copolymer, acrylic resins and methacrylic resins such as a (meth)acrylic acid ester-ethylene glycol dimethacrylate copolymer, polyvinyl resins, and dextran resins. Specific examples of commercially available synthetic adsorbents include styrenic resins such as Diaion HP10, Diaion HP20, Diaion HP21, Diaion HP40, Diaion HP50, Sepabeads SP207, Sepabeads SP70, Sepabeads SP825, Sepabeads SP850, and Sepabeads SP207 (all manufactured by Mitsubishi Chemical Corporation) and Amberlite XAD1180N, Amberlite XAD2000, Amberlite XAD4, and Amberlite FPX66 (all manufactured by Organo Corporation); and acrylic resins such as Diaion HP2MG (manufactured by Mitsubishi Chemical Corporation) and Amberlite HXAD-7HP (manufactured by Organo Corporation).

The synthetic adsorbent preferably has a pore size of 1 to 5,000 Å. From the viewpoint of the removal efficiency, the pore size is preferably 50 Å or more, more preferably 100 Å or more, and still more preferably 150 Å or more. The pore size may be 200 Å or more, and may be 250 Å or more. The pore size may be 1,000 Å or less. The pore size can be calculated by, for example, measuring the specific surface area and the total pore volume by a gas adsorption method.

The synthetic adsorbent preferably has a specific surface area of 300 $m^2/g$ or more. The specific surface area is more preferably 400 $m^2/g$ or more, still more preferably 500 $m^2/g$ or more, and further preferably 600 $m^2/g$ or more. The upper limit of the specific surface area is not limited, and may be, for example, 2,000 $m^2/g$ or less, may be 1,500 $m^2/g$ or less, and may be 1,000 $m^2/g$ or less.

The synthetic adsorbent is usually spherical, and has an average particle size of about 200 to 1,300 μm.

The activated carbon can be produced from a carbonaceous material. The carbonaceous material is a material that yields activated carbon by carbonization, activation, or the like, and examples include plant-based materials such as wood, sawdust, charcoal, fruit husks such as coconut husks and walnut husks, and fruit seeds, mineral-based materials such as coal such as peat, lignite A, lignite B, bituminous coal, and anthracite, pitch such as petroleum pitch and coal

pitch, coke, tar such as coal tar and petroleum tar, and petroleum distillation residues, natural materials such as cellulosic fibers such as cotton and rayon, and synthetic materials such as phenol resin, polyvinyl alcohol, polyacrylonitrile. The form may be either powdery, granular, or fibrous, or may be what is obtained by shaping such a form.

The activated carbon preferably has a specific surface area of 500 $m^2/g$ or more. The specific surface area is more preferably 1,000 $m^2/g$ or more, still more preferably 1,500 $m^2/g$ or more, further preferably 1,800 $m^2/g$ or more, and particularly preferably 2,000 $m^2/g$ or more. The upper limit of the specific surface area is not limited, and may be, for example, 2,500 $m^2/g$.

The form of activated carbon is not limited, and may be, for example, pellet-like, granular, powdery, or spherical particles. Activated carbon may be a commercially available product. Examples of commercially available products of the activated carbon include, for example, Shirasagi (TM) manufactured by Osaka Gas Chemical Co., Ltd., Filtrasorb (TM) CAL, Diahope (TM), and Diasorb (TM) manufactured by Calgon Carbon Japan, and Evadia (TM) series manufactured by Swing Corporation.

When activated carbon is used as an adsorbent, activated carbon is preferably highly-activated activated carbon. By using highly-activated activated carbon, the adsorption ratio of the polymer (I) can be higher than that obtained with ordinary activated carbon. The activated carbon preferably has adsorption performance that is improved by a steam activation treatment. In the steam activation treatment, activated carbon is preferably exposed to steam having a temperature of 120°C or higher such as 130 to 350°C or in particular 150 to 1000°C, and a pressure of 0.2 MPa or higher such as 0.5 to 15 MPa or in particular 1 MPa to 15 MPa. The steam activation treatment time is generally 10 seconds to 50 hours such as 10 minutes to 10 hours. During activation, heating may be performed in a furnace.

The surface of activated carbon may be impregnated with a cation. Examples of cations include metal ions, metal oxide ions, and ammonium ions. Examples of metals include metal atoms of groups 1 to 13 of the periodic table (e.g., alkali metals (such as Li, Na, and K), and alkaline earth metals (such as Mg and Ca), Ti, Zr, V, Cr, Fe, Ni, Cu, and Zn).

In the above adsorption, the amount of an adsorbent based on water containing the polymer (I) is not limited, and may be, for example, 0.01 to 1,000 g based on 1,000 g of water containing the polymer (I). Based on 1,000 g of water containing the polymer (I), 0.1 g or more is preferable, 1 g or more is more preferable, and 5 g or more is still more preferable. Also, 500 g or less is preferable.

The temperature during the adsorption is not limited, and may be, for example, 0 to 50°C.

The adsorption apparatus usable in the adsorption is not limited as long as the adsorption apparatus includes the above-described adsorbent, and various adsorption apparatuses may be suitably used according to the purpose. The adsorption apparatus may be, for example, a packed column that is packed with an adsorbent, and specifically an ion exchange column or an activated carbon column.

In the first treatment method of the present disclosure, preferably the polymer (I) is adsorbed onto an adsorbent, and then the adsorbent is recovered. The recovery method is not limited, and a conventionally known method may be used. For example, an adsorbent onto which the polymer (I) is adsorbed may be separated by the above-described filtration.

(Flocculation)

Among the above filtration, adsorption, and flocculation, flocculation is preferable because the removal efficiency of the polymer (I) can be even more improved. Flocculation can be performed by, for example, adding a flocculant to water containing the polymer (I). The removal step is preferably a step of adding a flocculant to water containing the polymer (I). In the removal step, preferably a flocculant is added to water containing the polymer (I), and then the mixture is stirred. The stirring time is not limited, and is suitably set according to the amount of the polymer (I) in water and the amount of the flocculant added. The stirring time may be suitably set in the range of, for example, 0 minutes to 100 hours.

Examples of the flocculant include an inorganic flocculant, an organic flocculant, and a polymer flocculant. The amount of the flocculant added may be suitably selected according to the amount of the polymer (I) contained in water, the kind of the flocculant, and the like, and, for example, may be 300% by weight or less and may be 0.01% by weight or more based on the polymer (I). The amount may be 50% by weight or more, and may be 0.01% by weight or less.

The removal step is particularly preferably a step of adding an inorganic flocculant to water containing the polymer (I). The removal step is to cause the polymer (I) to flocculate, and, in one preferable embodiment, is a step of adding an inorganic flocculant to water containing the polymer (I).

Examples of the inorganic flocculant include metal salts, and commercially available products may be used. Seawater containing $Mg^{2+}$, $Ca^{2+}$, and the like, and a low molecular weight cationic polymer flocculant can also be used.

The amount of the inorganic flocculant added is preferably 0.01% by weight or more, more preferably 0.04% by weight or more, still more preferably 0.1% by weight or more, further preferably 1% by weight or more, particularly preferably 5% by weight or more, and most preferably 10% by weight or more, based on the polymer (I). Also, 300% by weight or less is preferable, 50% by weight or less is preferable, 30% by weight or less is more preferable, and 20% by weight or less is still more preferable, based on the polymer (I).

The amount of the inorganic flocculant added is preferably 1 ppm by weight or more, more preferably 10 ppm by weight or more, and still more preferably 20 ppm by weight or more, based on water containing the polymer (I). Also,15,000 ppm by weight or less is preferable, 10,000 ppm by weight or less is more preferable, and 5,000 ppm by weight or less is still more preferable.

The inorganic flocculant is preferably a metal salt. The metal-salt inorganic flocculant is preferably a metal salt containing a metal element having a valency of 2 or more. The valency of the metal element constituting the metal salt is preferably 2 or more and more preferably 3 or more, and may be 3. The upper limit of the valency of the metal element constituting the metal salt is not limited, and may be, for example, 6 or less. Here, the metal element having a valency of 2 or more and constituting the metal salt is more preferably at least one metal element selected from the group consisting of Fe, Al, and Ca, still more preferably at least one metal element selected from the group consisting of Fe and Al, and particularly preferably Al. The counterion of the metal element constituting the metal salt is more preferably at least one selected from the group consisting of a sulfate ion, a hydroxide ion, a fluoride ion, a nitrate ion, and a chlorine ion, still more preferably at least one selected from the group consisting of sulfate ion and chloride ion, and particularly preferably a sulfate ion.

The term "metal salt" as used herein means a single salt, a double salt, and/or a complex salt. Also, the "salt containing a metal element having a valency of 2 or more" means a simple salt, a double salt, and/or a complex salt containing a metal element having a valency of 2 or more.

The metal salt is preferably at least one metal salt selected from the group consisting of, for example, aluminum salts (such as aluminum sulphate and polyaluminum chloride), iron salts (such as ferrous hydroxide, ferric hydroxide, ferrous sulfate, ferric sulfate, and polyferric sulfate), calcium salts (such as calcium hydroxide, calcium chloride, calcium sulfate, calcium carbonate, calcium nitrate, and calcium fluoride), and silicate minerals containing a metal element having a valency of 2 or more and silicon (such as kaolinite, montmorillonite, and zeolite).

As for the silicate mineral, a commercially available flocculant may be a silica-alumina flocculant. Examples include Fronite 723, Fronite 113, Fronite 101, Fronite S, and Fronite D manufactured by Nihon Kassei Hakudo.

The metal salt usable as a flocculant may have an embodiment of producing a metal salt or converting the counterion of the metal element of the metal salt in the step of adding a flocculant.

An example of such an embodiment is an embodiment wherein a metal salt having a counterion, such as a metal hydroxide, is added to water containing the polymer (I). In such an embodiment, conversion of a counterion of a metal salt occurs. By conversion of a counterion of a metal salt, a better impurity removing effect may be obtained.

The inorganic flocculant is preferably at least one metal salt selected from the group consisting of iron salts and aluminum salts, more preferably at least one metal salt selected from the group consisting of ferric chloride, aluminum sulphate, and polyaluminum chloride, still more preferably at least one aluminum salt selected from the group consisting of aluminum sulphate and polyaluminum chloride, and particularly preferably aluminum sulphate.

Examples of the polymer flocculant include sodium alginate, chitin-chitosan flocculants, cationic polymer flocculants, anionic polymer flocculants, amphoteric polymer flocculants, and nonionic polymer flocculants, and the polymer flocculant is preferably at least one selected from the group consisting of cationic polymer flocculants, anionic polymer flocculants, amphoteric polymer flocculants, and nonionic polymer flocculants.

The amount of the polymer flocculant added is preferably 0.001% by weight or more, more preferably 0.004% by weight or more, and particularly preferably 0.01% by weight or more, based on the polymer (I). The upper limit of the amount of the polymer flocculant added is not limited, and is preferably 50% by weight or less, more preferably 30% by weight or less, and particularly preferably 20% by weight or less, based on the polymer (I) .

The amount of the polymer flocculant added is preferably 0.1 ppm by weight or more, more preferably 1 ppm by weight or more, and still more preferably 2 ppm by weight or more, based on water containing the polymer (I). Also, 15,000 ppm by weight or less is preferable, 10,000 ppm by weight or less is more preferable, and 5,000 ppm by weight or less is still more preferable.

Examples of the cationic polymer flocculant include polyaminoalkyl methacrylate such as dimethylaminoethyl methacrylate, polyethyleneimine, polydiallylammonium halide, chitosan, and urea-formalin resin.

Examples of commercially available products of the cationic polymer flocculants include Takifloc C-403, C-408, C-805, C-806, and C-809 manufactured by Taki Chemical Co., Ltd., and Aronfloc EC-509L, C-508, CX-400, C-303, and CX-333 manufactured by MT AquaPolymer, Inc.

Examples of the anionic polymer flocculant include sodium polyacrylate and polyacrylamide polymer flocculants such as partially hydrolyzed polyacrylamide, partially sulfomethylated polyacrylamide, and poly(2-acrylamide)-2-methylpropane sulfate.

Examples of commercially available products of the anionic polymer flocculants include Floclan A1210 manufactured by Katayama Nalco Inc.; Takifloc A-102, A-103, A-177T, A-108T, A-142, and A-50 manufactured by Taki Chemical Co., Ltd.; Accofloc A-95, A-110, and A-150 manufactured by MT AquaPolymer Inc.; Sumifloc FA-40 and FA-50 manufactured by MT AquaPolymer Inc.; and Diafloc AP199, Ap120C, Ap784, and DF732B manufactured by Mitsubishi Chemical Corporation.

Examples of the nonionic polymer flocculant include polyacrylamide and polyethylene oxide.

Examples of commercially available products of the nonionic polymer flocculants include Takifloc N-100T, N-131, and A-122T manufactured by Taki Chemical Co., Ltd.; Accofloc N-100 and N-210 manufactured by MT AquaPolymer Inc.; Sumifloc FN-10H and FN-20H manufactured by MT AquaPolymer Inc.; and Diafloc NP500, NP780, and DF500 manufactured by Mitsubishi Chemical Corporation.

Examples of the amphoteric polymer flocculant include copolymers of acrylamide, aminoalkyl methacrylate, and sodium acrylate.

Examples of commercially available products of the amphoteric polymer flocculants include Takifloc MC-601, MC-602, and MC-603 manufactured by Taki Chemical Co., Ltd.; and Diafloc KA003 and KA606A manufactured by Mitsubishi Chemical Corporation.

Among the above polymer flocculants, anionic polymer flocculants are preferable.

The temperature during flocculation is not limited, and, for example, is preferably 0°C or higher, more preferably 5°C or higher, and still more preferably 10°C or higher. Also, 50°C or lower is preferable, 40°C or lower is more preferable, and 30°C or lower is still more preferable.

In the removal step, only an inorganic flocculant may be added as a flocculant, only a polymer flocculant may be added, or both an inorganic flocculant and a polymer flocculant may be added. Also, an inorganic flocculant and a polymer flocculant may be added at the same time, a polymer flocculant may be added after an inorganic flocculant is added, or an inorganic flocculant may be added after a polymer flocculant is added. Moreover, a polymer flocculant and an inorganic flocculant may be added in multiple divided portions, or a polymer flocculant and an inorganic flocculant may be alternately added.

The removal step is particularly preferably a step of adding an inorganic flocculant to water containing the polymer (I) and then adding a polymer flocculant. By adding an inorganic flocculant, the surface charge of the polymer (I) is neutralized by the opposite charge to flocculate the polymer and form flocs. Then, by adding a polymer flocculant to coarsen the flocs, the flocs flocculated by the inorganic flocculant can be crosslinked to form coarse flocs, and, accordingly, the polymer (I) can be more efficiently removed.

In this case, the amount of the inorganic flocculant added is preferably 0.01% by weight or more, more preferably 0.04% by weight or more, still more preferably 0.1% by weight or more, further preferably 1% by weight or more, particularly preferably 5% by weight or more, and most preferably 10% by weight or more, based on the polymer (I). Also, 300% by weight or less is preferable, 50% by weight or less is more preferable, 30% by weight or less is still more preferable, and 20% by weight or less is further preferable.

The amount of the inorganic flocculant added is preferably 1 ppm by weight or more, more preferably 10 ppm by weight or more, and still more preferably 20 ppm by weight or more, based on water containing the polymer (I). Also,15,000 ppm by weight or less is preferable, 10,000 ppm by weight or less is more preferable, and 5,000 ppm by weight or less is still more preferable.

The amount of the polymer flocculant added is preferably 0.001% by weight or more, more preferably 0.004% by weight or more, and particularly preferably 0.01% by weight or more, based on the polymer (I). Also, 50% by weight or less is preferable, 30% by weight or less is more preferable, and 20% by weight or less is still more preferable.

The amount of the polymer flocculant added is preferably 0.1 ppm by weight or more, more preferably 1 ppm by weight or more, and still more preferably 2 ppm by weight or more, based on water containing the polymer (I). Also,15,000 ppm by weight or less is preferable, 10,000 ppm by weight or less is more preferable, and 5,000 ppm by weight or less is still more preferable.

In the removal step, also preferably, a pH adjuster is added to water containing the polymer (I) to adjust the pH after adding an inorganic flocculant to water containing the polymer (I) and before adding a polymer flocculant. By adjusting the pH, the polymer (I) can be more efficiently removed.

In the removal step, the pH is preferably adjusted to 4.0 or more, more preferably 5.0 or more, and still more preferably 6.0 or more, before a polymer flocculant is added. The pH is preferably adjusted to 11.0 or less, more preferably 9.0 or less, and still more preferably 8.0 or less.

The pH adjuster is not limited, and, for example, an acid compound or an alkali compound can be used. Examples of the acid compound include hydrochloric acid (HC1), nitric acid ($HNO_3$), sulfuric acid ($H_2SO_4$), and phosphoric acid ($H_3PO_4$), and, in particular, hydrochloric acid (HCl) or nitric acid ($HNO_3$) is preferable. Examples of the alkali compound include alkali metal hydroxides such as NaOH and KOH; alkaline earth metal hydroxides such as $Mg(OH)_2$ and $Ca(OH)_2$; and salts having buffering action such as disodium hydrogen phosphate. Examples of organic compounds include ammonia and amine.

The pH can be measured with a pH meter (such as pH meter D-20 manufactured by Horiba Ltd.).

In the first treatment method of the present disclosure, preferably, flocculation is performed on water containing the polymer (I) to flocculate the polymer (I), and then the flocculated polymer (I) is removed from water containing the polymer (I). The method for removing the flocculated polymer (I) from water containing the polymer (I) is not limited, and is, for example, filtration. The filtration method is not limited, and the above-described method can be suitably employed.

In the first treatment method of the present disclosure, preferably, the polymer (I) is flocculated, and then the flocculated polymer (I) is recovered. The recovering method is not limited, and is, for example, filtration. The filtration method is not limited, and the above-described method can be suitably employed.

The removal step is particularly preferably a step of adding an inorganic flocculant to water containing the polymer (I), then adding a polymer flocculant, and filtering water containing the flocculated polymer (I). In this embodiment, a pH adjuster may be added to water containing the polymer (I) to adjust the pH after adding an inorganic flocculant to water containing the polymer (I) and before adding a polymer flocculant. As for the pH, the above range can be employed, and, for example, the pH is also preferably adjusted to 5.0 to 9.0 (preferably 6.0 to 8.0).

The removal step is preferably a step of reducing the concentration of the polymer (I) in water containing the polymer (I) to 50% or less based on the concentration before the removal step. More preferably the concentration is 40% or less, still more preferably 30% or less, further preferably 20% or less, and particularly preferably 10% or less.

The removal step is also preferably a step of reducing the concentration of the polymer (I) in treated water to 250 ppm or less. More preferably the concentration is 200 ppm or less, still more preferably 100 ppm or less, further preferably 80 ppm or less, still further preferably 60 ppm or less, and particularly preferably 50 ppm or less.

By the removal step, a dimer and a trimer of a monomer forming a structural unit constituting the polymer (I) can also be removed from water containing the polymer (I).

The dimer and the trimer may be a dimer and a trimer of a monomer represented by the general formula (I) (hereinafter, also referred to as a monomer (I)). As for the monomer (I) represented by the general formula (I), the dimer and the trimer may each be a polymer formed from one monomer (I) or may be a copolymer formed from two or more monomers (I) having different structures. As for the monomer forming a suitable structural unit constituting the polymer (I), examples of the dimer and the trimer include a dimer and a trimer of a monomer that will be described below.

The polymer (I) contains a polymerization unit (1) based on a monomer represented by the following formula (1). The polymer (I) preferably contains two or more polymerization units (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

$X^2$ is preferably F, Cl, H, or $CF_3$. Further, $Z^1$ and $Z^2$ are preferably F or $CF_3$.

In the present disclosure, the anionic group includes a functional group that imparts an anionic group, e.g., an acid group such as -COOH and an acid base such as $-COONH_4$, in addition to anionic groups such as a sulfate group and a carboxylate group. The anionic group is preferably a sulfate group, a carboxylate group, a phosphate group, a phosphonate group, a sulfonate group, or $-C(CF_3)_2OM$ (wherein M is -H, a metal atom, $-NR^7_4$, imidazolium optionally having a substituent, pyridinium optionally having a substituent, or phosphonium optionally having a substituent, and $R^7$ is H or an organic group), and more preferably a sulfate group, a carboxylate group, a phosphate group, a phosphonate group, or a sulfonate group.

The polymer (I) may contain the polymerization unit (I) that is based solely on one monomer represented by the general formula (I), or may contain the polymerization unit (I) based on two or more monomers represented by the general formula (I).

R is a linking group. The "linking group" as used herein is a (m+1)-valent linking group, and refers to a divalent group when m is 1. The linking group may be a single bond and preferably contains at least one carbon atom, and the number of carbon atoms may be 2 or more, 4 or more, 8 or more, 10 or more, or 20 or more. The upper limit thereof is not limited, but may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be free from carbon atoms and may be a catenary heteroatom such as oxygen, sulfur, or nitrogen.

m is an integer of 1 or more and is preferably 1 or 2 and more preferably 1. When m is an integer of 2 or more, $Z^1$, $Z^2$, and $A^0$ may be the same or different. Next, a suitable configuration wherein m is 1 in the general formula (I) will now be described.

R is preferably a catenary heteroatom such as oxygen, sulfur, or nitrogen, or a divalent organic group.

When R is a divalent organic group, the hydrogen atom bonded to the carbon atom may be replaced by a halogen other than fluorine, such as chlorine, and may or may not contain a double bond. Further, R may be linear or branched, and may be cyclic or acyclic. R may also contain a functional group (e.g., ester, ether, ketone, amine, halide, etc.).

R may also be a fluorine-free divalent organic group or a partially fluorinated or perfluorinated divalent organic

group.

R may be, for example, a hydrocarbon group in which a fluorine atom is not bonded to a carbon atom, a hydrocarbon group in which some of the hydrogen atoms bonded to a carbon atom are replaced by fluorine atoms, or a hydrocarbon group in which all of the hydrogen atoms bonded to the carbon atoms are replaced by fluorine atoms, and these groups optionally contain an oxygen atom, optionally contain a double bond, and optionally contain a functional group.

R is preferably a hydrocarbon group having 1 to 100 carbon atoms that optionally contains an ether bond, wherein some or all of the hydrogen atoms bonded to the carbon atoms in the hydrocarbon group may be replaced by fluorine.

R is preferably at least one selected from $-(CH_2)_a-$, $-(CF_2)_a-$, $-O-(CF_2)_a-$, $-(CF_2)_a-O-(CF_2)_b-$, $-O(CF_2)_a-O-(CF_2)_b-$, $-(CF_2)_a-[O-(CF_2)_b]_c-$, $-O(CF_2)_a-[O-(CF_2)_b]_c-$, $-[(CF_2)_a-O]_b-[(CF_2)_c-O]_d-$, $-O[(CF_2)_a-O]_b-[(CF_2)_c-O]_d-$, $-O-[CF_2CF(CF_3)O]_a-(CF_2)_b-$, $-[CF_2CF(CF_3)O]_a-$, $-[CF(CF_3)CF_2O]_a-$, $-(CF_2)_a-O-[CF(CF_3)CF_2O]_a-$, $-(CF_2)_a-O-[CF(CF_3)CF_2O]_a-(CF_2)_b-$, and combinations thereof.

In the formula, a, b, c, and d are independently at least 1 or more. a, b, c and d may independently be 2 or more, 3 or more, 4 or more, 10 or more, or 20 or more. The upper limits of a, b, c, and d are 100, for example.

R is preferably a divalent group represented by the following general formula (r1):

$$-CF_2-O-(CX^6_2)_e-\{O-CF(CF_3)\}_f-(O)_g- \qquad (r1)$$

wherein $X^6$ is each independently H, F, or $CF_3$; e is an integer of 0 to 3; f is an integer of 0 to 3; and g is 0 or 1, and is also preferably a divalent group represented by the following general formula (r2):

$$-CF_2-O-(CX^7_2)_e-(O)_g- \qquad (r2)$$

wherein $X^7$ is each independently H, F, or $CF_3$; e is an integer of 0 to 3; and g is 0 or 1.

Specific examples suitable for R include $-CF_2-O-$, $-CF_2-O-CF_2-$, $-CF_2-O-CH_2-$, $-CF_2-O-CH_2CF_2-$, $-CF_2-O-CF_2CF_2-$,$-CF_2-O-CF_2CH_2-$, $-CF_2-O-CF_2CF_2CH_2-$, $-CF_2-O-CF(CF_3)-$, $-CF_2-O-CF (CF_3)CF_2-$, $-CF_2-O-CF (CF_3)CF_2-O-$, $-CF_2-O-CF (CF_3)CF_2-O-CF_2-$, and $-CF_2-O-CF(CF_3)CH_2-$. In particular, R is preferably a perfluoroalkylene group optionally containing an oxygen atom, and, specifically, $-CF_2-O-$, $-CF_2-O-CF_2-$, $-CF_2-O-CF_2CF_2-$, $-CF_2-O-CF(CF_3)-$, $-CF_2-O-CF(CF_3)CF_2-$, or $-CF_2-O-CF(CF_3)CF_2-O-$ is preferable.

$-R-CZ^1Z^2-$ in the general formula (I) is preferably a divalent group represented by the following formula (s1) :

$$-CF_2-O-(CX^6_2)_e-\{O-CF(CF_3)\}_f-(O)_g-CZ^1Z^2- \qquad (s1)$$

(wherein $X^6$ is each independently H, F, or $CF_3$; e is an integer of 0 to 3; f is an integer of 0 to 3; g is 0 or 1; and $Z^1$ and $Z^2$ are each independently H, F, an alkyl group, or a fluorine-containing alkyl group), and more preferably, in the formula (s1), $Z^1$ and $Z^2$ are F or $CF_3$, and further preferably one is F, and the other is $CF_3$.

Further, $-R-CZ^1Z^2-$ in the general formula (I) is preferably a divalent group represented by the following formula (s2):

$$-CF_2-O-(CX^7_2)_e-(O)_g-CZ^1Z^2- \qquad (s2)$$

(wherein $X^7$ is each independently H, F, or $CF_3$; e is an integer of 0 to 3; g is 0 or 1; and $Z^1$ and $Z^2$ are each independently F or $CF_3$), and is more preferably a group in which one of $Z^1$ and $Z^2$ is F and the other is $CF_3$ in the formula (s2).

$-R-CZ^1Z^2-$ in the above general formula (I) is preferably $-CF_2-O-CF_2-$, $-CF_2-O-CF(CF_3)-$, $-CF_2-O-C(CF_3)_2-$,$-CF_2-O-CF_2-CF_2-$, $-CF_2-O-CF_2-CF(CF_3)-$, $-CF_2-O-CF_2-C(CF_3)_2-$,$-CF_2-O-CF_2CF_2-CF_2-$, $-CF_2-O-CF_2CF_2-CF(CF_3)-$, $-CF_2-O-CF_2CF_2-C(CF_3)_2-$, $-CF_2-O-CF(CF_3)-CF_2-$, $-CF_2-O-CF(CF_3)-CF(CF_3)-$,$-CF_2-O-CF(CF_3)-C(CF_3)_2-$, $-CF_2-O-CF(CF_3)-CF_2-$, $-CF_2-O-CF(CF_3)-CF(CF_3)-$, $-CF_2-O-CF(CF_3)-C(CF_3)_2-$, $-CF_2-O-CF(CF_3)CF_2-CF_2-$,$-CF_2-O-CF(CF_3)CF_2-CF(CF_3)-$, $-CF_2-O-CF(CF_3)CF_2-C(CF_3)_2-$, $-CF_2-O-CF(CF_3)CF_2-O-CF_2-$, $-CF_2-O-CF(CF_3)CF_2-O-CF(CF_3)-$, or $-CF_2-O-CF(CF_3)CF_2-O-C(CF_3)_2-$, and more preferably $-CF_2-O-CF(CF_3)-$, $-CF_2-O-CF_2-CF(CF_3)-$, $-CF_2-O-CF_2CF_2-CF(CF_3)-$, $-CF_2-O-CF(CF_3)-CF(CF_3)-$, $-CF_2-O-CF(CF_3)CF_2-CF(CF_3)-$, or $-CF_2-O-CF(CF_3)CF_2-O-CF(CF_3)-$.

It is also preferable that the polymer (I) is highly fluorinated. Except for the anionic group ($A^0$) such as a phosphate group moiety (such as $CH_2OP(O)(OM)_2$) and a sulfate group moiety (such as $CH_2OS(O)_2OM$), 80% or more, 90% or more, 95% or more, or 100% of C-H bonds in the polymer (I) are replaced with C-F bonds.

The polymer (I) also preferably has a C-F bond and does not have a C-H bond, in the portion excluding the anionic group ($A^0$). In other words, in the general formula (I), $X^1$, $X^2$, and $X^3$ are all F, and R is preferably a perfluoroalkylene group having one or more carbon atoms; the perfluoroalkylene group may be either linear or branched, may be either

cyclic or acyclic, and may contain at least one catenary heteroatom. The perfluoroalkylene group may have 2 to 20 carbon atoms or 4 to 18 carbon atoms.

The polymer (I) may be partially fluorinated. In other words, the polymer (I) also preferably has at least one hydrogen atom bonded to a carbon atom and at least one fluorine atom bonded to a carbon atom, in the portion excluding the anionic group ($A^0$).

The anionic group ($A^0$) may be $-SO_3M$, $-OSO_3M$, -COOM, $-SO_2NR'CH_2COOM$, $-CH_2OP(O)(OM)_2$, $[-CH_2O]_2P(O)(OM)$, $-CH_2CH_2OP(O)(OM)_2$, $[-CH_2CH_2O]_2P(O)(OM)$, $-CH_2CH_2OSO_3M$, $-P(O)(OM)_2$, $-SO_2NR'CH_2CH_2OP(O)(OM)_2$, $[-SO_2NR'CH_2CH_2O]_2P(O)(OM)$, $-CH_2OSO_3M$, $-SO_2NR'CH_2CH_2OSO_3M$, or $-C(CF_3)_2OM$. Among these, $-SO_3M$, -COOM, or $-P(O)(OM)_2$ is preferable, $-SO_3M$ or -COOM is more preferable, and -COOM is still more preferable.

M is -H, a metal atom, $-NR^7_4$, imidazolium optionally having a substituent, pyridinium optionally having a substituent, or phosphonium optionally having a substituent, and $R^7$ is H or an organic group.

Examples of the metal atom include alkali metals (Group 1) and alkaline earth metals (Group 2), and preferred is Na, K, or Li.

M is preferably -H, a metal atom, or $-NR^7_4$, more preferably -H, an alkali metal (Group 1), an alkaline earth metal (Group 2), or $-NR^7_4$, still more preferably -H, -Na, -K, -Li, or $-NH_4$, further preferably -Na, -K, or $-NH_4$, particularly preferably -Na or $-NH_4$, and most preferably $-NH_4$.

In the polymer (I), each polymerization unit (I) may have a different anionic group or may have the same anionic group.

The polymer (I) is also preferably a polymer containing a polymerization unit (Ia) based on a monomer represented by the following formula (Ia):

$$CF_2=CF-O-Rf^0-A^0 \qquad (Ia)$$

wherein $A^0$ is an anionic group; and Rf° is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The polymer (I) is also preferably a polymer containing a polymerization unit (Ib) based on a monomer represented by the following formula (Ib):

$$CH_2=CH-O-Rf^0-A^0 \qquad (Ib)$$

wherein $A^0$ is an anionic group, and Rf° is a perfluorinated divalent linking group as defined by formula (Ia).

In a preferred embodiment, in the general formula (I), $A^0$ is a sulfate group. $A^0$ is, for example, $-CH_2OSO_3M$, $-CH_2CH_2OSO_3M$, or $-SO_2NR'CH_2CH_2OSO_3M$, wherein R' is H or an alkyl group having 1 to 4 carbon atoms, and M is the same as above.

When $A^0$ is a sulfate group, examples of the monomer represented by the general formula (I) include $CF_2=CF(OCF_2CF_2CH_2OSO_3M)$, $CH_2=CH((CF_2)_4CH_2OSO_3M)$, $CF_2=CF(O(CF_2)_4CH_2OSO_3M)$, $CF_2=CF(OCF_2CF(CF_3)CH_2OSO_3M)$, $CF_2=CF(OCF_2CF(CF_3)OCF_2CF_2CH_2OSO_3M)$, $CH_2=CH((CF_2)_4CH_2OSO_3M)$, $CF_2=CF(OCF_2CF_2SO_2N(CH_3)CH_2CH_2OSO_3M)$, $CH_2=CH(CF_2CF_2CH_2OSO_3M)$, $CF_2=CF(OCF_2CF_2CF_2CF_2SO_2N(CH_3)CH_2CH_2OSO_3M)$, and $CH_2=CH(CF_2CF_2CF_2CH_2OSO_3M)$. In the formula, M is the same as above.

In a preferred embodiment, in the general formula (I), $A^0$ is a sulfonate group. $A^0$ is, for example, $-SO_3M$, wherein M is the same as above.

When $A^0$ is a sulfonate group, examples of the monomer represented by the general formula (I) include $CF_2=CF(OCF_2CF_2SO_3M)$, $CF_2=CF(O(CF_2)_3SO_3M)$, $CF_2=CF(O(CF_2)_4SO_3M)$, $CF_2=CF(OCF_2CF(CF_3)SO_3M)$, $CF_2=CF(OCF_2CF(CF_3)OCF_2CF_2SO_3M)$, $CH_2=CH(CF_2CF_2SO_3M)$, $CF_2=CF(OCF_2CF(CF_3)OCF_2CF_2CF_2CF_2SO_3M)$, $CH_2=CH((CF_2)_4SO_3M)$, $CH_2=C(CF_2CF_2SO_3M)$, and $CH_2=CH((CF_2)_3SO_3M)$. In the formula, M is the same as above.

In a preferred embodiment, in the formula (I), $A^0$ is a carboxylate group. $A^0$ is, for example, -COOM or $-SO_2NR'CH_2COOM$, wherein R' is H or an alkyl group having 1 to 4 carbon atoms, and M is the same as above. When $A^0$ is a carboxylate group, examples of the monomer represented by the general formula (I) include $CF_2=CF(OCF_2CF_2COOM)$, $CF_2=CF(O(CF_2)_3COOM)$, $CF_2=CF(O(CF_2)_4COOM)$, $CF_2=CF(O(CF_2)_5COOM)$, $CF_2=CF(OCF_2CF(CF_3)COOM)$, $CF_2=CF(OCF_2CF(CF_3)O(CF_2)_nCOOM)$ (n is greater than 1), $CH_2=CH(CF_2CF_2COOM)$, $CH_2=CH((CF_2)_4COOM)$, $CH_2=CH(CF_2CF_2COOM)$, $CH_2=CH((CF_2)_3COOM)$, $CF_2=CF(OCF_2CF_2SO_2NR'CH_2COOM)$, $CF_2=CF(O(CF_2)_4SO_2NR'CH_2COOM)$, $CF_2=CF(OCF_2CF(CF_3)SO_2NR'CH_2COOM)$, $CF_2=CF(OCF_2CF(CF_3)OCF_2CF_2SO_2NR'CH_2COOM)$, $CH_2=CH(CF_2CF_2SO_2NR'CH_2COOM)$, $CF_2=CF(OCF_2CF(CF_3)OCF_2CF_2CF_2CF_2SO_2NR'CH_2COOM)$, $CH_2=CH((CF_2)_4SO_2NR'CH_2COOM)$, $CH_2=CH(CF_2CF_2SO_2NR'CH_2COOM)$, and $CH_2=CH((CF_2)_3SO_2NR'CH_2COOM)$. In the formula, R' is H or a $C_{1-4}$ alkyl

group, and M is the same as above.

In a preferable embodiment, in the formula (I), $A^0$ is a phosphate group. $A^0$ is, for example, $-CH_2OP(O)(OM)_2$, $[-CH_2O]_2P(O)(OM)$, $-CH_2CH_2OP(O)(OM)_2$, $[-CH_2CH_2O]_2P(O)(OM)$, $[-SO_2NR'CH_2CH_2O]_2P(O)(OM)$, or $-SO_2NR'CH_2CH_2OP(O)(OM)_2$, wherein R' is a $C_{1-4}$ alkyl group, and M is the same as above.

When $A^0$ is a phosphate group, examples of the monomer represented by the general formula (I) include $CF_2=CF(OCF_2CF_2CH_2OP(O)(OM)_2)$, $CF_2=CF(O(CF_2)_4CH_2OP(O)(OM)_2)$, $CF_2=CF(OCF_2CF(CF_3)CH_2OP(O)(OM)_2)$, $CF_2=CF(OCF_2CF(CF_3)OCF_2CF_2CH_2OP(O)(OM)_2)$, $CF_2=CF(OCF_2CF_2SO_2N(CH_3)CH_2CH_2OP(O)(OM)_2)$, $CF_2=CF(OCF_2CF_2CF_2CF_2SO_2N(CH_3)CH_2CH_2OP(O)(OM)_2)$, $CH_2=CH(CF_2CF_2CH_2OP(O)(OM)_2)$, $CH_2=CH((CF_2)_4CH_2OP(O)(OM)_2)$, $CH_2=CH(CF_2CF_2CH_2OP(O)(OM)_2)$, and $CH_2=CH((CF_2)_3CH_2OP(O)(OM)_2)$. In the formula, M is the same as above.

In the formula (I), $A^0$ is preferably a phosphonate group. When $A^0$ is a phosphonate group, examples of the monomer represented by the general formula (I) include $CF_2=CF(OCF_2CF_2P(O)(OM)_2)$, $CF_2=CF(O(CF_2)_4P(O)(OM)_2)$, $CF_2=CF(OCF_2CF(CF_3)P(O)(OM)_2)$, $CF_2=CF(OCF_2CF(CF_3)OCF_2CF_2P(O)(OM)_2)$, $CH_2=CH(CF_2CF_2P(O)(OM)_2)$, $CH_2=CH((CF_2)_4P(O)(OM)_2)$, $CH_2=CH(CF_2CF_2P(O)(OM)_2)$, and $CH_2=CH((CF_2)_3P(O)(OM)_2)$, wherein M is the same as above.

The polymer (I) is preferably a polymer (1) containing a polymerization unit (1) based on a monomer represented by the following general formula (1):

$$CX_2=CY(-CZ_2-O-Rf-A) \quad (1)$$

wherein X is the same or different and is -H or -F; Y is -H, -F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; A is -COOM, $-SO_3M$, $-OSO_3M$, or $C(CF_3)_2OM$, wherein M is -H, a metal atom,- $NR^7{}_4$, imidazolium optionally having a substituent, pyridinium optionally having a substituent, or phosphonium optionally having a substituent, and $R^7$ is H or an organic group; provided that at least one of X, Y, and Z contains a fluorine atom.

The fluorine-containing alkylene group having 2 to 100 carbon atoms and having an ether bond is an alkylene group which does not include a structure wherein an oxygen atom is an end and which contains an ether bond between carbon atoms.

In the general formula (1), each X is -H or -F. X may be both -F, or at least one thereof may be -H. For example, one thereof may be -F and the other may be -H, or both may be -H.

In the general formula (1), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Y is preferably -H, -F, or $-CF_3$, and more preferably -F.

In the general formula (1), Z is the same or different and is -H, -F, an alkyl group, or a fluoroalkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms.

Z is preferably -H, -F, or $-CF_3$, and more preferably -F.

In the general formula (1), at least one of X, Y, and Z contains a fluorine atom. For example, X may be -H, and Y and Z may be -F.

In the general formula (1), Rf is a fluorine-containing alkylene group having 1 to 40 carbon atoms or a fluorine-containing alkylene group having 2 to 100 carbon atoms and having an ether bond. The fluorine-containing alkylene group having 2 to 100 carbon atoms and having an ether bond is an alkylene group which does not include a structure wherein an oxygen atom is an end and which contains an ether bond between carbon atoms.

The fluorine-containing alkylene group preferably has 2 or more carbon atoms. Further, the fluorine-containing alkylene group preferably has 30 or less carbon atoms, more preferably 20 or less carbon atoms, and still more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$,$-CF(CF_3)-$, $-CF(CF_3)CF_2-$, and $-CF(CF_3)CH_2-$. The fluorine-containing alkylene group is preferably a perfluoroalkylene group.

The fluorine-containing alkylene group having an ether bond preferably has 3 or more carbon atoms. Further, the fluorine-containing alkylene group having an ether bond preferably has 60 or less, more preferably 30 or less, and still more preferably 12 or less carbon atoms.

The fluorine-containing alkylene group having an ether bond is also preferably a divalent group represented by the following formula:

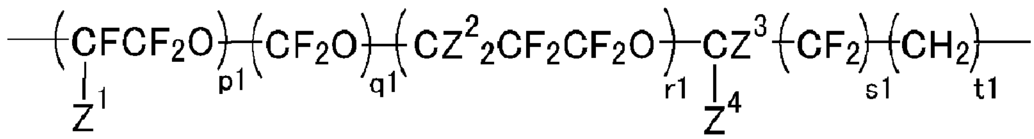

wherein $Z^1$ is F or $CF_3$; $Z^2$ and $Z^3$ are each H or F; $Z^4$ is H, F, or $CF_3$; p1 + q1 + r1 is an integer of 1 to 10; s1 is 0 or 1; and t1 is an integer of 0 to 5.

Specific examples of the fluorine-containing alkylene group having an ether bond include $-CF(CF_3)CF_2-O-CF(CF_3)-$, $-(CF(CF_3)CF_2-O)_n-CF(CF_3)-$ (wherein n is an integer of 1 to 10), $-CF(CF_3)CF_2-O-CF(CF_3)CH_2-$,$-(CF(CF_3)CF_2-O)_n-CF(CF_3)CH_2-$ (wherein n is an integer of 1 to 10), $-CH_2CF_2CF_2O-CH_2CF_2CH_2-$, $-CF_2CF_2CF_2O-CF_2CF_2-$,$-CF_2CF_2CF_2O-CF_2CF_2CH_2-$, $-CF_2CF_2O-CF_2-$, and $-CF_2CF_2O-CF_2CH_2-$.

The fluorine-containing alkylene group having an ether bond is preferably a perfluoroalkylene group.

In the general formula (1), A is -COOM, $-SO_3M$,$-OSO_3M$, or $-C(CF_3)_2OM$, wherein M is -H, a metal atom, $-NR^7_4$, imidazolium optionally having a substituent, pyridinium optionally having a substituent, or phosphonium optionally having a substituent, and $R^7$ is H or an organic group.

$R^7$ is preferably H or a $C_{1-10}$ organic group, more preferably H or a $C_{1-4}$ organic group, and still more preferably H or a $C_{1-4}$ alkyl group.

Examples of the metal atom include alkali metals (Group 1) and alkaline earth metals (Group 2), and preferred is Na, K, or Li.

M is preferably -H, a metal atom, or $-NR^7_4$, more preferably -H, an alkali metal (Group 1), an alkaline earth metal (Group 2), or $-NR^7_4$, still more preferably -H, -Na, -K, -Li, or $-NH_4$, further preferably -Na, -K, or$-NH_4$, particularly preferably -Na or $-NH_4$, and most preferably $-NH_4$.

A is preferably -COOM or $-SO_3M$, and more preferably -COOM.

The monomer represented by the general formula (1) is preferably a fluoroallyl ether compound represented by the following formula (1a):

$$CX_2=CFCF_2-O-(CF(CF_3)CF_2O)_{n5}-CF(CF_3)-A \qquad (1a)$$

wherein each X is the same, and each represent F or H; n5 represents 0 or an integer of 1 to 10; and A is as defined above.

In the formula (1a), n5 is preferably 0 or an integer of 1 to 5, more preferably 0, 1, or 2, and still more preferably 0 or 1 from the viewpoint of obtaining PTFE particles having a small primary particle size. A is preferably -COOM, and M is preferably H or $NH_4$.

The polymer (1) may be a homopolymer of the fluoroallyl ether compound represented by the general formula (1a), or may be a copolymer with further monomer.

The monomer unit (1) is preferably a monomer unit (1A) based on a monomer represented by the following general formula (1A):

$$CH_2=CF(-CF_2-O-Rf-A) \qquad (1A)$$

wherein Rf and A are as described above.

The polymer (1) may be a homopolymer of the monomer represented by the general formula (1A), or may be a copolymer with a further monomer.

Specific examples of the monomer represented by formula (1A) include a monomer represented by the following formula:

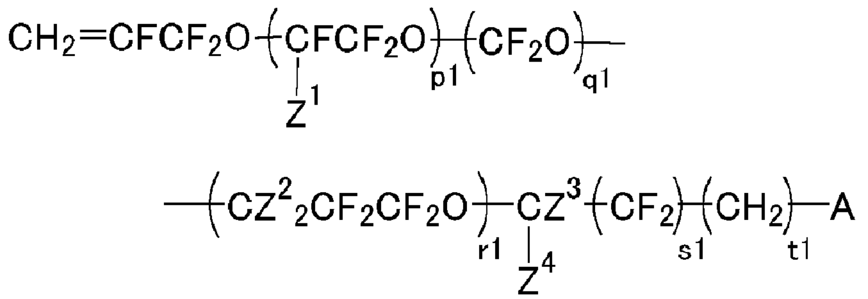

wherein $Z^1$ is F or $CF_3$; $Z^2$ and $Z^3$ are each H or F; $Z^4$ is H, F, or $CF_3$; p1+q1+r1 is an integer of 0 to 10; s1 is 0 or 1; t1 is an integer of 0 to 5, with the proviso that when $Z^3$ and $Z^4$ are both H; and p1+q1+r1+s1 is not 0. More specifically, preferred examples thereof include:

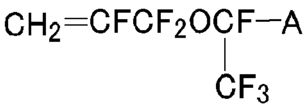, 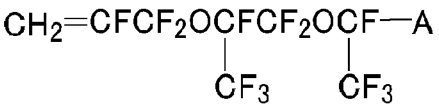,

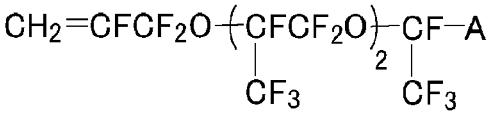, 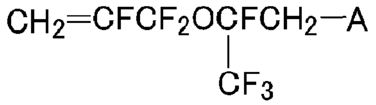,

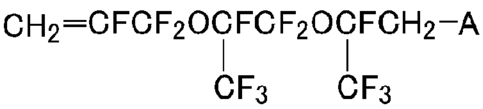, 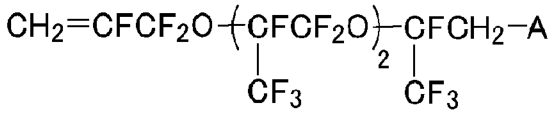,

$CH_2=CFCF_2OCH_2CF_2$-A, $CH_2=CFCF_2O(CH_2CF_2CF_2O)CH_2CF_2$-A, $CH_2=CFCF_2OCH_2CF_2CH_2$-A, $CH_2=CFCF_2O(CH_2CF_2CF_2O)CH_2CF_2CH_2$-A, $CH_2=CFCF_2OCF_2CF_2$-A, $CH_2=CFCF_2O(CF_2CF_2CF_2O)CF_2CF_2$-A, $CH_2=CFCF_2OCF_2CF_2CH_2$-A, $CH_2=CFCF_2O(CF_2CF_2CF_2O)CF_2CF_2CH_2$-A, $CH_2=CFCF_2OCF_2$-A, $CH_2=CFCF_2O(CF_2CF_2O)CF_2$-A, $CH_2=CFCF_2OCF_2CH_2$-A, $CH_2=CFCF_2O(CF_2CF_2O)CF_2CH_2$-A,

Of these, preferred are:

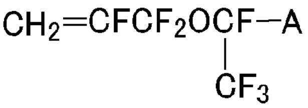, 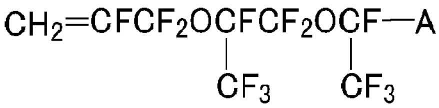,

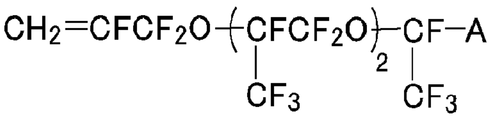, 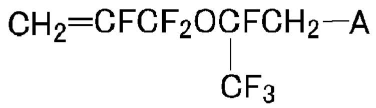,

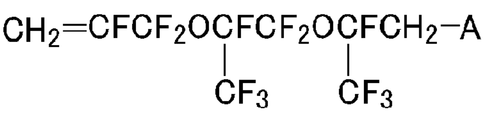, 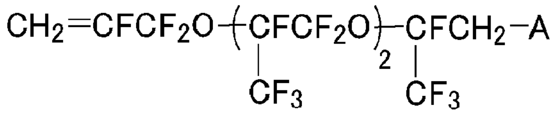,

In the monomer represented by the general formula (1A), A in the formula (1A) is preferably -COOM. Specifically, the monomer represented by the general formula (1A) is preferably at least one selected from the group consisting of $CH_2=CFCF_2OCF(CF_3)COOM$ and $CH_2=CFCF_2OCF(CF_3)CF_2OCF(CF_3)COOM$ (wherein M is as defined above), and more preferably $CH_2=CFCF_2OCF(CF_3)COOM$.

Examples of the monomer represented by the general formula (1) further include monomers represented by the following formulas:

$CF_2=CFCF_2-O-Rf-A$

wherein Rf and A are as described above.

More specific examples thereof include: $CF_2=CFCF_2OCF_2CF_2CF_2-A$,

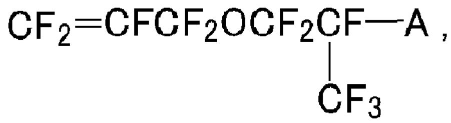

$CF_2=CFCF_2OCF_2CF_2CF_2CH_2-A$,

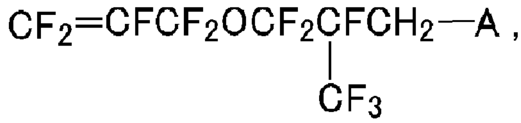

The polymer (I) is also preferably a polymer (2) containing a polymerization unit (2) based on a monomer represented by general formula (2):

$CX_2=CY(-O-Rf-A)$ (2)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

In the general formula (2), each X is -H or -F. X may be both -F, or at least one thereof may be -H. For example, one thereof may be -F and the other may be -H, or both may be -H.

In the general formula (2), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and still more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and still more preferably 3 or less carbon atoms. Y is preferably -H,-F, or $-CF_3$, and more preferably -F.

In the general formula (2), at least one of X and Y preferably contains a fluorine atom. For example, X may be -H, and Y and Z may be -F.

In the general formula (2), Rf is a fluorine-containing alkylene group having 1 to 40 carbon atoms or a fluorine-containing alkylene group having 2 to 100 carbon atoms and having an ether bond. The fluorine-containing alkylene group having 2 to 100 carbon atoms and having an ether bond is an alkylene group which does not include a structure wherein an oxygen atom is an end and which contains an ether bond between carbon atoms.

The fluorine-containing alkylene group preferably has 2 or more carbon atoms. Further, the fluorine-containing alkylene group preferably has 30 or less, more preferably 20 or less, and still more preferably 10 or less carbon atoms. Examples of the fluorine-containing alkylene group include $-CF_2-$, $-CH_2CF_2-$, $-CF_2CF_2-$, $-CF_2CH_2-$, $-CF_2CF_2CH_2-$, $-CF(CF_3)-$, $-CF(CF_3)CF_2-$, and $-CF(CF_3)CH_2-$. The fluorine-containing alkylene group is preferably a perfluoroalkylene group.

The monomer represented by the general formula (2) is preferably at least one selected from the group consisting of monomers represented by the following general formulas (2a), (2b), (2c), (2d), and (2e):

$CF_2=CF-O-(CF_2)_{n1}-A$ (2a)

wherein n1 represents an integer of 1 to 10, and A is as defined above;

$CF_2=CF-O-(CF_2C(CF_3)F)_{n2}-A$ (2b)

wherein n2 represents an integer of 1 to 5, and A is as defined above;

$CF_2=CF-O-(CFX^1)_{n3}-A$ (2c)

wherein $X^1$ represents F or $CF_3$; n3 represents an integer of 1 to 10; and A is as defined above;

$$CF_2=CF-O-(CF_2CFX^1O)_{n4}-(CF_2)_{n6}-A \qquad (2d)$$

wherein n4 represents an integer of 1 to 10; n6 represents an integer of 1 to 3; and A and X1 are as defined above; and

$$CF_2=CF-O-(CF_2CF_2CFX^1O)_{n5}-CF_2CF_2CF_2-A \qquad (2e)$$

wherein n5 represents an integer of 0 to 10, and A and $X^1$ are as defined above.

In the formula (2a), n1 is preferably an integer of 5 or less, and more preferably an integer of 2 or less.

Examples of the monomer represented by the formula (2a) include $CF_2=CF-O-CF_2COOM$, $CF_2=CF(OCF_2CF_2COOM)$, and $CF_2=CF(O(CF_2)_3COOM)$, wherein M is as defined above.

In the formula (2b), n2 is preferably an integer of 3 or less from the viewpoint of dispersion stability of the resulting composition.

In the formula (2c), n3 is preferably an integer of 5 or less from the viewpoint of water solubility, A is preferably -COOM, and M is preferably H or $NH_4$.

In the formula (2d), $X^1$ is preferably $-CF_3$ from the viewpoint of dispersion stability, n4 is preferably an integer of 5 or less from the viewpoint of water solubility, A is preferably -COOM, and M is preferably H or $NH_4$.

Examples of the monomer represented by the formula (2d) include $CF_2=CFOCF_2CF(CF_3)OCF_2CF_2COOM$, $CF_2=CFOCF_2CF(CF_3)OCF_2COOM$, and $CF_2=CFOCF_2CF(CF_3)OCF_2CF_2CF_2COOM$ (wherein M represents H, $NH_4$, or an alkali metal) .

In the formula (2e), n5 is preferably an integer of 5 or less from the viewpoint of water solubility, A is preferably -COOM, and M is preferably H or $NH_4$.

Examples of the monomer represented by the formula (2e) include $CF_2=CFOCF_2CF_2CF_2COOM$ (wherein M represents H, $NH_4$, or an alkali metal).

The polymer (I) is also preferably a polymer (3) containing a polymerization unit (3) based on a monomer represented by general formula (3):

$$CX_2=CY(-Rf-A) \qquad (3)$$

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

The fluorine-containing alkylene group having 2 to 100 carbon atoms and having an ether bond is an alkylene group which does not include a structure wherein an oxygen atom is an end and which contains an ether bond between carbon atoms.

In the general formula (3), Rf is preferably a fluorine-containing alkylene group having 1 to 40 carbon atoms. In the general formula (3), at least one of X and Y preferably contains a fluorine atom.

The monomer represented by the general formula (3) is preferably at least one selected from the group consisting of a monomer represented by general formula (3a) :

$$CF_2=CF-(CF_2)_{n1}-A \qquad (3a)$$

wherein n1 represents an integer of 1 to 10, and A is as defined above; and a monomer represented by general formula (3b):

$$CF_2=CF-(CF_2C(CF_3)F)_{n2}-A \qquad (3b)$$

wherein n2 represents an integer of 1 to 5, and A is as defined above.

In formulas (3a) and (3b), A is preferably $-SO_3M$ or -COOM, and M is preferably H, a metal atom, $NR^7_4$, imidazolium optionally having a substituent, pyridinium optionally having a substituent, or phosphonium optionally having a substituent. $R^7$ represents H or an organic group.

In the formula (3a), n1 is preferably an integer of 5 or less, and more preferably an integer of 2 or less. A is preferably -COOM, and M is preferably H or $NH_4$.

Examples of the monomer represented by the formula (3a) include $CF_2=CFCF_2COOM$, wherein, M is as defined above.

In the general formula (3b), n2 is preferably an integer of 3 or less from the viewpoint of dispersion stability of the resulting aqueous dispersion, A is preferably -COOM, and M is preferably H or $NH_4$.

Next, a suitable configuration wherein m is 2 or more in the general formula (I) will now be described.

The polymer (I) is also preferably a polymer (4) containing a polymerization unit (4) based on at least one monomer selected from the group consisting of monomers represented by general formulas (4a) and (4b):

$$CF_2=CF-CF_2-O-Q^{F1}-CF(-Q^{F2}-CZ^1Z^2-A)_2 \qquad (4a)$$

wherein $Z^1$, $Z^2$, and A are as defined above, and $Q^{F1}$ and $Q^{F2}$ are the same or different and are a single bond, a fluorine-containing alkylene group optionally containing an ether bond between carbon atoms, or a fluorine-containing oxyalkylene group optionally containing an ether bond between carbon atoms; and

$$CF_2=CF-O-Q^{F1}-CF(-Q^{F2}-CZ^1Z^2-A)_2 \qquad (4b)$$

wherein $Z^1$, $Z^2$, A, $Q^{F1}$, and $Q^{F2}$ are as defined above.

Examples of the monomers represented by the general formulas (4a) and (4b) include:

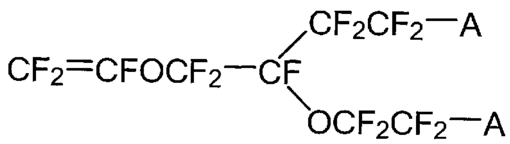

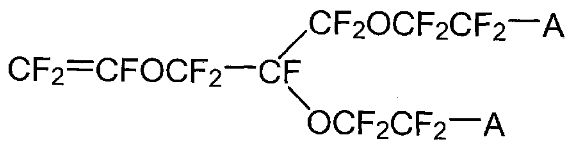

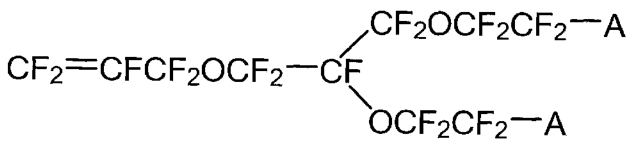

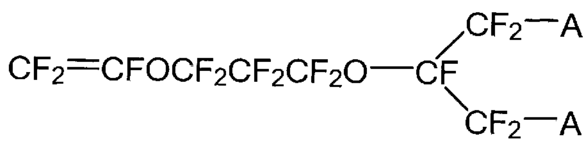

The polymer (I) is preferably at least one selected from the group consisting of the polymer (1), the polymer (2), and the polymer (3), and the polymer (1) is more preferable.

The polymer (I) may be a homopolymer composed solely of the polymerization unit (I), or may be a copolymer containing the polymerization unit (I) and a polymerization unit based on a further monomer copolymerizable with the monomer represented by the general formula (I). From the viewpoint of solubility in a polymerization medium, a homopolymer composed solely of the polymerization unit (I) is preferable. The polymerization unit (I) may be the same or different at each occurrence, and may contain the polymerization unit (I) based on two or more different monomers represented by the general formula (I).

The further monomer is preferably a fluorine-containing ethylenic monomer having 2 or 3 carbon atoms, such as $CF_2=CF_2$, $CF_2=CFCl$, $CH_2=CF_2$, $CFH=CH_2$, $CFH=CF_2$, $CF_2=CFCF_3$, $CH_2=CFCF_3$, $CH_2=CHCF_3$, $CHF=CHCF_3$ (E-form), and $CHF=CHCF_3$ (Z-form).

Among these, from the viewpoint of good copolymerizability, at least one selected from the group consisting of tetrafluoroethylene ($CF_2=CF_2$), chlorotrifluoroethylene ($CF_2=CFCl$), and vinylidene fluoride ($CH_2=CF_2$) is preferable, and tetrafluoroethylene is more preferable. Accordingly, the polymerization unit based on the further monomer is preferably a monomer unit (a polymerization unit) based on tetrafluoroethylene. The polymerization unit based on a further monomer may be the same or different at each occurrence, and the polymer (I) may contain a polymerization unit based on two or more different further monomers.

Examples of the further monomer include a monomer represented by the following formula (n1-2):

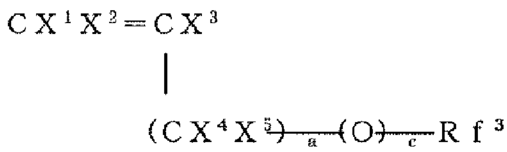

(n1-2)

wherein $X^1$ and $X^2$ are the same or different and H or F; $X^3$ is H, F, Cl, $CH_3$, or $CF_3$; $X^4$ and $X^5$ are the same or different and H or F; a and c are the same or different and 0 or 1; and $Rf^3$ is a fluorine-containing alkyl group having 1 to 40 carbon atoms or a fluorine-containing alkyl group having 2 to 100 carbon atoms and having an ether bond.

Specifically, preferable examples include $CH_2=CFCF_2-O-Rf^3$, $CF_2=CF-O-Rf^3$, $CF_2=CFCF_2-O-Rf^3$, $CF_2=CF-Rf^3$, $CH_2=CH-Rf^3$, and $CH_2=CH-O-Rf^3$ (wherein $Rf^3$ is as in the above formula (n1-2)).

Examples of the further monomer also include a fluorine-containing acrylate monomer represented by formula (n2-1):

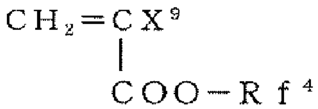

(n2-1)

wherein $X^9$ is H, F, or $CH_3$; and $Rf^4$ is a fluorine-containing alkyl group having 1 to 40 carbon atoms or a fluorine-containing alkyl group having 2 to 100 carbon atoms and having an ether bond. Examples of the $Rf^4$ group include:

$$-(CH_2)_{d1}-(CF_2)_{e1}Z^8$$

wherein $Z^8$ is H, F, or Cl; d1 is an integer of 1 to 4; and e1 is an integer of 1 to 10, $-CH(CP_3)_2$.

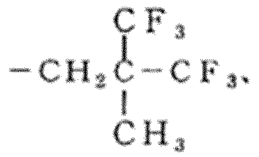

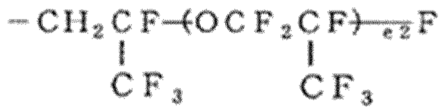

wherein e2 is an integer of 1 to 5,

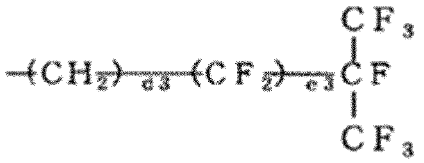

wherein d3 is an integer of 1 to 4; and e3 is an integer of 1 to 10.

Examples of the further monomer also include a fluorine-containing vinyl ether represented by the formula (n2-2):

$CH_2=CHO-Rf^5$ (n2-2)

wherein $Rf^5$ is a fluorine-containing alkyl group having 1 to 40 carbon atoms or a fluorine-containing alkyl group having 2 to 100 carbon atoms and having an ether bond.

Specifically, preferable examples of the monomer represented by the formula (n2-2) include:

$$CH_2=CHOCH_2-(CF_2)_{e4}-Z^9$$

wherein $Z^9$ is H or F; and e4 is an integer of 1 to 10,

$$CH_2=CHOCH_2CH_2-(CF_2)_{e5}-F$$

wherein e5 is an integer of 1 to 10,

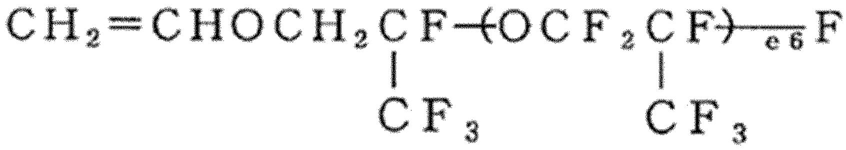

wherein e6 is an integer of 1 to 10.

More specific examples thereof include:

$CH_2=CHOCH_2CF_2CF_2H$,

$CH_2=CHOCH_2-(CF_2CF_2)_2-H$、

$CH_2=CHOCH_2-(CF_2CF_2)_3-H$、

$CH_2=CHOCH_2CF_2CF_3$,

$CH_2=CHOCH_2CF_3$,

$CH_2=CHOCH_2CH_2-(CF_2CF_2)_4-F$、

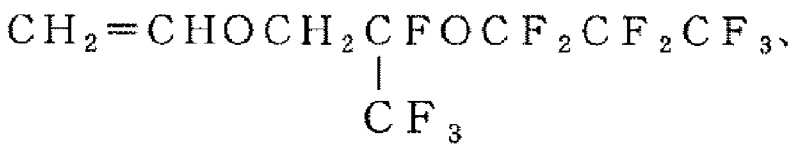

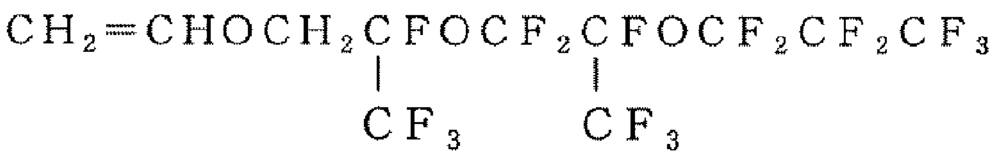

and the like.

In addition, examples also include a fluorine-containing allyl ether represented by the formula (n2-3):

$CH_2=CHCH_2O-Rf^6$ (n2-3)

wherein $Rf^6$ is a fluorine-containing alkyl group having 1 to 40 carbon atoms or a fluorine-containing alkyl group having 2 to 100 carbon atoms and having an ether bond; and a fluorine-containing vinyl ether represented by the formula (n2-4):

$CH_2=CH\text{-}Rf^7$ (n2-4)

wherein $Rf^7$ is a fluorine-containing alkyl group having 1 to 40 carbon atoms or a fluorine-containing alkyl group having 2 to 100 carbon atoms and having an ether bond.

Specific examples of monomers represented by formulas (n2-3) and (n2-4) include monomers such as:

$CH_2=CHCH_2OCH_2CF_2CF_2H$,

$CH_2=CHCH_2OCH_2\text{-}(CF_2CF_2)_2\text{-}H$,

$CH_2=CHCH_2OCH_2\text{-}(CF_2CF_2)_3\text{-}H$,

$CH_2=CHCH_2OCH_3CF_2CF_3$,

$CH_2=CHCH_2OCH_2CF_3$,

$CH_2=CHCH_2OCH_2CH_2\text{-}(CF_2CF_2)_4\text{-}F$,

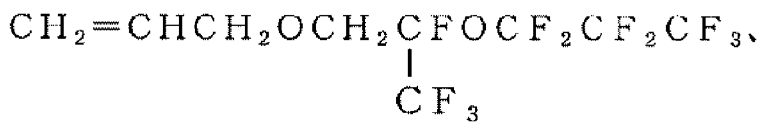

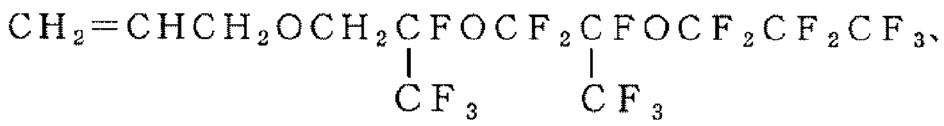

$CH_2=CH\text{-}(CF_2CF_2)_2\text{-}F$,

$CH_2=CH\text{-}(CF_2CF_2)_4\text{-}F$

and the like.

The polymer (I) usually has a terminal group. The terminal group is a terminal group generated during polymerization, and a representative terminal group is independently selected from hydrogen, iodine, bromine, a linear or branched alkyl group, and a linear or branched fluoroalkyl group, and, additionally, may optionally contain at least one catenary heteroatom. The alkyl group or fluoroalkyl group preferably has 1 to 20 carbon atoms.

These terminal groups are, in general, produced from an initiator or a chain transfer agent used to form the polymer (I) or produced during a chain transfer reaction.

The content of the polymerization unit (I) in the polymer (I) is preferably 1.0 mol% or more, more preferably 3.0 mol% or more, still more preferably 5.0 mol% or more, further preferably 10 mol% or more, still further preferably 20 mol% or more, and particularly preferably 30 mol% or more based on all polymerization units. The content is more preferably 40 mol% or more, still more preferably 60 mol% or more, further preferably 80 mol% or more, particularly preferably 90 mol% or more, and still further preferably substantially 100 mol%, and the fluoropolymer is most preferably composed solely of the polymerization unit (I).

In the polymer (I), the content of a polymerization unit based on the further monomer copolymerizable with the monomer represented by the general formula (I) is preferably 99.0 mol% or less, more preferably 97.0 mol% or less, still more preferably 95.0 mol% or less, further preferably 90 mol% or less, still further preferably 80 mol% or less, and particularly preferably 70 mol% or less based on all polymerization units. The content is more preferably 60 mol% or less, still more preferably 40 mol% or less, further preferably 20 mol% or less, particularly preferably 10 mol% or less, and still further preferably substantially 0 mol%, and the fluoropolymer is particularly still further preferably free of a polymerization unit based on the further monomer.

The number average molecular weight of the polymer (I) is preferably $0.1\times10^4$ or more, more preferably $0.2\times10^4$ or more, still more preferably $0.3\times10^4$ or more, particularly preferably $0.4\times10^4$ or more, still further preferably $0.5\times10^4$ or more, particularly preferably $1.0\times10^4$ or more, very particularly preferably $3.0\times10^4$ or more, and most preferably $3.1\times10^4$ or more. Further, the number average molecular weight is preferably $75.0\times10^4$ or less, more preferably $50.0\times10^4$ or less, still more preferably $40.0\times10^4$ or less, further preferably $30.0\times10^4$ or less, and particularly preferably $20.0\times10^4$ or less. The number average molecular weight, and the weight average molecular weight which will be described below, are molecular weight values calculated by gel permeation chromatography (GPC) using monodisperse polystyrene as a standard. Further, when measurement by GPC is not possible, the number average molecular weight of the polymer (I) can be determined by the correlation between the number average molecular weight calculated from the number of terminal groups obtained by NMR, FT-IR, or the like, and the melt flow rate. The melt flow rate can be measured in accordance with JIS K 7210.

The weight average molecular weight of the polymer (I) is preferably $0.2\times10^4$ or more, more preferably $0.4\times10^4$ or more, still more preferably $0.6\times10^4$ or more, particularly preferably $0.8\times10^4$ or more, still further preferably $1.0\times10^4$ or more, particularly preferably $5.0\times10^4$ or more, still particularly preferably $10.0\times10^4$ or more, further particularly preferably $15.0\times10^4$ or more, very particularly preferably $20.0\times10^4$ or more, and most preferably $25.0\times10^4$ or more. Further, the weight average molecular weight is preferably $150.0\times10^4$ or less, more preferably $100.0\times10^4$ or less, still more preferably $60.0\times10^4$ or less, particularly preferably $50.0\times10^4$ or less, and particularly preferably $40.0\times10^4$ or less.

The polymer (I) preferably has water-solubility. Water solubility means the property of being readily dissolved or dispersed in water. The particle size of a water-soluble polymer (I) having water solubility cannot be measured by, for example, dynamic light scattering (DLS). On the other hand, the particle size of a non-water-soluble polymer (I) that is not water soluble can be measured by, for example, dynamic light scattering (DLS).

The polymer (I) preferably has an ion exchange rate (IXR) of 53 or less from the viewpoint of water solubility. The IXR is defined as the number of carbon atoms in the polymer backbone relative to the ionic group. A precursor group that becomes ionic by hydrolysis (such as $-SO_2F$) is not regarded as an ionic group for the purpose of determining the IXR.

The IXR is preferably 0.5 or more, more preferably 1 or more, still more preferably 3 or more, further preferably 4 or more, still further preferably 5 or more, and particularly preferably 8 or more. Further, the IXR is more preferably 43 or less, still more preferably 33 or less, and particularly preferably 23 or less.

In the polymer (I), the ionic groups (anionic groups) are typically distributed along the polymer backbone. The polymer (I) contains the polymer backbone together with a repeating side chain bonded to this backbone, and this side chain preferably has an ionic group.

The polymer (I) preferably contains an ionic group having a pKa of less than 10, more preferably less than 7. The ionic group of the polymer (I) is preferably selected from the group consisting of sulfonate, carboxylate, phosphonate, and phosphate.

The terms "sulfonate, carboxylate, phosphonate, and phosphate" are intended to refer to the respective salts or the respective acids that can form salts. A salt when used is preferably an alkali metal salt or an ammonium salt. A preferable ionic group is a sulfonate group.

The ion exchange capacity of the polymer (I) is 0.80 meg/g or more, 1.50 meg/g or more, 1.75 meg/g or more, 2.00 meg/g or more, 2.50 meg/g or more, 2.60 meg/g or more, 3.00 meg/g or more, and 3.50 meg/g or more in the order of preference. The ion exchange capacity is the content of ionic groups (anionic groups) in the polymer (I) and can be calculated from the composition of the polymer (I).

The polymer (I) can be produced by a conventionally known method except that the above-described monomer is used.

Polymerization of the monomer (I) is preferably carried out substantially in the absence of a fluorine-containing surfactant described below (provided that the monomer (I) represented by the general formula (I) is excluded). The

expression "substantially in the absence of a fluorine-containing surfactant" means that the amount of the fluorine-containing surfactant is 10 mass ppm or less based on the medium used in the polymerization of the monomer (I). The amount of the fluorine-containing surfactant is preferably 1 mass ppm or less, more preferably 100 mass ppb or less, still more preferably 10 mass ppb or less, and further preferably 1 mass ppb or less based on the medium.

In water containing the polymer (I), the content of the polymer (I) is not limited, and is preferably, for example, 10% by mass or less from the viewpoint of increasing removal efficiency. In water containing the polymer (I), the content of the polymer (I) is more preferably 1% by mass or less, still more preferably 0.5% by mass or less, and particularly preferably 0.2% by mass or less. The content may be more than 0% by mass, may be more than 0.005% by mass, may be more than 0.006% by mass, may be more than 0.008% by mass, may be 0.010% by mass or more, may be more than 0.020% by mass, may be more than 0.025% by mass, and may be 0.1% by mass or more.

The content of the polymer (I) can be measured from solid-state NMR.

Examples of the method for measuring the content of the polymer (I) include polymer measurement methods respectively described in International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2012/082454, International Publication No. WO 2006/119224, International Publication No. WO 2013/085864, International Publication No. WO 2012/082707, International Publication No. WO 2012/082703, International Publication No. WO 2012/082454, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, and Japanese Patent Laid-Open No. 11-181009.

Water containing the polymer (I) may solely contain one polymer (I), or may contain two or more different polymers (I).

Water containing the polymer (I) may contain a substance other than the polymer (I) and water, and may be a dispersion, an aqueous solution, or the like.

Examples of the substance other than the polymer (I) and water include fluorine-free polymers other than the polymer (I), fluorine-containing polymers (fluoropolymers) other than the polymer (I), and oligomers.

The fluorine-free polymer and the fluorine-containing polymer other than the polymer (I) also preferably do not contain the polymerization unit (I) that is based on the monomer represented by the general formula (I).

The fluorine-containing polymer other than the polymer (I) is also preferably a fluorine-containing polymer having an ion exchange rate (IXR) exceeding 53.

A preferable fluorine-containing polymer other than the polymer (I) is completely free of an ionic group or has a limited number of ionic groups that result in an ion exchange rate of more than about 100. The ion exchange rate of a preferable fluorine-containing polymer other than the polymer (I) is preferably 1,000 or more, more preferably 2,000 or more, and still more preferably 5,000 or more. Examples of the fluorine-containing polymer other than the polymer (I) include PTFE, copolymers of TFE with another monomer copolymerizable with TFE (fluorine-containing monomers such as vinylidene fluoride, hexafluoropropylene, chlorotrifluoroethylene, and perfluoro(alkyl vinyl ether), hydrocarbon olefins such as ethylene, propylene, and isobutene, and alkyl vinyl ether,) (e.g., a tetrafluoroethylene-hexafluoropropylene copolymer (FEP), a tetrafluoroethylene-perfluoro(alkyl vinyl ether) copolymer (PFA), and an ethylene-tetrafluoroethylene copolymer (ETFE)), fluororesins such as polyvinylidene fluoride (PVDF), polychlorotrifluoroethylene (PCTFE), and ethylene-chlorotrifluoroethylene (ECTFE), vinylidene fluoride rubbers (FKM) such as a vinylidene fluoride-hexafluoropropylene copolymer, fluororubbers such as tetrafluoroethylene-propylene rubber (FEPM) and tetrafluoroethylene-perfluoromethyl vinyl ether rubber (FFKM), and fluorine-containing elastomers.

PTFE may be a homopolymer of TFE, or may be modified PTFE containing 99.0% by mass or more of TFE and 1.0% by weight or less of a modifying monomer.

The fluorine-containing polymer is preferably at least one selected from the group consisting of PTFE and a melt-processable fluororesin containing 60.0 to 98.0% by mass of a TFE unit and 2.0 to 40.0% by mass of another monomer, and is more preferably PTFE.

Water containing the polymer (I) may contain the polymer (I) and a fluorine-containing polymer other than the polymer (I), more preferably contains the polymer (I) and at least one selected from the group consisting of PTFE and a melt-processable fluororesin containing 60.0 to 98.0% by mass of a TFE unit and 2.0 to 40.0% by mass of another monomer, and further preferably contains the polymer (I) and PTFE.

Water containing the polymer (I) preferably has a content of a substance other than the polymer (I) and water of 1.0% by mass or less, more preferably 0.5% by mass or less, and further preferably 0.2% by mass or less. The lower limit of the content of a substance other than the polymer (I) and water is not limited, and, for example, may be 0% by mass or may be 0.1% by mass.

Water containing the polymer (I) preferably has a water content of 99.0% by mass or more. The content is more

preferably 99.5% by mass or more, and still more preferably 99.8% by mass or more.

The pH of water containing the polymer (I) to be subjected to the removal step (water containing the polymer (I) before adding the inorganic flocculant, for example, before the removal step) may be, for example, 1.5 to 13.5, and may be 2 to 13.

The pH of water containing the polymer (I) can be adjusted by a pH adjuster. The pH adjuster is not limited, and, for example, the above-described acid compound, alkali compound, and the like can be used.

Water containing the polymer (I) is not limited as long as it contains the polymer (I), and may be, for example, water (wastewater) generated in industrial production. In one preferable embodiment of the present disclosure, water containing the polymer (I) is wastewater. The removal method of the present disclosure is effective for, for example, treating water generated in the polymer production step described below, and is particularly effective for treating water that has undergone a polymerization step. Accordingly, in one preferable embodiment of the present disclosure, water containing the polymer (I) is also water generated in the polymer production step. Water containing the polymer (I) is preferably water that has undergone a polymerization step, and more preferably water that has undergone a polymerization step for a fluorine-containing polymer (a fluoropolymer). The polymerization step may be, for example, a step of polymerizing a monomer (such as a fluorine-containing monomer described below) in an aqueous medium in the presence of the polymer (I).

The aqueous medium is a reaction medium in which the polymerization is performed, and means a liquid containing water. The aqueous medium may be any medium containing water, and it may be one containing water and, for example, any of fluorine-free organic solvents such as alcohols, ethers, and ketones, and/or fluorine-containing organic solvents having a boiling point of 40°C or lower.

Water generated in the polymer production step may include, in addition to water that has undergone a polymerization step of polymerizing one or more monomers, water generated in a pretreatment step (such as a step of preparing an emulsifier having a predetermined concentration) before the polymerization step, water generated in a post-treatment step (such as a concentration step, a solid-liquid separation step, a coagulation step, a washing step, a dehydration step, a drying step, or a heat treatment step for an aqueous dispersion) after the polymerization step. Examples of water that has undergone the polymerization step include water generated in a polymer production step, or, in particular, the fluorine-containing polymer production step described below. As for water containing the polymer (I), for example, water generated in a polymer production step may be directly used, or water produced in a polymer production step may be used after being diluted or concentrated.

Water containing the polymer (I) includes an aqueous solution, a dispersion, and a liquid obtained by liquefying gas (such as waste gas generated in the drying step described below or the like).

Below, water that has undergone the polymerization step is described in reference to a fluorine-containing polymer production step as an example, but is not limited to water generated in a fluorine-containing polymer production step and also includes water generated in any polymer production step.

Herein, the "fluorine-containing polymer production step" refers to all fluorine-containing polymer production steps wherein one or more monomers including a fluorine-containing monomer are polymerized, and is not limited to a specific production step. The fluorine-containing polymer can also be produced by polymerizing a fluorine-containing monomer in the presence of the polymer (I).

Water containing the polymer (I) preferably contains water obtained in a fluorine-containing polymer production step involving the polymer (I).

Herein, the "fluorine-containing monomer" is not limited as long as it is a monomer having at least one fluorine atom or fluoroalkyl group, and may contain, for example, trifluoroethylene, tetrafluoroethylene (TFE), vinylidene fluoride (VdF), vinyl fluoride (VF), chlorotrifluoroethylene (CTFE), hexafluoropropylene (HFP), hexafluoroisobutylene, perfluoroalkylethylene, fluorovinyl ether (FVE), $CH_2=CFCF_3$, $CHF=CHCF_3$ (E form), $CHF=CHCF_3$ (Z form), or the like.

The fluorine-containing monomer is preferably a monomer other than the monomer represented by the general formula (I).

Herein, the "fluorine-containing polymer" (the fluoropolymer) may be what is obtained by polymerizing the above-described monomer containing one or more fluorine-containing monomers, and, for example, may be a fluorine-containing polymer exemplified as a substance other than the polymer (I) and water, but is not limited thereto. In the first treatment method of the present disclosure, the fluorine-containing polymer may be PTFE.

PTFE may be a TFE homopolymer, or may be modified PTFE containing a TFE unit and a modifying monomer unit that is based on a modifying monomer copolymerizable with TFE. Also, PTFE may be high molecular weight PTFE or low molecular weight PTFE.

High molecular weight PTFE is usually non-melt processable and fibrillatable, and has a standard specific density (SSG) of, for example, 2.130 to 2.280. The standard specific gravity is determined by the water replacement method in conformity with ASTM D-792 using a sample molded in conformity with ASTM D 4895-89. Herein, "high molecular weight PTFE" means that the standard specific gravity is within the above range.

The first treatment method of the present disclosure may include the following fluorine-containing polymer

production step. Herein, the "fluorine-containing polymer production step" is not limited as long as it is a step included in the fluorine-containing polymer production process, and may include one or more steps constituting a known fluorine-containing polymer production process. The "fluorine-containing production step" may include, in addition to a polymerization step of polymerizing one or more monomers including a fluorine-containing monomer, a pretreatment step (such as a step of preparing an emulsifier having a predetermined concentration) before the polymerization step, and a post-treatment step (such as a concentration step, a solid-liquid separation step, a coagulation step, a washing step, a dehydration step, a drying step, or a heat treatment step for an aqueous dispersion) after the polymerization step. Below, specific examples of the "fluorine-containing polymer production step" will now be described, but the method according to the present embodiment is not limited to the following specific examples.

As described above, the fluorine-containing polymer is produced by polymerizing one or more monomers including a fluorine-containing monomer. In this polymerization step, a monomer is preferably polymerized in an aqueous medium, and thereby an aqueous dispersion in which polymer particles are dispersed in an aqueous medium is obtained. The polymerization step is preferably performed in the presence of the polymer (I). Water containing the polymer (I) may be what is obtained by polymerization using the polymer (I).

When used in the state of an aqueous dispersion, the resulting aqueous dispersion may be concentrated by a concentration step (such as phase separation concentration, electroconcentration, filtration treatment using an ultrafiltration membrane, filtration treatment using a reverse osmosis membrane (an RO membrane), or nanofiltration treatment). In that case, the solution containing the polymer (I) remaining after recovering the concentrated aqueous dispersion may be included in "water containing the polymer (I)" herein.

After the polymerization step, a salt or an acid is preferably added to the aqueous dispersion in a coagulation step to flocculate the fluorine-containing polymer. Then, in a solid-liquid separation step, the flocculated fluorine-containing polymer is separated and recovered. The liquid containing the polymer (I) remaining after separating and recovering the fluorine-containing polymer may be included in "water containing the polymer (I)" herein.

The fluorine-containing polymer separated and recovered in the solid-liquid separation step may be washed with a washing liquid such as an aqueous medium in a washing step. Wastewater containing the polymer (I) generated in the washing step may be included in "water containing the polymer (I)" herein. The washing liquid containing the polymer (I) used in the washing step may be included in "water containing the polymer (I)" herein.

The fluorine-containing polymer separated and recovered in the solid-liquid separation step may be mechanically dehydrated in a dehydration step. The liquid containing the polymer (I) removed from the fluorine-containing polymer in the dehydration step may be included in "water containing the polymer (I)" herein.

The fluorine-containing polymer after dehydration may be washed with a washing liquid, and wastewater containing the polymer (I) and generated in this washing step may be included in "the water containing the polymer (I)" herein. The washing liquid containing the polymer (I) and used in this washing step may also be included in "water containing the polymer (I)" herein.

The fluorine-containing polymer obtained after the above-described washing step and/or dehydration step may be thermally dried in a drying step to remove residual water and organic solvent as waste gas. The liquid containing the polymer (I) obtained by liquefying waste gas generated in the drying step may be included in "water containing the polymer (I)" herein.

Waste gas generated in the drying step may contain the polymer (I) accompanied by the fluorine-containing polymer in addition to water vapor and an organic solvent. Accordingly, this waste gas is preferably washed with a washing liquid such as water or an alkaline aqueous solution. The polymer (I)-containing washing liquid used in washing waste gas may also be included in "water containing the polymer (I)" herein.

The fluorine-containing polymer obtained after the drying step may be molded into a desired form such as pellets in a heat treatment step. The liquid containing the polymer (I) obtained by liquefying waste gas generated in the heat treatment step may be included in "water containing the polymer (I)" herein.

Waste gas generated in the heat treatment step may contain the polymer (I) accompanied by the fluorine-containing polymer. Accordingly, this waste gas is preferably washed with a washing liquid such as water or an alkaline aqueous solution. Waste water containing the polymer (I) generated by this washing of waste gas may also be included in "water containing the polymer (I)" herein. The polymer (I)-containing washing liquid used in washing waste gas may also be included in "water containing the polymer (I)" herein.

Both waste gas generated in the drying step and waste gas generated in the heat treatment step may be washed together to obtain a single washing liquid. Wastewater (water) containing the polymer (I) generated by washing both waste gas generated in the drying step and waste gas generated in the heat treatment step together may be included in "water containing the polymer (I)" herein.

Water containing the polymer (I) may be water generated from the production step of a single fluorine-containing polymer, or may contain water generated from the production step of a plurality of different fluorine-containing polymers. For example, water containing the polymer (I) may be a mixture containing water generated from the production step of fluoroelastomer and water generated from the production step of PTFE (such as low molecular weight PTFE), and, by

the first treatment method of the present disclosure, water generated from the production steps of two kinds of fluorine-containing polymers can be treated simultaneously. Water containing the polymer (I) may be water generated from one of the steps included in the production process of a fluorine-containing polymer, or may contain water generated from a plurality of different steps.

For example, water containing the polymer (I) may be a mixture of water obtained in the fluorine-containing polymer production step involving the polymer (I) and water obtained in the fluorine-containing polymer production step involving a fluorine-containing surfactant.

Also, it may be a mixture of water obtained in the fluorine-containing polymer production step involving the polymer (I) and water obtained in the fluorine-containing polymer production step involving a hydrocarbon-based surfactant. The hydrocarbon-based surfactant is not limited, and may be a surfactant having a hydrophilic moiety and a hydrophobic moiety on the same molecule. It may be cationic, nonionic, or anionic.

Examples of the anionic hydrocarbon surfactant include an anionic surfactant represented by R-L-M, wherein R is a linear or branched alkyl group having one or more carbon atoms and optionally having a substituent, or a cyclic alkyl group having 3 or more carbon atoms and optionally having a substituent, and optionally contains a monovalent or divalent heterocycle or optionally forms a ring when having 3 or more carbon atoms; L is $-ArSO_3^-$, $-SO_3^-$, $-SO_4$-, $-PO_3^-$ or $COO^-$, and, M is, H, a metal atom, $NR^5_4$, imidazolium optionally having a substituent, pyridinium optionally having a substituent, or phosphonium optionally having a substituent, wherein $R^5$ is H or an organic group, and $-ArSO_3^-$ is an aryl sulfonate.

Specific examples thereof include a compound represented by $CH_3-(CH_2)_n-L-M$, wherein n is an integer of 6 to 17, as represented by lauryl acid and lauryl sulfate. L and M are the same as described above. Mixtures of those in which R is an alkyl group having 12 to 16 carbon atoms and L-M is sulfate can also be used.

Examples of the anionic hydrocarbon surfactant include an anionic surfactant represented by $R^6(-L-M)_2$, wherein $R^6$ is a linear or branched alkyl group having one or more carbon atoms and optionally having a substituent, or a cyclic alkylene group having 3 or more carbon atoms and optionally having a substituent, and optionally contains a monovalent or divalent heterocycle or optionally forms a ring when having 3 or more carbon atoms; L is $-ArSO_3^-$, $-SO_3^-$, $-SO_4^-$, $-PO_3^-$ or $COO^-$, and, M is, H, a metal atom, $NR^5_4$, imidazolium optionally having a substituent, pyridinium optionally having a substituent, or phosphonium optionally having a substituent, wherein $R^5$ is H or an organic group, and $-ArSO_3^-$ is an aryl sulfonate.

Further, examples of the anionic hydrocarbon surfactant include an anionic surfactant represented by $R^7(-L-M)_3$, wherein $R^7$ is a linear or branched alkylidine group having one or more carbon atoms and optionally having a substituent, or a cyclic alkylidine group having 3 or more carbon atoms and optionally having a substituent, and optionally contains a monovalent or divalent heterocycle or optionally forms a ring when having 3 or more carbon atoms; L is $-ArSO_3^-$, $-SO_3^-$, $-SO_4$-, $-PO_3^-$ or $COO^-$, and, M is, H, a metal atom, $NR^5_4$, imidazolium optionally having a substituent, pyridinium optionally having a substituent, or phosphonium optionally having a substituent, $R^5$ is H or an organic group; and $-ArSO_3^-$ is an aryl sulfonate.

Examples of the anionic hydrocarbon surfactant include Versatic (R) 10 manufactured by Resolution Performance Products, and Avanel S series (S-70, S-74, etc.) manufactured by BASF.

Further, examples of the anionic hydrocarbon surfactant include a siloxane hydrocarbon surfactant. Examples of the siloxane hydrocarbon surfactant include those described in Silicone Surfactants, R.S. M. Hill, Marcel Dekker, Inc., ISBN: 0-8247-00104. The structure of the siloxane hydrocarbon surfactant includes defined hydrophobic and hydrophilic moieties. The hydrophobic moiety contains one or more dihydrocarbyl siloxane units, where the substituents on the silicone atoms are completely hydrocarbon. In the sense that the carbon atoms of the hydrocarbyl groups are fully substituted with hydrogen atoms where they can be substituted by halogen such as fluorine, these siloxane surfactants can also be regarded as hydrocarbon surfactants, i.e. the monovalent substituents on the carbon atoms of the hydrocarbyl groups are hydrogen.

The hydrophilic moiety of the siloxane hydrocarbon surfactant may contain one or more polar moieties including ionic groups such as sulfate, sulfonate, phosphonate, phosphate ester, carboxylate, carbonate, sulfosuccinate, taurate (as the free acid, a salt or an ester), phosphine oxides, betaine, betaine copolyol, or quaternary ammonium salts. Ionic hydrophobic moieties may also contain ionically functionalized siloxane grafts. Examples of such siloxane hydrocarbon surfactants include polydimethylsiloxane-graft-(meth)acrylic acid salts, polydimethylsiloxane-graft-polyacrylate salts, and polydimethylsiloxane-grafted quaternary amines. The polar moieties of the hydrophilic moiety of the siloxane hydrocarbon surfactant may contain nonionic groups formed by polyethers, such as polyethylene oxide (PEO), and mixed polyethylene oxide/polypropylene oxide polyethers (PEO/PPO); mono- and disaccharides; and water-soluble heterocycles such as pyrrolidinone. The ratio of ethylene oxide to propylene oxide (EO/PO) may be varied in mixed polyethylene oxide/polypropylene oxide polyethers.

The hydrophilic moiety of the siloxane hydrocarbon surfactant may also contain a combination of ionic and nonionic moieties. Such moieties include, for example, ionically end-functionalized or randomly functionalized polyether or polyol. Preferable is a siloxane having a nonionic moiety, i.e., a nonionic siloxane surfactant.

The arrangement of the hydrophobic and hydrophilic moieties of the structure of a siloxane hydrocarbon surfactant may take the form of a diblock polymer (AB), triblock polymer (ABA), wherein the "B" represents the siloxane portion of the molecule, or a multi-block polymer. Alternatively, the siloxane surfactant may include a graft polymer.
The siloxane hydrocarbon surfactants also include those disclosed in U.S. Patent No. 6,841,616.
Examples of the siloxane-based anionic hydrocarbon surfactant include Noveon(R) by Lubrizol Advanced Materials, Inc. and SilSense™ PE-100 silicone and SilSense™ CA-1 silicone available from Consumer Specialties.
Examples of the anionic hydrocarbon surfactant also include a sulfosuccinate surfactant Lankropol(R) K8300 by Akzo Nobel Surface Chemistry LLC. Examples of the sulfosuccinate surfactant include sodium diisodecyl sulfosuccinate (Emulsogen(R) SB10 by Clariant) and sodium diisotridecyl sulfosuccinate (Polirol(R) TR/LNA by Cesapinia Chemicals).
Examples of the anionic hydrocarbon surfactants also include PolyFox(R) surfactants by Omnova Solutions, Inc. (PolyFox™ PF-156A, PolyFox™ PF-136A, etc.).
The anionic hydrocarbon surfactant includes a compound ($\alpha$) represented by the following formula ($\alpha$):

$R^{10}$-COOM ($\alpha$)

wherein $R^{10}$ is a monovalent organic group containing one or more carbon atoms; and M is H, a metal atom, $NR^{11}_4$, imidazolium optionally having a substituent, pyridinium optionally having a substituent, or phosphonium optionally having a substituent, wherein $R^{11}$ is H or an organic group and may be the same or different. $R^{11}$ is preferably H or a $C_{1-10}$ organic group, and more preferably H or a $C_{1-4}$ organic group.
From the viewpoint of surfactant function, the number of carbon atoms in $R^{10}$ is preferably 2 or more, and more preferably 3 or more. From the viewpoint of water-solubility, the number of carbon atoms in $R^{10}$ is preferably 29 or less, and more preferably 23 or less. Examples of the metal atom as M include alkali metals (Group 1) and alkaline earth metals (Group 2), and preferred is Na, K, or Li. M is preferably H, a metal atom, or $NR^{11}_4$, more preferably H, an alkali metal (Group 1), an alkaline earth metal (Group 2), or $NR^{11}_4$, still more preferably H, Na, K, Li, or $NH_4$, further preferably Na, K, or $NH_4$, particularly preferably Na or $NH_4$, and most preferably $NH_4$.
Examples of the compound ($\alpha$) include $R^{12}$-COOM, wherein $R^{12}$ is a linear or branched, alkyl group, alkenyl group, alkylene group, or alkenylene group having 1 or more carbon atoms and optionally having a substituent, or a cyclic alkyl group, alkenyl group, alkylene group, or alkenylene group having 3 or more carbon atoms and optionally having a substituent, each of which optionally contains an ether bond; when having 3 or more carbon atoms, $R^{12}$ optionally contains a monovalent or divalent heterocycle, or optionally forms a ring; and M is as described above. Specific examples thereof include a compound represented by $CH_3-(CH_2)_n-COOM$, wherein n is an integer of 2 to 28, and M is as described above.
From the viewpoint of emulsion stability, the compound ($\alpha$) is preferably free from a carbonyl group which is not in a carboxyl group. Preferable examples of the hydrocarbon-containing surfactant free from a carbonyl group include a compound of the following formula (A):

R-COO-M (A)

wherein R is an alkyl group, an alkenyl group, an alkylene group, or an alkenylene group containing 6 to 17 carbon atoms, each of which optionally contains an ether bond; M is H, a metal atom, $NR^{11}_4$, imidazolium optionally having a substituent, pyridinium optionally having a substituent, or phosphonium optionally having a substituent; and $R^{11}$ is the same or different and is H or an organic group having 1 to 10 carbon atoms. In the formula (A), R is preferably an alkyl group or an alkenyl group, each of which optionally contains an ether group. The alkyl group or alkenyl group for R may be linear or branched. The number of carbon atoms in R may be, but is not limited to, 2 to 29.
In the formula (A), when R is a linear alkyl group, the number of carbon atoms in R is preferably 3 to 29, and more preferably 5 to 23. When the alkyl group is branched, the number of carbon atoms in R is preferably 5 to 35, and more preferably 11 to 23. When the alkenyl group is linear, the number of carbon atoms in R is preferably 2 to 29, and more preferably 9 to 23. When the alkenyl group is branched, the number of carbon atoms in R is preferably 2 to 29, and more preferably 9 to 23.
Examples of the alkyl group and the alkenyl group include a methyl group, an ethyl group, an isobutyl group, a t-butyl group, and a vinyl group.
Further, the anionic hydrocarbon surfactant may also be a carboxylic acid-type hydrocarbon surfactant. Examples of the carboxylic acid-type hydrocarbon surfactant include butylic acid, valeric acid, caproic acid, enanthic acid, caprylic acid, pelargonic acid, capric acid, lauric acid, myristic acid, pentadecylic acid, palmitic acid, palmitoleic acid, margaric acid, stearic acid, oleic acid, vaccenic acid, linoleic acid, (9,12,15)-linolenic acid, (6,9,12)linolenic acid, eleostearic acid, arachidic acid, 8,11-eicosadienoic acid, mead acid, arachidonic acid, behenic acid, lignoceric acid, nervonic acid, cerotic acid, montanic acid, melissic acid, crotonic acid, myristoleic acid, palmitoleic acid, sapienoic acid, oleic

acid, elaidic acid, vaccenic acid, gadoleic acid, eicosenoic acid, erucic acid, nervonic acid, linoleic acid, eicosadienoic acid, docosadienoic acid, linolenic acid, pinolenic acid, α-eleostearic acid, β-eleostearic acid, mead acid, dihomo-γ-linolenic acid, eicosatrienoic acid, stearidonic acid, arachidonic acid, eicosatetraenoic acid, adrenic acid, boseopentaenoic acid, eicosapentaenoic acid, osbond acid, sardine acid, tetracosapentaenoic acid, docosahexaenoic acid, nisinic acid, and salts thereof. Particularly, preferred is at least one selected from the group consisting of lauric acid, capric acid, myristic acid, pentadecylic acid, palmitic acid, and salts thereof. Examples of the salts include, but are not limited to, those in which hydrogen of the carboxyl group is a metal atom, $NR^{11}_4$, imidazolium optionally having a substituent, pyridinium optionally having a substituent, or phosphonium optionally having a substituent as M in the formula described above.

Further, the anionic hydrocarbon surfactants may be, for example, anionic hydrocarbon surfactants disclosed in International Publication No. WO2013/146950 and International Publication No. WO2013/146947. Examples thereof include those having a saturated or unsaturated aliphatic chain having 6 to 40 carbon atoms, preferably 8 to 20 carbon atoms, and more preferably 9 to 13 carbon atoms. The saturated or unsaturated aliphatic chain may be either linear or branched, or may have a cyclic structure. The hydrocarbon may have aromaticity, or may have an aromatic group. The hydrocarbon may contain a hetero atom such as oxygen, nitrogen, or sulfur.

Examples of the anionic hydrocarbon-based surfactants include alkyl sulfonates, alkyl sulfates, and alkyl aryl sulfates, and salts thereof; aliphatic (carboxylic) acids and salts thereof; and phosphoric acid alkyl esters and phosphoric acid alkyl aryl esters, and salts thereof. Of these, preferred are alkyl sulfonates, alkyl sulfates, and aliphatic carboxylic acids, and salts thereof.

Preferable examples of the alkyl sulfates and salts thereof include ammonium lauryl sulfate and sodium lauryl sulfate.

Preferable examples of the aliphatic carboxylic acids or salts thereof include succinic acid, decanoic acid, undecanoic acid, undecenoic acid, lauric acid, hydrododecanoic acid, or salts thereof.

Examples of the fluorine-containing surfactant include anionic fluorine-containing surfactants. The anionic fluorine-containing surfactant may be, for example, a fluorine atom-containing surfactant having 20 or less carbon atoms in total in the portion excluding the anionic group.

The fluorine-containing surfactant may also be a fluorine-containing surfactant having an anionic moiety and having a molecular weight of 800 or less.

The "anionic moiety" means the portion of the fluorine-containing surfactant excluding the cation. For example, in the case of $F(CF_2)_{n1}COOM$ represented by the formula (IA) described later, the anionic moiety is the "$F(CF_2)_{n1}COO$" portion.

Examples of the fluorine-containing surfactant also include fluorine-containing surfactants having a Log POW of 3.5 or less. The Log POW is a partition coefficient between 1-octanol and water, which is represented by Log P (wherein P is the ratio between the concentration of the fluorine-containing surfactant in octanol and the concentration of the fluorine-containing surfactant in water in a phase-separated octanol/water (1:1) liquid mixture containing the fluorine-containing surfactant).

Log POW is determined as follows. Specifically, HPLC is performed on standard substances (heptanoic acid, octanoic acid, nonanoic acid, and decanoic acid) each having a known octanol/water partition coefficient using TOSOH ODS-120T (ϕ4.6 mmx250 mm, manufactured by Tosoh Corp.) as a column and acetonitrile/0.6% by mass $HClO_4$ aqueous solution (=1/1 (vol/vol%)) as an eluent at a flow rate of 1.0 ml/min, a sample amount of 300 μL, and a column temperature of 40°C; with a detection light of UV 210 nm. For each standard substance, a calibration curve is drawn with respect to the elution time and the known octanol/water partition coefficient. Based on the calibration curve, Log POW is calculated from the elution time of the sample liquid in HPLC.

Specific examples of the fluorine-containing surfactant include those disclosed in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO2005/042593, International Publication No. WO2008/060461, International Publication No. WO2007/046377, International Publication No. WO2007/119526, International Publication No. WO2007/046482, International Publication No. WO2007/046345, U.S. Patent Application Publication No. 2014/0228531, International Publication No. WO2013/189824, and International Publication No. WO2013/189826.

Examples of the anionic fluorine-containing surfactant include a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some

or all of Hs are replaced by F; the alkylene group optionally containing one or more ether bonds in which some of Hs are replaced by Cl; and Y° is an anionic group.

The anionic group Y° may be -COOM, $-SO_2M$, $-SO_3M$, or - $C(CF_3)_2OM$, and may be -COOM or $-SO_3M$.

M is H, a metal atom, $NR^7_4$, imidazolium optionally having a substituent, pyridinium optionally having a substituent, or phosphonium optionally having a substituent, and $R^7$ is H or an organic group.

Examples of the metal atom include alkali metals (Group 1) and alkaline earth metals (Group 2), such as Na, K, or Li.

$R^7$ may be H or a $C_{1-10}$ organic group, may be H or a $C_{1-4}$ organic group, and may be H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

$Rf^{n0}$ may be one in which 50% or more of H has been replaced by fluorine.

Examples of the compound represented by the general formula ($N^0$) include:

a compound represented by the following general formula ($N^1$):

$$X^{n0}\text{-}(CF_2)_{m1}\text{-}Y^0 \qquad (N^1)$$

wherein $X^{n0}$ is H, Cl, and F; m1 is an integer of 3 to 15; and Y° is as defined above;
a compound represented by the following general formula ($N^2$):

$$Rf^{n1}\text{-O-}(CF(CF_3)CF_2O)_{m2}CFX^{n1}\text{-}Y^0 \qquad (N^2)$$

wherein $Rf^{n1}$ is a perfluoroalkyl group having 1 to 5 carbon atoms; m2 is an integer of 0 to 3; $X^{n1}$ is F or $CF_3$; and Y° is as defined above;
a compound represented by the following general formula ($N^3$):

$$Rf^{n2}(CH_2)_{m3}\text{-}(Rf^{n3})_q\text{-}Y^0 \qquad (N^3)$$

wherein $Rf^{n2}$ is a partially or fully fluorinated alkyl group having 1 to 13 carbon atoms and optionally containing an ether bond; m3 is an integer of 1 to 3; $Rf^{n3}$ is a linear or branched perfluoroalkylene group having 1 to 3 carbon atoms; q is 0 or 1; and Y° is as defined above;
a compound represented by the following general formula ($N^4$):

$$Rf^{n4}\text{-O-}(CY^{n1}Y^{n2})_pCF_2\text{-}Y^0 \qquad (N^4)$$

wherein $Rf^{n4}$ is a linear or branched partially or fully fluorinated alkyl group having 1 to 12 carbon atoms and optionally containing an ether bond; and $Y^{n1}$ and $Y^{n2}$ are the same or different and are each H or F; p is 0 or 1; and Y° is as defined above; and
a compound represented by the following general formula ($N^5$):

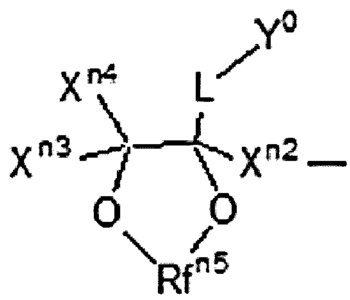

($N^5$)

wherein $X^{n2}$, $X^{n3}$, and $X^{n4}$ may be the same or different and are each H, F, or a linear or branched partial or fully fluorinated alkyl group having 1 to 6 carbon atoms and optionally containing an ether bond; $Rf^{n5}$ is a linear or branched partially or fully fluorinated alkylene group having 1 to 3 carbon atoms and optionally containing an ether bond; L is a linking group; and $Y^0$ is as defined above, with the proviso that the total carbon number of $X^{n2}$, $X^{n3}$, $X^{n4}$, and $Rf^{n5}$ is 18 or less.

More specific examples of the compound represented by general formula ($N^0$) include a perfluorocarboxylic

acid (I) represented by the following general formula (I), an ω-H perfluorocarboxylic acid (II) represented by the following general formula (II), a perfluoropolyethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the general formula (XII), and a compound (XIII) represented by the general formula (XIII).

The perfluorocarboxylic acid (IA) is represented by the following general formula (IA):

$$F(CF_2)_{n1}COOM \qquad (IA)$$

wherein n1 is an integer of 3 to 14; and M is H, a metal atom, $NR^7_4$, imidazolium optionally having a substituent, pyridinium optionally having a substituent, or phosphonium optionally having a substituent, and $R^7$ is H or an organic group.

The ω-H perfluorocarboxylic acid (II) is represented by the following general formula (II):

$$H(CF_2)_{n2}COOM \qquad (II)$$

wherein n2 is an integer of 4 to 15; and M is as defined above.

The perfluoropolyethercarboxylic acid (III) is represented by the following general formula (III):

$$Rf^1\text{-}O\text{-}(CF(CF_3)CF_2O)_{n3}CF(CF_3)COOM \qquad (III)$$

wherein $Rf^1$ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

$$Rf^2(CH_2)_{n4}Rf^3COOM \qquad (IV)$$

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$$Rf^4\text{-}O\text{-}CY^1Y^2CF_2\text{-}COOM \qquad (V)$$

wherein $Rf^4$ is a linear or branched partially or fully fluorinated alkyl group having 1 to 12 carbon atoms and optionally containing an ether bond; $Y^1$ and $Y^2$ are the same or different and are each H or F; and M is as defined above.

The perfluoroalkylsulfonic acid (VI) is represented by the following general formula (VI):

$$F(CF_2)_{n5}SO_3M \qquad (VI)$$

wherein n5 is an integer of 3 to 14; and M is as defined above.

The ω-H perfluorosulfonic acid (VII) is represented by the following general formula (VII):

$$H(CF_2)_{n6}SO_3M \qquad (VII)$$

wherein n6 is an integer of 4 to 14; and M is as defined above.

The perfluoroalkylalkylenesulfonic acid (VIII) is represented by the following general formula (VIII):

$$Rf^5(CH_2)_{n7}SO_3M \qquad (VIII)$$

wherein $Rf^5$ is a perfluoroalkyl group having 1 to 13 carbon atoms; n7 is an integer of 1 to 3; and M is as defined above.

The alkylalkylenecarboxylic acid (IX) is represented by the following general formula (IX):

$$Rf^6(CH_2)_{n8}COOM \qquad (IX)$$

wherein $Rf^6$ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

$$Rf^7\text{-O-}Rf^8\text{-O-}CF_2\text{-COOM} \qquad (X)$$

wherein $Rf^7$ is a linear or branched partially or fully fluorinated alkyl group having 1 to 6 carbon atoms and optionally containing an ether bond; $Rf^8$ is a linear or branched partially or fully fluorinated alkyl group having 1 to 6 carbon atoms; and M is as defined above.

The alkoxyfluorosulfonic acid (XI) is represented by the following general formula (XI):

$$Rf^9\text{-O-}CY^1Y^2CF_2\text{-}SO_3M \qquad (XI)$$

wherein $Rf^9$ is a linear or branched partially or fully fluorinated alkyl group having 1 to 12 carbon atoms and optionally containing an ether bond and optionally containing chlorine; $Y^1$ and $Y^2$ are the same or different and are each H or F; and M is as defined above.

The compound (XII) is represented by the following general formula (XII):

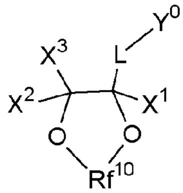

(XII)

wherein $X^1$, $X^2$, and $X^3$ may be the same or different and are H, F, or a linear or branched partially or fully fluorinated alkyl group having 1 to 6 carbon atoms and optionally containing an ether bond; $Rf^{10}$ is a perfluoroalkylene group having 1 to 3 carbon atoms; L is a linking group; and $Y^0$ is an anionic group.

Y° may be -COOM, $-SO_2M$, or $-SO_3M$, and may be $-SO_3M$ or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

$$Rf^{11}\text{-O-}(CF_2CF(CF_3)O)_{n9}(CF_2O)_{n10}CF_2COOM \qquad (XIII)$$

wherein $Rf^{11}$ is a fluoroalkyl group having 1 to 5 carbon atoms containing chlorine, n9 is an integer of 0 to 3, n10 is an integer of 0 to 3, and M is the same as defined above. Examples of the compound (XIII) include $CF_2ClO(CF_2CF(CF_3)O)_{n9}(CF_2O)_{n10}CF_2COONH_4$ (mixture having an average molecular weight of 750, in the formula, n9 and n10 are defined above).

As described above, examples of the anionic fluorine-containing surfactant include a carboxylic acid-based surfactant and a sulfonic acid-based surfactant.

When water containing the polymer (I) contains a solid component, it is also preferable that the first treatment method of the present disclosure further includes a pretreatment step of removing the solid component from water containing the polymer (I) before the removal step. Examples of the solid component include uncoagulated polymers, flocculants, and fine-particle polymers.

The solid component is, for example, a component that may remain in water after the polymer produced in the above-described polymer production step is separated and recovered. For example, in the solid-liquid separation step as the above-described polymer production step, the liquid containing the polymer (I) remaining after the polymer is separated and recovered, i.e., water after the polymer is separated and recovered, may contain an uncoagulated polymer that was not fully recovered in the solid-liquid separation step. When removing the polymer (I) from the liquid containing the polymer (I) remaining after the polymer is separated and recovered, such a solid component may adversely affect the process of removing the polymer (I), and, therefore, is desirably removed from water before the removal step.

Herein, the uncoagulated polymer means a polymer component that exists in a dispersed manner in water remaining after performing a polymer polymerization step, then adding a flocculant, and performing a solid-liquid separation step to separate and recover a polymer, and that deposits as gel-like matter on the surface of a filter medium such as a filter. The particle size of the uncoagulated polymer may be about 0.01 μm to 5.0 μm.

The particle size of the fine-particle polymer that may be contained in water containing the polymer (I) is not limited, and the fine-particle polymer may be, for example, a polymer having a particle size of about 0.1 μm to 0.2 μm. That is to say, water containing the polymer (I) may contain a solid component, and may contain an uncoagulated

polymer and/or a fine-particle polymer as a solid component.

In the first treatment method of the present disclosure, the concentration of the solid component in water containing the polymer (I) is not limited, and water having any solid component concentration can be treated.

The concentration of the solid component in water containing the polymer (I) may vary depending on the polymer production step, and may be, for example, 0.1 ppm to 50,000 ppm.

It is preferable to adjust the solid component in water containing the polymer (I) by the pretreatment step to, for example, 0.05 ppm to 500 ppm, more preferably to 0.05 ppm to 50 ppm, and still more preferably 0.05 ppm to 10 ppm. The lower limit of the solid component may be 0.1 ppm.

The method for removing the solid component is not limited, and examples include filtration. Examples of the filtration method include a method in which the solid component is removed by an UF membrane or a MF membrane, a method involving a filtration aid, and a method involving a liquid cyclone.

Examples of the MF membrane include a safety filter, a hollow fiber membrane, a flat membrane, and a spiral membrane.

Examples of the filtration aid include diatomaceous earth, filter sand (such as manganese sand, manganese zeolite, anthracite, and ceramic sand), pearlite, and cellulose.

The polymer (I) may be a water-soluble polymer in which a proportion of carbon atom-bonded hydrogen atoms replaced by fluorine atoms is 50% or more, or may be a polymer (a polymer $\alpha$) in which the proportion of carbon atom-bonded hydrogen atoms replaced by fluorine atoms is 50% or more, which contains an ionic group, and which has an ion exchange rate of 53 or less as described below.

The present disclosure also provides a composition comprising a polymer (I) containing a polymerization unit (I) based on a monomer represented by the following general formula (I), water, and a fluorine-containing polymer (excluding the polymer (I)), wherein the composition has a content of the polymer (I) of 250 ppm or less (hereafter also referred to as the "first composition of the present disclosure"):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The first composition of the present disclosure may be an aqueous solution of the polymer (I) or a dispersion of the polymer (I).

In the first composition of the present disclosure, the polymer (I) is the same as that described with respect to the first treatment method of the present disclosure, and a preferable embodiment can be suitably adopted. In particular, the above-described polymer (1) is preferable.

In the first composition of the present disclosure, the content of the polymer (I) is 250 ppm or less based on the mass of the composition. The content of the polymer (I) is preferably 200 ppm or less, more preferably 150 ppm or less, still more preferably 100 ppm or less, further preferably 50 ppm or less, still further preferably 25 ppm or less, and particularly preferably 10 ppm or less. The lower limit of the content is not limited, and is preferably 0.1 ppm or more, more preferably 0.5 ppm or more, still more preferably 1 ppm or more, further preferably 2 ppm or more, and particularly preferably 5 ppm or more.

The content of the polymer (I) contained in the first composition of the present disclosure can be measured by the same method as water containing the polymer (I). For example, the content can be determined by solid-state NMR measurement.

The first composition of the present disclosure may solely contain one polymer (I), or may contain two or more different polymers (I).

The first composition of the present disclosure contains a fluorine-containing polymer other than the polymer (I).

The fluorine-containing polymer other than the polymer (I) may be the fluorine-containing polymer other than the polymer (I) described with respect to the first treatment method of the present disclosure, and a suitable embodiment can suitably be adopted. The fluorine-containing polymer other than the polymer (I) is preferably a fluorine-containing polymer having an ion exchange rate (IXR) exceeding 53. The fluorine-containing polymer other than the polymer (I) is preferably PTFE.

When the first composition of the present disclosure contains PTFE, PTFE may be a TFE homopolymer, may be modified PTFE containing a TFE unit and a modifying monomer unit that is based on a modifying monomer copolymerizable with TFE, may be high molecular weight PTFE, or may be low molecular weight PTFE. PTFE in the composition of the present disclosure may be PTFE described with respect to the first treatment method of the present disclosure.

In the first composition of the present disclosure, the content of the fluorine-containing polymer other than the polymer (I) is preferably 5,000 ppm or less based on the mass of the composition. The content is more preferably 2,000 ppm or less, still more preferably 1,000 ppm or less, and particularly preferably 500 ppm or less. The lower limit of the

content is not limited, and may be substantially 0 ppm, may be more than 0 ppm, may be 1 ppm or more, and may be 100 ppm or more.

The content of the fluorine-containing polymer other than the polymer (I) can be determined by a method of separating a solid component (the fluorine-containing polymer other than the polymer (I)) by a MF membrane.

When the first composition of the present disclosure contains PTFE, the content of PTFE is preferably 5,000 ppm or less based on the mass of the composition. The content is more preferably 2,000 ppm or less, still more preferably 1,000 ppm or less, and particularly preferably 500 ppm or less. The lower limit of the content is not limited, and may be substantially 0 ppm, may be more than 0 ppm, may be 1 ppm or more, and may be 100 ppm or more.

The content of PTFE can be determined by a method for separating a solid component (PTFE) with a MF membrane.

The first composition of the present disclosure may contain a substance other than the polymer (I), water, and the fluorine-containing polymer. The first composition of the present disclosure may contain, for example, the flocculant described with respect to the first treatment method of the present disclosure. The first composition of the present disclosure may contain a metal ion, and may contain a metal ion having a valency of 2 or more. As for the metal ion having a valency of 2 or more, the metal ion as contained in the third composition of the present disclosure described below can suitably be contained.

The content of the metal ion having a valency of 2 or more is preferably 0.05 mg/L or more, more preferably 0.1 mg/L or more, still more preferably 0.15 mg/L or more, and particularly preferably 0.2 mg/L or more, based on the composition. The content of the metal ion having a valency of 2 or more is preferably 1,000 mg/L or less, more preferably 500 mg/L or less, 250 mg/L or less, still more preferably 100 mg/L or less, further preferably 50 mg/L or less, particularly preferably 10 mg/L or less, and most preferably 5 mg/L or less.

In the first composition of the present disclosure, the total amount of the polymer (I), water, and the fluorine-containing polymer other than the polymer (I) is preferably 95.0% by mass or more, preferably 99.0% by mass or more, and more preferably 99.9% by mass or more, and the first composition is particularly preferably composed substantially solely of the polymer (I), water, and the fluorine-containing polymer other than the polymer (I).

The first composition of the present disclosure can be obtained by removing the polymer (I) from water generated in the above-described fluorine-containing polymer production step. As for the removal method, the embodiment described with respect to the above-described first treatment method of the present disclosure can be suitably adopted. In particular, in the removal step, flocculation is performed on the polymer (I), and thus the first composition of the present disclosure can be suitably obtained by a method that employs the step of adding an inorganic flocculant to water containing the polymer (I).

The present disclosure also provides a composition comprising a polymer (I) containing a polymerization unit (I) based on a monomer represented by the following general formula (I), water, and a metal ion having a valency of 2 or more, wherein the composition has a content of the polymer (I) of 250 ppm or less (hereafter also referred to as the "second composition of the present disclosure"):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

The second composition of the present disclosure may be an aqueous solution of the polymer (I) or a dispersion of the polymer (I).

In the second composition of the present disclosure, the polymer (I) is the same as that described with respect to the first treatment method of the present disclosure, and a preferable embodiment can be suitably adopted. In particular, the above-described polymer (1) is preferable.

The second composition of the present disclosure has a content of the polymer (I) of 250 ppm or less based on the mass of the composition. The content of the polymer (I) is preferably 200 ppm or less, more preferably 150 ppm or less, still more preferably 100 ppm or less, further preferably 50 ppm or less, still further preferably 25 ppm or less, and particularly preferably 10 ppm or less. The lower limit of the content is not limited, and is preferably 0.1 ppm or more, more preferably 0.5 ppm or more, still more preferably 1 ppm or more, further preferably 2 ppm or more, and particularly preferably 5 ppm or more.

The content of the polymer (I) contained in the second composition of the present disclosure can be measured by the same method as water containing the polymer (I). For example, the content can be determined by solid-state NMR measurement.

The second composition of the present disclosure may solely contain one polymer (I), or may contain two or more different polymers (I).

The second composition of the present disclosure contains a metal ion having a valency of 2 or more. The

metal ion having a valency of 2 or more is not limited, and is preferably, for example, an ion of a metal constituting the metal salt described as the inorganic flocculant above, and preferably, for example, at least one selected from the group consisting of Fe, Al, and Ca.

In the second composition of the present disclosure, the content of the metal ion having a valency of 2 or more is preferably 0.05 mg/L or more based on the composition. The content is more preferably 0.1 mg/L or more, still more preferably 0.15 mg/L or more, and particularly preferably 0.2 mg/L or more. The content of the metal ion having a valency of 2 or more is preferably 1,000 mg/L or less, more preferably 500 mg/L or less, 250 mg/L or less, still more preferably 100 mg/L or less, further preferably 50 mg/L or less, particularly preferably 10 mg/L or less, and most preferably 5 mg/L or less.

The content of the metal ion having a valency of 2 or more is measured by the method of the Pack Test (manufactured by Kyoritsu Chemical-Check Lab., Corp.).

The second composition of the present disclosure may contain a substance other than the polymer (I), water, and the metal ion having a valency of 2 or more. For example, the second composition may contain the flocculant and the like described with respect to the first treatment method of the present disclosure. The second composition of the present disclosure may contain a fluorine-containing polymer other than the polymer (I). The fluorine-containing polymer other than the polymer (I) may be suitably that contained in the first composition of the present disclosure. The fluorine-containing polymer other than the polymer (I) is preferably a fluorine-containing polymer having an ion exchange rate (IXR) exceeding 53. The second composition of the present disclosure may contain PTFE. PTFE is the same as what may be contained in the first composition of the present disclosure.

In the second composition of the present disclosure, the content of the fluorine-containing polymer other than the polymer (I) is preferably 5,000 ppm or less based on the mass of the composition. The content is more preferably 2,000 ppm or less, still more preferably 1,000 ppm or less, and particularly preferably 500 ppm or less. The lower limit of the content is not limited, and may be substantially 0 ppm, may be more than 0 ppm, may be 1 ppm or more, and may be 100 ppm or more.

The content of the fluorine-containing polymer other than the polymer (I) can be determined by a method of separating a solid component (the fluorine-containing polymer other than the polymer (I)) by a MF membrane.

When the second composition of the present disclosure contains PTFE, the content of PTFE is preferably 5,000 ppm or less based on the mass of the composition. The content is more preferably 2,000 ppm or less, still more preferably 1,000 ppm or less, and particularly preferably 500 ppm or less. The lower limit of the content is not limited, and may be substantially 0 ppm, may be more than 0 ppm, may be 1 ppm or more, and may be 100 ppm or more. The content of PTFE can be determined by a method for separating a solid component (PTFE) with a MF membrane.

In the second composition of the present disclosure, the total amount of the polymer (I), water, and the metal ion having a valency of 2 or more is preferably 95.0% by mass or more, preferably 99.0% by mass or more, and still more preferably 99.9% by mass or more, and the second composition is particularly preferably composed substantially solely of the polymer (I), water, and the metal ion having a valency of 2 or more.

The second composition of the present disclosure can be obtained by removing the polymer (I) from water generated in the above-described fluorine-containing polymer production step. As for the removal method, the embodiment described with respect to the above-described first treatment method of the present disclosure can be suitably adopted. In particular, in the removal step, flocculation is performed on the polymer (I), and thus the second composition of the present disclosure can be suitably obtained by a method that employs the step of adding an inorganic flocculant (preferably a metal salt) to water containing the polymer (I).

The present disclosure also provides a water treatment method comprising removing a water-soluble polymer in which a proportion of carbon atom-bonded hydrogen atoms replaced by fluorine atoms is 50% or more from water containing the water-soluble polymer (hereinafter also referred to as the "second treatment method of the present disclosure").

Water solubility means the property of being readily dissolved or dispersed in water. The particle size of a water-soluble polymer cannot be measured by, for example, dynamic light scattering (DLS). On the other hand, the particle size of a non-water-soluble polymer that is not water soluble can be measured by, for example, dynamic light scattering (DLS).

In the second treatment method of the present disclosure, the removal step can be performed in the entirely same manner as the first treatment method of the present disclosure except that water containing a water-soluble polymer in which the proportion of carbon atom-bonded hydrogen atoms replaced by fluorine atoms is 50% or more is used.

The "proportion of carbon atom-bonded hydrogen atoms replaced by fluorine atoms" is determined as the proportion of the number of fluorine atoms to the total number of hydrogen atoms bonded to carbon atoms and halogen atoms (including fluorine atoms) bonded to carbon atoms.

The removal step is preferably a step of performing flocculation on water containing a water-soluble polymer, more preferably a step of adding a flocculant to water containing a water-soluble polymer, still more preferably a step of adding an inorganic flocculant to water containing a water-soluble polymer, and particularly preferably a step of adding

an inorganic flocculant to water containing a water-soluble polymer and then adding a polymer flocculant. The flocculant, the inorganic flocculant, and the polymer flocculant may be those described with respect to the first treatment method of the present disclosure.

In the second treatment method of the present disclosure, the removal step is preferably a step of reducing the concentration of the water-soluble polymer in water containing the water-soluble polymer to 50% or less based on the concentration before the removal step. More preferably the concentration is 40% or less, still more preferably 30% or less, further preferably 20% or less, and particularly preferably 10% or less.

The removal step is also preferably a step of reducing the concentration of the water-soluble polymer in treated water to 250 ppm or less. More preferably the concentration is 200 ppm or less, still more preferably 100 ppm or less, further preferably 80 ppm or less, still further preferably 60 ppm or less, and particularly preferably 50 ppm or less.

The water-soluble polymer is not limited, and a water-soluble polymer in which the proportion of carbon atom-bonded hydrogen atoms replaced by fluorine atoms is 50% or more can be used among the above-described polymer (I), and a water-soluble polymer, other than the above-described polymer (I), in which the proportion of carbon atom-bonded hydrogen atoms replaced by fluorine atoms is 50% or more can also be used.

Examples of the water-soluble polymer include a water soluble polymer containing a polymerization unit (I) that is based on a monomer represented by the following general formula (I):

$$CX^1X^3{=}CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

In the water-soluble polymer, the content of the polymerization unit (I) is preferably 50% by mass or more, more preferably 60% by mass or more, still more preferably 70% by mass or more, further preferably 80% by mass or more, still further preferably 90% by mass or more, particularly preferably 95% by mass or more, and most preferably 99% by mass or more.

The water-soluble polymer may contain a polymerization unit based on a fluorine-containing monomer based on trifluoroethylene, tetrafluoroethylene (TFE), vinylidene fluoride (VdF), vinyl fluoride (VF), chlorotrifluoroethylene (CTFE), hexafluoropropylene (HFP), hexafluoroisobutylene, perfluoroalkylethylene, fluorovinyl ether (FVE), $CH_2{=}CFCF_3$, $CHF{=}CHCF_3$ (E form), $CHF{=}CHCF_3$ (Z form), or the like.

The water-soluble polymer may also contain a polymerization unit based on a fluorine-free monomer.

The fluorine-free monomer is a monomer having a radically polymerizable, ethylenically unsaturated bond, such as acrylic acid esters, methacrylic acid esters, unsaturated carboxylic acids, hydrolyzable silyl group-containing monomers, hydroxyl group-containing alkyl vinyl ethers, carboxylic acid vinyl esters, and $\alpha$-olefins. In particular, the fluorine-free monomer is preferably at least one selected from the group consisting of acrylic acid esters, methacrylic acid esters, unsaturated carboxylic acids, and hydrolyzable silyl group-containing monomers.

The fluorine-free monomer is more preferably at least one monomer selected from the group consisting of acrylic acid esters and methacrylic acid esters, unsaturated carboxylic acids, and at least one selected from the group consisting of hydrolyzable silyl group-containing monomers.

In addition, a monomer having a radically polymerizable, ethylenically unsaturated bond may be used in combination.

The acrylic acid esters or the methacrylic acid esters are preferably acrylic acid alkyl esters having an alkyl group with 1 to 10 carbon atoms or methacrylic acid alkyl esters having an alkyl group with 1 to 10 carbon atoms. Examples of the acrylic acid alkyl esters and the methacrylic acid alkyl esters include (meth)acrylic acid alkyl esters such as methyl acrylate, ethyl acrylate, n-propyl acrylate, isopropyl acrylate, n-butyl acrylate, methyl methacrylate, n-propyl methacrylate, ethyl methacrylate, n-butyl methacrylate, isopropyl methacrylate, 2-ethylhexyl acrylate, 2-ethylhexyl methacrylate, cyclohexyl acrylate, and cyclohexyl methacrylate. Further, the acrylic acid alkyl ester or the methacrylic acid alkyl ester may be a hydroxyl group-containing acrylic monomer having a hydroxyl group and a (meth)acryloyl group within the molecule, such as 2-hydroxyethyl acrylate, 2-hydroxypropyl acrylate, 4-hydroxybutyl acrylate, 2-hydroxyethyl methacrylate, 2-hydroxypropyl methacrylate, or 4-hydroxybutyl methacrylate.

One of these acrylic acid esters and methacrylic acid esters may be used singly, or two or more may be used in combination, and n-butyl acrylate and methyl methacrylate are preferable.

The fluorine-free monomer in particular is preferably at least one (meth)acrylic acid alkyl ester selected from the group consisting of methyl methacrylate, n-butyl acrylate, 2-ethylhexyl methacrylate, and cyclohexyl methacrylate. Neither the acrylic acid ester nor the methacrylic acid ester contains a hydrolyzable silyl group.

The acrylic acid ester or the methacrylic acid ester is further preferably a combination of n-butyl acrylate and methyl methacrylate or a combination of n-butyl acrylate, methyl methacrylate, and 2-ethylhexyl methacrylate, and is particularly preferably a combination of n-butyl acrylate, methyl methacrylate, and 2-ethylhexyl methacrylate. In addition,

it is also preferable to combine a hydroxyl group-containing acrylic monomer having a hydroxyl group and a (meth)acryloyl group.

Specific examples of the unsaturated carboxylic acid include acrylic acid, methacrylic acid, vinyl acetate, crotonic acid, cinnamic acid, 3-allyloxypropionic acid, 3-(2-allyloxyethoxycarbonyl)propionic acid, itaconic acid, itaconic acid monoester, maleic acid, maleic acid monoester, maleic anhydride, fumaric acid, fumaric acid monoester, vinyl phthalate, vinyl pyromellitate, and undecylenic acid. In particular, from the viewpoint that homopolymerizability is low so that a homopolymer is unlikely formed, and that introduction of a carboxyl group is readily controlled, at least one selected from the group consisting of acrylic acid, methacrylic acid, vinyl acetate, crotonic acid, itaconic acid, maleic acid, maleic acid monoester, fumaric acid, fumaric acid monoester, 3-allyloxypropionic acid, and undecylenic acid is preferable.

Examples of the hydrolyzable silyl group-containing monomer include

$CH_2=CHCOO(CH_2)_3Si(OCH_3)_3$,

$CH_2=CHCOO(CH_2)_3Si(CH_3)(OCH_3)_2$,

$CH_2=CHCOO(CH_2)_3Si(OC_2H_5)_3$,

$CH_2=CHCOO(CH_2)_3Si(CH_3)(OC_2H_5)_2$,

$CH_2=C(CH_3)COO(CH_2)_3Si(OCH_3)_3$,

$CH_2=C(CH_3)COO(CH_2)_3Si(CH_3)(OCH_3)_2$,

$CH_2=C(CH_3)COO(CH_2)_3Si(OC_2H_5)_3$,

$CH_2=C(CH_3)COO(CH_2)_3Si(CH_3)(OC_2H_5)_2$,

$CH_2=C(CH_3)COO(CH_2)_2O(CH_2)_3Si(OCH_3)_3$,

$CH_2=C(CH_3)COO(CH_2)_2(CH_2)_3Si(CH_3)(OCH_3)_2$,

$CH_2=C(CH_3)COO(CH_2)_{11}Si(OCH_3)_3$,

and $CH_2=C(CH_3)COO(CH_2)_{11}Si(CH_3)(OCH_3)_2$. One of these hydrolyzable silyl group-containing monomers may be used singly, or two or more may be used in combination.

The hydrolyzable silyl group-containing monomer in particular is preferably at least one selected from the group consisting of γ-methacryloxypropyltrimethoxysilane, γ-methacryloxypropylmethyldimethoxysilane, γ-methacryloxypropyltriethoxysilane, and γ-methacryloxypropylmethyldiethoxysilane, and is more preferably γ-methacryloxypropyltriethoxysilane.

Examples of the hydroxyl group-containing alkyl vinyl ether include 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, 2-hydroxyethyl allyl ether, 4-hydroxybutyl allyl ether, and glycerol monoallyl ether. In terms of excellent polymerization reactivity, at least one selected from the group consisting of 4-hydroxybutyl vinyl ether and 2-hydroxyethyl vinyl ether is preferable.

Examples of the carboxylic acid vinyl ester include vinyl acetate, vinyl propionate, vinyl butyrate, vinyl isobutyrate, vinyl pivalate, vinyl caproate, vinyl versatate, vinyl laurate, vinyl stearate, vinyl cyclohexylcarboxylate, vinyl benzoate, and vinyl para-t-butylbenzoate.

Examples of the α-olefin include ethylene, propylene, n-butene, isobutene, and styrene.

The number average molecular weight of the water-soluble polymer is preferably $0.1\times10^4$ or more, more preferably $0.2\times10^4$ or more, still more preferably $0.3\times10^4$ or more, further preferably $0.4\times10^4$ or more, still further preferably $0.5\times10^4$ or more, particularly preferably $1.0\times10^4$ or more, very particularly preferably $3.0\times10^4$ or more, and most preferably $3.1\times10^4$ or more. The number average molecular weight is preferably $75.0\times10^4$ or less, more preferably $50.0\times10^4$ or less, still more preferably $40.0\times10^4$ or less, further preferably $30.0\times10^4$ or less, and particularly preferably $20.0\times10^4$ or less.

The weight average molecular weight of the water-soluble polymer is preferably $0.2\times10^4$ or more, more preferably $0.4\times10^4$ or more, still more preferably $0.6\times10^4$ or more, further preferably $0.8\times10^4$ or more, still further preferably $1.0\times10^4$ or more, particularly preferably $5.0\times10^4$ or more, still particularly preferably $10.0\times10^4$ or more, further particularly preferably $15.0\times10^4$ or more, very particularly preferably $20.0\times10^4$ or more, and most preferably $25.0\times10^4$ or more.

The weight average molecular weight is preferably $150.0\times10^4$ or less, more preferably $100.0\times10^4$ or less, still more preferably $60.0\times10^4$ or less, particularly preferably $50.0\times10^4$ or less, and further preferably $40.0\times10^4$ or less.

The number average molecular weight and the weight average molecular weight are molecular weight values calculated by gel permeation chromatography (GPC) using monodisperse polystyrene as a standard. Further, when measurement by GPC is not possible, the number average molecular weight of the water-soluble polymer can be determined by the correlation between the number average molecular weight calculated from the number of terminal groups obtained by NMR, FT-IR, or the like, and the melt flow rate. The melt flow rate can be measured in accordance with JIS K 7210.

The water-soluble polymer preferably has an ion exchange rate (IXR) of 53 or less. The IXR is preferably 0.5 or more, more preferably 1 or more, still more preferably 3 or more, further preferably 4 or more, still further preferably 5 or more, and particularly preferably 8 or more. The IXR is preferably 43 or less, more preferably 33 or less, and still more preferably 23 or less.

In the water-soluble polymer, the ionic groups (anionic groups) are typically distributed along the polymer backbone. The water-soluble polymer contains the polymer backbone together with a repeating side chain bonded to this backbone, and this side chain preferably has an ionic group.

The water-soluble polymer preferably contains an ionic group (anionic group) having a pKa of less than 10, and more preferably less than 7. The ionic group of the water-soluble polymer is preferably selected from the group consisting of sulfonate, carboxylate, phosphonate, phosphate, and a mixture thereof.

The terms "sulfonate, carboxylate, phosphonate, and phosphate" are intended to refer to the respective salts or the respective acids that can form salts. A salt when used is preferably an alkali metal salt or an ammonium salt. A preferable ionic group is a sulfonate group.

Water containing the water-soluble polymer is not limited, and examples include water generated in a polymer production step such as a production step of the water-soluble polymer and a polymer polymerization step involving the water-soluble polymer. Water containing the water-soluble polymer may be wastewater.

In water containing the water-soluble polymer, the content of the water-soluble polymer is not limited, and is preferably, for example, 10% by mass or less from the viewpoint of increasing removal efficiency. In water containing the water-soluble polymer, the content of the water-soluble polymer is more preferably 1% by mass or less, still more preferably 0.5% by mass or less, and particularly preferably 0.2% by mass or less. The content may be more than 0% by mass, may be more than 0.005% by mass, may be more than 0.006% by mass, may be more than 0.008% by mass, may be 0.010% by mass or more, may be more than 0.020% by mass, may be more than 0.025% by mass, and may be 0.1% by mass or more.

The content of the water-soluble polymer can be measured from, for example, solid-state NMR.

Water containing the water-soluble polymer may solely contain one water-soluble polymer, or may contain two or more different water-soluble polymers.

Water containing the water-soluble polymer may contain a substance other than the water-soluble polymer and water, and may be a dispersion, an aqueous solution, or the like.

Examples of the substance other than the water-soluble polymer and water include fluorine-free polymers other than the water-soluble polymer, fluorine-containing polymers other than the water-soluble polymer, and oligomers.

The fluorine-containing polymer other than the water-soluble polymer is, among fluorine-containing polymers, a fluorine-containing polymer in which the proportion of carbon atom-bonded hydrogen atoms replaced by fluorine atoms is less than 50% or which is a water-insoluble fluorine-containing polymer.

Examples of the fluorine-containing polymer other than the water-soluble polymer include a fluorine-containing polymer having an ion exchange rate (IXR) exceeding 53.

A preferable fluorine-containing polymer other than the water-soluble polymer is completely free of an ionic group or has a limited number of ionic groups that result in an ion exchange rate of more than about 100.

The ion exchange rate of the fluorine-containing polymer other than the water-soluble polymer is preferably more than 53, more preferably 100 or more, still more preferably 1,000 or more, further preferably 2,000 or more, and particularly preferably 5,000 or more.

Examples of the fluorine-containing polymer other than the water-soluble polymer include those described with respect to the first treatment method of the present disclosure. Examples include PTFE, copolymers of TFE with another monomer copolymerizable with TFE (fluorine-containing monomers such as vinylidene fluoride, hexafluoropropylene, chlorotrifluoroethylene, and perfluoro(alkyl vinyl ether), hydrocarbon olefins such as ethylene, propylene, and isobutene, and alkyl vinyl ether,) (e.g., a tetrafluoroethylene-hexafluoropropylene copolymer (FEP), a tetrafluoroethylene-perfluoro(alkyl vinyl ether) copolymer (PFA), and an ethylene-tetrafluoroethylene copolymer (ETFE)), fluororesins such as polyvinylidene fluoride (PVDF), polychlorotrifluoroethylene (PCTFE), and ethylene-chlorotrifluoroethylene (ECTFE), vinylidene fluoride rubbers (FKM) such as a vinylidene fluoride-hexafluoropropylene copolymer, fluororubbers such as tetrafluoroethylene-propylene rubber (FEPM) and tetrafluoroethylene-perfluoromethyl vinyl ether rubber (FFKM), and fluorine-containing elastomers.

PTFE may be a homopolymer of TFE, or may be modified PTFE containing 99.0% by mass or more of TFE and 1.0% by weight or less of a modifying monomer.

The fluorine-containing polymer other than the water-soluble polymer is preferably at least one selected from the group consisting of PTFE and a melt-processable fluororesin containing 60.0 to 98.0% by mass of a TFE unit and 2.0 to 40.0% by mass of another monomer, and is more preferably PTFE.

Water containing the water-soluble polymer preferably has a content of a substance other than the water-soluble polymer and water of 1.0% by mass or less, more preferably 0.5% by mass or less, and further preferably 0.2% by mass or less. The lower limit of the content of a substance other than the water-soluble polymer and water is not limited, and, for example, may be 0% by mass or may be 0.1% by mass.

Water containing the water-soluble polymer preferably has a water content of 99.0% by mass or more. The content is more preferably 99.5% by mass or more, and still more preferably 99.8% by mass or more.

The present disclosure also provides a composition comprising a water-soluble polymer in which a proportion of carbon atom-bonded hydrogen atoms replaced by fluorine atoms is 50% or more, water, and a fluorine-containing polymer (excluding the water-soluble polymer), wherein the composition has a content of the water-soluble polymer of 250 ppm or less (hereinafter also referred to as the "third composition of the present disclosure").

The third composition of the present disclosure is preferably an aqueous solution of the water-soluble polymer.

In the third composition of the present disclosure, the water-soluble polymer is the same as that described with respect to the second treatment method of the present disclosure, and a preferable embodiment can be suitably adopted.

The third composition of the present disclosure has a content of the water-soluble polymer of 250 ppm or less based on the mass of the composition. The content of the water-soluble polymer is preferably 200 ppm or less, more preferably 150 ppm or less, still more preferably 100 ppm or less, further preferably 50 ppm or less, still further preferably 25 ppm or less, and particularly preferably 10 ppm or less. The lower limit of the content is not limited, and is preferably 0.1 ppm or more, more preferably 0.5 ppm or more, still more preferably 1 ppm or more, further preferably 2 ppm or more, and particularly preferably 5 ppm or more.

The content of the water-soluble polymer contained in the third composition of the present disclosure can be measured by the same method as water containing the water-soluble polymer. For example, the content can be determined by solid-state NMR measurement.

The third composition of the present disclosure may solely contain one water-soluble polymer, or may contain two or more different water-soluble polymers.

The third composition of the present disclosure contains a fluorine-containing polymer other than the water-soluble polymer. The fluorine-containing polymer other than the water-soluble polymer may be the fluorine-containing polymer other than the water-soluble polymer described with respect to the second treatment method of the present disclosure, and a suitable embodiment can suitably be adopted.

The ion exchange rate of the fluorine-containing polymer other than the water-soluble polymer is preferably more than 53, more preferably 100 or more, still more preferably 1,000 or more, further preferably 2,000 or more, and particularly preferably 5,000 or more.

The fluorine-containing polymer other than the water-soluble polymer is preferably PTFE.

In the third composition of the present disclosure, the content of the fluorine-containing polymer other than the water-soluble polymer is preferably 5,000 ppm or less based on the mass of the composition. The content is more preferably 2,000 ppm or less, still more preferably 1,000 ppm or less, and particularly preferably 500 ppm or less. The lower limit of the content is not limited, and may be substantially 0 ppm, may be more than 0 ppm, may be 1 ppm or more, and may be 100 ppm or more.

The content of the fluorine-containing polymer other than the water-soluble polymer can be determined by a method of separating a solid component (the fluorine-containing polymer other than the water-soluble polymer) by a MF membrane.

The third composition of the present disclosure may contain the water-soluble polymer, water, and a substance other than a fluorine-containing polymer other than the water-soluble polymer. For example, the third composition may contain the flocculant and the like described with respect to the second treatment method of the present disclosure. The third composition of the present disclosure may contain a metal ion, and may contain a metal ion having a valency of 2 or more. As for the metal ion having a valency of 2 or more, the metal ion as contained in the second composition of the present disclosure can suitably be contained.

The content of the metal ion having a valency of 2 or more is preferably 0.05 mg/L or more, more preferably 0.1 mg/L or more, still more preferably 0.15 mg/L or more, and particularly preferably 0.2 mg/L or more, based on the composition. The content of the metal ion having a valency of 2 or more is preferably 1,000 mg/L or less, more preferably 500 mg/L or less, 250 mg/L or less, still more preferably 100 mg/L or less, further preferably 50 mg/L or less, particularly preferably 10 mg/L or less, and most preferably 5 mg/L or less.

In the third composition of the present disclosure, the total amount of the water-soluble polymer, water, and the fluorine-containing polymer other than the water-soluble polymer is preferably 95.0% by mass or more, preferably

99.0% by mass or more, and more preferably 99.9% by mass or more, and the third composition is particularly preferably composed substantially solely of the water-soluble polymer, water, and the fluorine-containing polymer other than the water-soluble polymer.

The third composition of the present disclosure can be obtained by removing the water-soluble polymer from water containing the water-soluble polymer described with respect to the second treatment method of the present disclosure. As for the removal method, the embodiment described with respect to the above-described second treatment method of the present disclosure can be suitably adopted. In particular, in the removal step, flocculation is performed on the water-soluble polymer, and thus the third composition of the present disclosure can be suitably obtained by a method that employs the step of adding an inorganic flocculant to water containing the water-soluble polymer.

The present disclosure also provides a composition comprising a water-soluble polymer in which a proportion of carbon atom-bonded hydrogen atoms replaced by fluorine atoms is 50% or more, water, and a metal ion having a valency of 2 or more, wherein the composition has a content of the water-soluble polymer of 250 ppm or less (hereinafter also referred to as the "fourth composition of the present disclosure").

The fourth composition of the present disclosure is preferably an aqueous solution of the water-soluble polymer.

In the fourth composition of the present disclosure, the water-soluble polymer is the same as the water-soluble polymer described with respect to the second treatment method of the present disclosure, and a preferable embodiment can be suitably adopted.

The fourth composition of the present disclosure has a content of the water-soluble polymer of 250 ppm or less based on the mass of the composition. The content of the water-soluble polymer is preferably 200 ppm or less, more preferably 150 ppm or less, still more preferably 100 ppm or less, further preferably 50 ppm or less, still further preferably 25 ppm or less, and particularly preferably 10 ppm or less. The lower limit of the content is not limited, and is preferably 0.1 ppm or more, more preferably 0.5 ppm or more, still more preferably 1 ppm or more, further preferably 2 ppm or more, and particularly preferably 5 ppm or more.

The content of the water-soluble polymer contained in the fourth composition of the present disclosure can be measured by the same method as water containing the water-soluble polymer. For example, the content can be determined by solid-state NMR measurement.

The fourth composition of the present disclosure may solely contain one water-soluble polymer, or may contain two or more different water-soluble polymers.

The fourth composition of the present disclosure contains a metal ion having a valency of 2 or more. The metal ion having a valency of 2 or more is not limited, and is preferably, for example, an ion of a metal constituting the metal salt described as the inorganic flocculant above, and preferably, for example, at least one selected from the group consisting of Fe, Al, and Ca.

In the fourth composition of the present disclosure, the content of the metal ion having a valency of 2 or more is preferably 0.05 mg/L or more based on the composition. The content is more preferably 0.1 mg/L or more, still more preferably 0.15 mg/L or more, and particularly preferably 0.2 mg/L or more. The content of the metal ion having a valency of 2 or more is preferably 1,000 mg/L or less, more preferably 500 mg/L or less, 250 mg/L or less, still more preferably 100 mg/L or less, further preferably 50 mg/L or less, particularly preferably 10 mg/L or less, and most preferably 5 mg/L or less.

The content of the metal ion having a valency of 2 or more is measured by the method of the Pack Test (manufactured by Kyoritsu Chemical-Check Lab., Corp.).

The fourth composition of the present disclosure may contain a substance other than the water-soluble polymer, water, and the metal ion having a valency of 2 or more. For example, the second composition may contain the flocculant and the like described with respect to the first treatment method of the present disclosure. The fourth composition of the present disclosure may contain a fluorine-containing polymer other than the water-soluble polymer. The fluorine-containing polymer other than the water-soluble polymer may be suitably that described with respect to the second treatment method of the present disclosure. The fluorine-containing polymer other than the water-soluble polymer is preferably a fluorine-containing polymer having an ion exchange rate (IXR) exceeding 53.

The fourth composition of the present disclosure may contain PTFE. PTFE may be PTFE described with respect to the second treatment method of the present disclosure. In the fourth composition of the present disclosure, the content of the fluorine-containing polymer other than the water-soluble polymer is preferably 5,000 ppm or less based on the mass of the composition. The content is more preferably 2,000 ppm or less, still more preferably 1,000 ppm or less, and particularly preferably 500 ppm or less. The lower limit of the content is not limited, and may be substantially 0 ppm, may be more than 0 ppm, may be 1 ppm or more, and may be 100 ppm or more.

The content of the fluorine-containing polymer other than the water-soluble polymer can be determined by a method of separating a solid component (the fluorine-containing polymer other than the water-soluble polymer) by a MF membrane.

In the fourth composition of the present disclosure, the total amount of the water-soluble polymer, water, and the metal ion having a valency of 2 or more is preferably 95.0% by mass or more, preferably 99.0% by mass or more,

and still more preferably 99.9% by mass or more, and the second composition is particularly preferably composed substantially solely of the water-soluble polymer, water, and the metal ion having a valency of 2 or more.

The fourth composition of the present disclosure can be obtained by removing the water-soluble polymer from water containing the water-soluble polymer described with respect to the second treatment method of the present disclosure. As for the removal method, the embodiment described with respect to the above-described second treatment method of the present disclosure can be suitably adopted. In particular, in the removal step, flocculation is performed on the water-soluble polymer, and thus the fourth composition of the present disclosure can be suitably obtained by a method that employs the step of adding an inorganic flocculant (preferably a metal salt) to water containing the water-soluble polymer.

The present disclosure also provides a water treatment method comprising removing a polymer in which a proportion of carbon atom-bonded hydrogen atoms replaced by fluorine atoms is 50% or more, which contains an ionic group, and which has an ion exchange rate of 53 or less from water containing the polymer (hereinafter also referred to as the "third treatment method of the present disclosure").

In the third treatment method of the present disclosure, the removal step can be performed in the entirely same manner as the first treatment method of the present disclosure except that water containing a polymer (hereinafter also referred to as polymer $\alpha$) in which the proportion of carbon atom-bonded hydrogen atoms replaced by fluorine atoms is 50% or more, which contains an ionic group, and which has an ion-exchange rate of 53 or less is used.

The removal step is preferably a step of performing flocculation on water containing the polymer $\alpha$, more preferably a step of adding a flocculant to water containing the polymer $\alpha$, still more preferably a step of adding an inorganic flocculant to water containing the polymer $\alpha$, and particularly preferably a step of adding an inorganic flocculant to water containing the polymer $\alpha$ and then adding a polymer flocculant. The flocculant, the inorganic flocculant, and the polymer flocculant may be those described with respect to the first treatment method of the present disclosure.

Water containing the polymer $\alpha$ is not limited, and examples include water generated in a polymer production step such as a production step of the polymer $\alpha$ and a polymer polymerization step involving the polymer $\alpha$. Water containing the polymer $\alpha$ may be wastewater.

In the third treatment method of the present disclosure, the removal step is preferably a step of reducing the concentration of the polymer $\alpha$ in water containing the polymer $\alpha$ to 50% or less relative to the concentration before the removal step. More preferably the concentration is 40% or less, still more preferably 30% or less, further preferably 20% or less, and particularly preferably 10% or less.

The removal step is also preferably a step of reducing the concentration of the polymer $\alpha$ in treated water to 250 ppm or less. More preferably the concentration is 200 ppm or less, still more preferably 100 ppm or less, further preferably 80 ppm or less, still further preferably 60 ppm or less, and particularly preferably 50 ppm or less.

The polymer $\alpha$ is not limited, and a water-soluble or non-water-soluble polymer in which the proportion of carbon atom-bonded hydrogen atoms replaced by fluorine atoms is 50% or more, which contains an ionic group, and which has an ion exchange rate of 53 or less can be used among the above-described polymers (I), and a polymer, other than the above-described polymers (I), in which the proportion of carbon atom-bonded hydrogen atoms replaced by fluorine atoms is 50% or more, which contains an ionic group, and which has an ion exchange rate of 53 or less can also be used.

Examples of the polymer $\alpha$ include a water-soluble or non-water-soluble polymer containing a polymerization unit (I) that is based on a monomer represented by the following general formula (I):

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

In the polymer $\alpha$, the content of the polymerization unit (I) is preferably 50% by mass or more, more preferably 60% by mass or more, still more preferably 70% by mass or more, further preferably 80% by mass or more, still further preferably 90% by mass or more, particularly preferably 95% by mass or more, and most preferably 99% by mass or more.

The polymer $\alpha$ may contain a polymerization unit based on a fluorine-containing monomer based on trifluoroethylene, tetrafluoroethylene (TFE), vinylidene fluoride (VdF), vinyl fluoride (VF), chlorotrifluoroethylene (CTFE), hexafluoropropylene (HFP), hexafluoroisobutylene, perfluoroalkylethylene, fluorovinyl ether (FVE), $CH_2=CFCF_3$, $CHF=CHCF_3$ (E form), $CHF=CHCF_3$ (Z form), or the like.

The polymer $\alpha$ may also contain a polymerization unit based on a fluorine-free monomer. The fluorine-free monomer is a monomer having a radically polymerizable, ethylenically unsaturated bond, such as acrylic acid esters, methacrylic acid esters, unsaturated carboxylic acids, hydrolyzable silyl group-containing monomers, hydroxyl group-containing alkyl vinyl ethers, carboxylic acid vinyl esters, and $\alpha$-olefins. In particular, the fluorine-free monomer is preferably at least one selected from the group consisting of acrylic acid esters, methacrylic acid esters, unsaturated carboxylic acids, and hydrolyzable silyl group-containing monomers.

The fluorine-free monomer is more preferably at least one monomer selected from the group consisting of acrylic acid esters and methacrylic acid esters, unsaturated carboxylic acids, and at least one selected from the group consisting of hydrolyzable silyl group-containing monomers.

In addition, a monomer having a radically polymerizable, ethylenically unsaturated bond may be used in combination.

The fluorine-free monomer may be those described with respect to the above water-soluble polymer.

The number average molecular weight of the polymer $\alpha$ is preferably $0.1\times10^4$ or more, more preferably $0.2\times10^4$ or more, still more preferably $0.3\times10^4$ or more, particularly preferably $0.4\times10^4$ or more, still further preferably $0.5\times10^4$ or more, particularly preferably $1.0\times10^4$ or more, very particularly preferably $3.0\times10^4$ or more, and most preferably $3.1\times10^4$ or more. Further, the number average molecular weight is preferably $75.0\times10^4$ or less, more preferably $50.0\times10^4$ or less, still more preferably $40.0\times10^4$ or less, still more preferably $30.0\times10^4$ or less, and particularly preferably $20.0\times10^4$ or less. The weight average molecular weight of the polymer $\alpha$ is preferably $0.2\times10^4$ or more, more preferably $0.4\times10^4$ or more, still more preferably $0.6\times10^4$ or more, further preferably $0.8\times10^4$ or more, still further preferably $1.0\times10^4$ or more, particularly preferably $5.0\times10^4$ or more, still particularly preferably $10.0\times10^4$ or more, further particularly preferably $15.0\times10^4$ or more, very particularly preferably $20.0\times10^4$ or more, and most preferably $25.0\times10^4$ or more.

Further, the weight average molecular weight is preferably $150.0\times10^4$ or less, more preferably $100.0\times10^4$ or less, still more preferably $60.0\times10^4$ or less, particularly preferably $50.0\times10^4$ or less, and further preferably $40.0\times10^4$ or less.

The number average molecular weight and the weight average molecular weight are molecular weight values calculated by gel permeation chromatography (GPC) using monodisperse polystyrene as a standard. Further, when measurement by GPC is not possible, the number average molecular weight of the water-soluble polymer can be determined by the correlation between the number average molecular weight calculated from the number of terminal groups obtained by NMR, FT-IR, or the like, and the melt flow rate. The melt flow rate can be measured in accordance with JIS K 7210.

The polymer $\alpha$ preferably has water-solubility. Water-solubility means the property of being readily dissolved or dispersed in water. The particle size of the polymer $\alpha$ having water solubility cannot be measured by, for example, dynamic light scattering (DLS). On the other hand, the particle size of the polymer $\alpha$ that is not water soluble can be measured by, for example, dynamic light scattering (DLS).

The polymer $\alpha$ has an ion exchange rate (IXR) of 53 or less. The IXR is preferably 0.5 or more, more preferably 1 or more, still more preferably 3 or more, further preferably 4 or more, still further preferably 5 or more, and particularly preferably 8 or more. Further, the IXR is more preferably 43 or less, still more preferably 33 or less, and particularly preferably 23 or less.

In the polymer $\alpha$, the ionic groups are typically distributed along the polymer backbone. The polymer $\alpha$ contains the polymer backbone together with a repeating side chain bonded to this backbone, and this side chain preferably has an ionic group.

The polymer $\alpha$ preferably contains an ionic group having a pKa of less than 10, and more preferably less than 7. The ionic group of the polymer $\alpha$ is preferably selected from the group consisting of sulfonate, carboxylate, phosphonate, phosphate, and a mixture thereof.

The terms "sulfonate, carboxylate, phosphonate, and phosphate" are intended to refer to the respective salts or the respective acids that can form salts. A salt when used is preferably an alkali metal salt or an ammonium salt. A preferable ionic group is a sulfonate group.

In water containing the polymer $\alpha$, the content of the polymer $\alpha$ is not limited, and is preferably, for example, 10% by mass or less from the viewpoint of increasing removal efficiency. In water containing the polymer $\alpha$, the content of the polymer $\alpha$ is more preferably 1% by mass or less, still more preferably 0.5% by mass or less, and particularly preferably 0.2% by mass or less. The content may be more than 0% by mass, may be more than 0.005% by mass, may be more than 0.006% by mass, may be more than 0.008% by mass, may be 0.010% by mass or more, may be more than 0.020% by mass, may be more than 0.025% by mass, and may be 0.1% by mass or more.

The content of the polymer $\alpha$ can be measured from, for example, solid-state NMR.

Water containing the polymer $\alpha$ may solely contain one polymer $\alpha$, or may contain two or more different polymers $\alpha$.

Water containing the polymer $\alpha$ may contain a substance other than the polymer $\alpha$ and water, and may be a dispersion, an aqueous solution, or the like.

Examples of the substance other than the polymer $\alpha$ and water include fluorine-free polymers, fluorine-containing polymers other than the polymer $\alpha$, and oligomers.

The fluorine-containing polymer other than the polymer $\alpha$ is a fluorine-containing polymer in which the proportion of carbon atom-bonded hydrogen atoms replaced by fluorine atoms is less than 50%, which does not contain an ionic group, or which has an ion exchange rate exceeding 53.

Examples of the fluorine-containing polymer other than the polymer $\alpha$ include a fluorine-containing polymer

having an ion exchange rate (IXR) exceeding 53.

A preferable fluorine-containing polymer other than the polymer α is completely free of an ionic group or has a limited number of ionic groups that result in an ion exchange rate of more than about 100. The ion exchange rate of a preferable fluorine-containing polymer other than the polymer α is preferably 1,000 or more, more preferably 2,000 or more, and still more preferably 5,000 or more.

Specific examples of the fluorine-containing polymer other than the polymer α include, among the fluorine-containing polymers described with respect to the first treatment method of the present disclosure, those in which the proportion of carbon atom-bonded hydrogen atoms replaced by fluorine atoms is less than 50%, which does not contain an ionic group, or which has an ion exchange rate (IXR) exceeding 53. Examples include PTFE, copolymers of TFE with another monomer copolymerizable with TFE (fluorine-containing monomers such as vinylidene fluoride, hexafluoropropylene, chlorotrifluoroethylene, and perfluoro(alkyl vinyl ether), hydrocarbon olefins such as ethylene, propylene, and isobutene, and alkyl vinyl ether,) (e.g., a tetrafluoroethylene-hexafluoropropylene copolymer (FEP), a tetrafluoroethylene-perfluoro(alkyl vinyl ether) copolymer (PFA), and an ethylene-tetrafluoroethylene copolymer (ETFE)), fluororesins such as polyvinylidene fluoride (PVDF), polychlorotrifluoroethylene (PCTFE), and ethylene-chlorotrifluoroethylene (ECTFE), vinylidene fluoride rubbers (FKM) such as a vinylidene fluoride-hexafluoropropylene copolymer, fluororubbers such as tetrafluoroethylene-propylene rubber (FEPM) and tetrafluoroethylene-perfluoromethyl vinyl ether rubber (FFKM), and fluorine-containing elastomers.

PTFE may be a homopolymer of TFE, or may be modified PTFE containing 99.0% by mass or more of TFE and 1.0% by weight or less of a modifying monomer.

The fluorine-containing polymer other than the polymer α is preferably at least one selected from the group consisting of PTFE and a melt-processable fluororesin containing 60.0 to 98.0% by mass of a TFE unit and 2.0 to 40.0% by mass of another monomer, and is more preferably PTFE.

Water containing the polymer α preferably has a content of a substance other than the polymer α and water of 1.0% by mass or less, more preferably 0.5% by mass or less, and further preferably 0.2% by mass or less. The lower limit of the content of a substance other than the polymer α and water is not limited, and, for example, may be 0% by mass or may be 0.1% by mass.

Water containing the polymer α preferably has a water content of 99.0% by mass or more. The content is more preferably 99.5% by mass or more, and still more preferably 99.8% by mass or more.

The present disclosure also provides a composition comprising a polymer in which a proportion of carbon atom-bonded hydrogen atoms replaced by fluorine atoms is 50% or more, which contains an ionic group, and which has an ion exchange rate of 53 or less, water, and a fluorine-containing polymer (excluding the polymer), wherein the composition has a content of the polymer of 250 ppm or less (hereinafter also referred to as the "fifth composition of the present disclosure").

In the fifth composition of the present disclosure, the polymer (polymer α) in which the proportion of carbon atom-bonded hydrogen atoms replaced by fluorine atoms is 50% or more, which contains an ionic group, and which has an ion exchange rate of 53 or less is the same as that described with respect to the third treatment method of the present disclosure, and a preferable embodiment can be suitably adopted.

The fifth composition of the present disclosure may be an aqueous solution of the polymer α and may be a dispersion of the polymer α.

The fifth composition of the present disclosure has a content of the polymer α of 250 ppm or less based on the mass of the composition. The content of the polymer α is preferably 200 ppm or less, more preferably 150 ppm or less, still more preferably 100 ppm or less, further preferably 50 ppm or less, still further preferably 25 ppm or less, and particularly preferably 10 ppm or less. The lower limit of the content is not limited, and is preferably 0.1 ppm or more, more preferably 0.5 ppm or more, still more preferably 1 ppm or more, further preferably 2 ppm or more, and particularly preferably 5 ppm or more.

The content of the polymer α contained in the fifth composition of the present disclosure can be measured by the same method as water containing the polymer α. For example, the content can be determined by solid-state NMR measurement.

The fifth composition of the present disclosure may solely contain one polymer α, or may contain two or more different polymers α.

Water containing the polymer α contains a fluorine-containing polymer other than the polymer α.

The fluorine-containing polymer other than the polymer α may be that described with respect to the third treatment method of the present disclosure, and a suitable embodiment can suitably be adopted.

The ion exchange rate of the fluorine-containing polymer other than the polymer α is preferably more than 53, more preferably 100 or more, still more preferably 1,000 or more, further preferably 2,000 or more, and particularly preferably 5,000 or more.

The fluorine-containing polymer other than the polymer α is preferably PTFE.

In the fifth composition of the present disclosure, the content of the fluorine-containing polymer other than the

polymer α is preferably 5,000 ppm or less based on the mass of the composition. The content is more preferably 2,000 ppm or less, still more preferably 1,000 ppm or less, and particularly preferably 500 ppm or less. The lower limit of the content is not limited, and may be substantially 0 ppm, may be more than 0 ppm, may be 1 ppm or more, and may be 100 ppm or more.

The content of the fluorine-containing polymer other than the polymer α can be determined by a method of separating a solid component (the fluorine-containing polymer other than the polymer α) by a MF membrane.

The fifth composition of the present disclosure may contain the polymer α, water, and a substance other than the fluorine-containing polymer other than the polymer α. For example, the fifth composition may contain the flocculant and the like described with respect to the third treatment method of the present disclosure. The fifth composition of the present disclosure may contain a metal ion, and may contain a metal ion having a valency of 2 or more. As for the metal ion having a valency of 2 or more, the metal ion contained in the second composition of the present disclosure can suitably be contained.

The content of the metal ion having a valency of 2 or more is preferably 0.05 mg/L or more, more preferably 0.1 mg/L or more, still more preferably 0.15 mg/L or more, and particularly preferably 0.2 mg/L or more, based on the composition. The content of the metal ion having a valency of 2 or more is preferably 1,000 mg/L or less, more preferably 500 mg/L or less, 250 mg/L or less, still more preferably 100 mg/L or less, further preferably 50 mg/L or less, particularly preferably 10 mg/L or less, and most preferably 5 mg/L or less.

In the fifth composition of the present disclosure, the total amount of the polymer α, water, and the fluorine-containing polymer other than the polymer α is preferably 95.0% by mass or more, preferably 99.0% by mass or more, and more preferably 99.9% by mass or more, and the fifth composition is particularly preferably composed substantially solely of the polymer α, water, and the fluorine-containing polymer other than the polymer α.

The fifth composition of the present disclosure can be obtained by removing the polymer α from water containing the polymer α described with respect to the third treatment method of the present disclosure. As for the removal method, the embodiment described with respect to the above-described third treatment method of the present disclosure can be suitably adopted. In particular, in the removal step, flocculation is performed on the polymer α, and thus the fifth composition of the present disclosure can be suitably obtained by a method that employs the step of adding an inorganic flocculant to water containing the polymer α.

The present disclosure also provides a composition comprising a polymer in which a proportion of carbon atom-bonded hydrogen atoms replaced by fluorine atoms is 50% or more, which contains an ionic group, and which has an ion exchange rate of 53 or less, water, and a metal ion having a valency of 2 or more, wherein the composition has a content of the polymer of 250 ppm or less (hereinafter also referred to as the "sixth composition of the present disclosure").

In the sixth composition of the present disclosure, the polymer (polymer α) in which the proportion of carbon atom-bonded hydrogen atoms replaced by fluorine atoms is 50% or more, which contains an ionic group, and which has an ion-exchange rate of 53 or less is the same as that described with respect to the third treatment method of the present disclosure, and a preferable embodiment can be suitably adopted.

The sixth composition of the present disclosure may be an aqueous solution of the polymer or a dispersion of the polymer.

The sixth composition of the present disclosure has a content of the polymer α of 250 ppm or less based on the mass of the composition. The content of the polymer α is preferably 200 ppm or less, more preferably 150 ppm or less, still more preferably 100 ppm or less, further preferably 50 ppm or less, still further preferably 25 ppm or less, and particularly preferably 10 ppm or less. The lower limit of the content is not limited, and is preferably 0.1 ppm or more, more preferably 0.5 ppm or more, still more preferably 1 ppm or more, further preferably 2 ppm or more, and particularly preferably 5 ppm or more.

The content of the polymer α contained in the sixth composition of the present disclosure can be measured by the same method as water containing the polymer α. For example, the content can be determined by solid-state NMR measurement.

The sixth composition of the present disclosure may solely contain one polymer α, or may contain two or more different polymers α.

The sixth composition of the present disclosure contains a metal ion having a valency of 2 or more. The metal ion having a valency of 2 or more is not limited, and is preferably, for example, an ion of a metal constituting the metal salt described as the inorganic flocculant above, and preferably, for example, at least one selected from the group consisting of Fe, Al, and Ca.

In the sixth composition of the present disclosure, the content of the metal ion having a valency of 2 or more is preferably 0.05 mg/L or more based on the composition. The content is more preferably 0.1 mg/L or more, still more preferably 0.15 mg/L or more, and particularly preferably 0.2 mg/L or more. The content of the metal ion having a valency of 2 or more is preferably 1,000 mg/L or less, more preferably 500 mg/L or less, 250 mg/L or less, still more preferably 100 mg/L or less, further preferably 50 mg/L or less, particularly preferably 10 mg/L or less, and most preferably 5 mg/L or less.

The content of the metal ion having a valency of 2 or more is measured by the method of the Pack Test (manufactured by Kyoritsu Chemical-Check Lab., Corp.).

The sixth composition of the present disclosure may contain a substance other than the polymer $\alpha$, water, and the metal ion having a valency of 2 or more. For example, the sixth composition may contain the flocculant and the like described with respect to the third treatment method of the present disclosure. The sixth composition of the present disclosure may contain a fluorine-containing polymer other than the polymer $\alpha$. The fluorine-containing polymer other than the polymer $\alpha$ may be suitably that described with respect to the third treatment method of the present disclosure. The fluorine-containing polymer other than the polymer $\alpha$ is preferably a fluorine-containing polymer having an ion exchange rate (IXR) exceeding 53. The fourth composition of the present disclosure may contain PTFE. PTFE may be that described with respect to the third treatment method of the present disclosure.

In the sixth composition of the present disclosure, the content of the fluorine-containing polymer other than the polymer $\alpha$ is preferably 5,000 ppm or less based on the mass of the composition. The content is more preferably 2,000 ppm or less, still more preferably 1,000 ppm or less, and particularly preferably 500 ppm or less. The lower limit of the content is not limited, and may be substantially 0 ppm, may be more than 0 ppm, may be 1 ppm or more, and may be 100 ppm or more.

The content of the fluorine-containing polymer other than the polymer $\alpha$ can be determined by a method of separating a solid component (the fluorine-containing polymer other than the polymer $\alpha$) by a MF membrane.

In the sixth composition of the present disclosure, the total amount of the polymer $\alpha$, water, and the metal ion having a valency of 2 or more is preferably 95.0% by mass or more, preferably 99.0% by mass or more, and still more preferably 99.9% by mass or more, and the second composition is particularly preferably composed substantially solely of the polymer $\alpha$, water, and the metal ion having a valency of 2 or more.

The sixth composition of the present disclosure can be obtained by removing the polymer $\alpha$ from water containing the polymer $\alpha$ described with respect to the third treatment method of the present disclosure. As for the removal method, the embodiment described with respect to the above-described second treatment method of the present disclosure can be suitably adopted. In particular, in the removal step, flocculation is performed on the polymer $\alpha$, and thus the sixth composition of the present disclosure can be suitably obtained by a method that employs the step of adding an inorganic flocculant (preferably a metal salt) to water containing the polymer $\alpha$.

## EXAMPLES

The present disclosure is described with reference to experimental examples, but the present disclosure is not intended to be limited by these experimental examples.

In the following experimental examples, a homopolymer (a number average molecular weight of 90,000 and a weight average molecular weight of 190,000) (hereinafter referred to as a "polymer A") of a monomer represented by the following formula:

$$CH_2=CF\ (CF_2OCFCF_3COOH)$$

was used.

The number average molecular weight and the weight average molecular weight were measured by gel permeation chromatography (GPC) using GPC HLC-8020 manufactured by Tosoh Corporation and columns manufactured by Showa Denko K.K. (one GPC KF-801, one GPC KF-802, and two GPC KF-806M connected in series) while allowing tetrahydrofuran (THF) to flow as a solvent at a flow rate of 1 ml/min, and the molecular weights were calculated using monodisperse polystyrene as a standard.

The numerical values of the experimental examples were measured by the following methods.

### Polymer A content in treated aqueous solution

The polymer A content in a treated aqueous solution was measured by the following method.

### Preparation of calibration curve of polymer A

Aqueous solutions containing sodium trifluoroacetate and the polymer A with 5 known concentration levels were prepared, and $^{19}F$ NMR measurement was performed. First-order approximation from the concentrations of sodium trifluoroacetate and the polymer A in each sample and the peak area values of sodium trifluoroacetate and the polymer A was used to obtain a by the following relational expression (1):

$$A=a\times 5\times B\times W\times 136.00/(3\times X\times 256.08) \qquad (1)$$

A: Peak area value derived from $CF_2$ and $CF_3$ of polymer A ($\delta_F$ ppm: -78 to -88 ($-CF-CF_2-O-$, $>CF-CF_3$))
W: Concentration of polymer A (ppm)
B: Peak area value of trifluoroacetic acid ($\delta_F$ ppm: -76 ($CF_3-$))
X: Concentration of trifluoroacetic acid (ppm)

As for the chemical shift, the value obtained when the peak derived from $CF_3$ of sodium trifluoroacetate was -76.0 ppm was used.

The treated aqueous solution was concentrated using an evaporator. Sodium trifluoroacetate was added to the concentrated treated aqueous solution, and $^{19}F$ NMR measurement was performed. From the concentration of sodium trifluoroacetate in the measurement sample and the peak area values of sodium trifluoroacetate and the polymer A, the polymer A content in the treated aqueous solution was obtained by the following relational expression (2):

$$Y=3\times C\times Z\times P\times 256.08/(a\times 5\times D\times Q\times 136.00) \qquad (2)$$

C: Peak area value of polymer A ($\delta_F$ ppm: -78 to -88 ($-CF-CF_2-O-$, $>CF-CF_3$))

Y: Polymer A content in treated aqueous solution (ppm)
D: Peak area value of trifluoroacetic acid ($\delta_F$ ppm: -76 ($CF_3-$))
Z: Concentration of trifluoroacetic acid (ppm)
P: Mass of concentrated pretreatment aqueous solution (g) Q: Mass of concentrated post-treatment aqueous solution (g)

As for the chemical shift, the value obtained when the peak derived from $CF_3$ of sodium trifluoroacetate was -76.0 ppm was used.

pH

The pH was measured with a pH meter D-20 manufactured by Horiba Ltd.

Dissolved aluminum concentration in treated aqueous solution

The dissolved aluminum concentration was measured with the Pack Test Aluminum WAK-A1 (manufactured by Kyoritsu Chemical-Check Lab., Corp.) that is a simple water quality analysis product.

Example 1

First, 0.37 g of a 26.8% by mass aqueous aluminum sulfate solution was added to 100 g of an aqueous solution containing the polymer A in an amount of 500 ppm (aqueous solution A) as a model aqueous solution. The polymer A-containing aqueous solution (aqueous solution A) was stirred in a container at a temperature of 25°C for 30 minutes. After stirring, the pH was 3.2. An aqueous NaOH solution (25%) was added as a pH adjuster to the polymer A-containing aqueous solution (aqueous solution A) to adjust the pH to 7.3.

Then, 0.34 g of 0.07% by mass partially hydrolyzed polyacrylamide (trade name: Floclan A1210 manufactured by Katayama Nalco Inc. was added to the pH-adjuster aqueous solution. After stirring at a temperature of 25°C for 30 minutes, aluminum deposits precipitated.

The precipitated aluminum deposits were filtered through a filter paper to obtain a treated aqueous solution. The concentration of the polymer A in the resulting treated aqueous solution was 42 ppm. The dissolved aluminum concentration in the resulting treated aqueous solution was 1 mg/L.

Example 2

A treated aqueous solution was obtained in the same manner as Experimental Example 1 except that the amount of the aqueous aluminum sulfate solution added was 0.05 g, the pH before pH regulation was 2.9, and the pH after pH regulation was 6.8. The concentration of the polymer A in the resulting treated aqueous solution was 90 ppm.

The dissolved aluminum concentration in the resulting treated aqueous solution was 0.5 mg/L.

## Claims

1. A water treatment method comprising a removal step of removing a polymer (I) containing a polymerization unit (I) based on a monomer represented by the following general formula (I) from water containing the polymer (I):

$$CX^1X^3=CX^2R\ (-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

**2.** The treatment method according to claim 1, wherein the polymer (I) is a water-soluble polymer.

**3.** The treatment method according to claim 1 or 2, wherein the removal step is a step of performing at least one of filtration, adsorption, and flocculation on the water containing the polymer (I).

**4.** The treatment method according to any one of claims 1 to 3, wherein the removal step is a step of performing flocculation on the water containing the polymer (I).

**5.** The treatment method according to any one of claims 1 to 4, wherein the removal step is a step of adding an inorganic flocculant to the water containing the polymer (I).

**6.** The treatment method according to claim 5, wherein the inorganic flocculant is at least one metal salt selected from the group consisting of aluminum salts, iron salts, calcium salts, and silicate minerals containing a metal element having a valency of 2 or more and silicon.

**7.** The treatment method according to claim 5 or 6, wherein the inorganic flocculant is at least one aluminum salt selected from the group consisting of aluminum sulfate and polyaluminum chloride.

**8.** The treatment method according to any one of claims 1 to 7, wherein the removal step is a step of adding a polymer flocculant to the water containing the polymer (I).

**9.** The treatment method according to claim 8, wherein the polymer flocculant is an anionic polymer flocculant.

**10.** The treatment method according to any one of claims 1 to 9, wherein the removal step is a step of adding an inorganic flocculant to the water containing the polymer (I) and then adding a polymer flocculant.

**11.** The treatment method according to any one of claims 1 to 10, wherein the water containing the polymer (I) is water that has undergone a fluoropolymer polymerization step.

**12.** A composition comprising a polymer (I) containing a polymerization unit (I) based on a monomer represented by the following general formula (I), water, and a fluorine-containing polymer excluding the polymer (I), wherein the composition has a content of the polymer (I) of 250 ppm or less:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

**13.** The composition according to claim 12, wherein the polymer (I) is a water-soluble polymer in which a proportion of carbon atom-bonded hydrogen atoms replaced by fluorine atoms is 50% or more.

**14.** The composition according to claim 12 or 13, wherein the polymer (I) is a polymer in which a proportion of carbon atom-bonded hydrogen atoms replaced by fluorine atoms is 50% or more, which contains an ionic group, and which has an ion exchange rate of 53 or less.

**15.** A composition comprising a water-soluble polymer in which a proportion of carbon atom-bonded hydrogen atoms replaced by fluorine atoms is 50% or more, water, and a fluorine-containing polymer excluding the water-soluble

polymer, wherein the composition has a content of the water-soluble polymer of 250 ppm or less.

**16.** A composition comprising a polymer in which a proportion of carbon atom-bonded hydrogen atoms replaced by fluorine atoms is 50% or more, which contains an ionic group, and which has an ion exchange rate of 53 or less, water, and a fluorine-containing polymer excluding the polymer, wherein the composition has a content of the polymer of 250 ppm or less.

**17.** The composition according to any one of claims 12 to 16, wherein the fluorine-containing polymer has an ion exchange rate of higher than 53.

**18.** The composition according to any one of claims 12 to 17, wherein the fluorine-containing polymer is polytetrafluoroethylene.

**19.** The composition according to any one of claims 12 to 18, wherein a content of the fluorine-containing polymer is 1 to 5,000 ppm.

**20.** The composition according to any one of claims 12 to 19, further comprising a metal ion having a valency of 2 or more.

**21.** The composition according to claim 20,
wherein a content of the metal ion having a valency of 2 or more is 0.05 to 1,000 mg/L or more.

**22.** A composition comprising a polymer (I) containing a polymerization unit (I) based on a monomer represented by the following general formula (I), water, and a metal ion having a valency of 2 or more, wherein the composition has a content of the polymer (I) of 250 ppm or less:

$$CX^1X^3=CX^2R(-CZ^1Z^2-A^0)_m \qquad (I)$$

wherein $X^1$ and $X^3$ are each independently F, Cl, H, or $CF_3$; $X^2$ is H, F, an alkyl group, or a fluorine-containing alkyl group; $A^0$ is an anionic group; R is a linking group; $Z^1$ and $Z^2$ are each independently H, F, an alkyl group, or a fluorine-containing alkyl group; and m is an integer of 1 or more.

**23.** A composition comprising a water-soluble polymer in which a proportion of carbon atom-bonded hydrogen atoms replaced by fluorine atoms is 50% or more, water, and a metal ion having a valency of 2 or more, wherein the composition has a content of the water-soluble polymer of 250 ppm or less.

**24.** A composition comprising a polymer in which a proportion of carbon atom-bonded hydrogen atoms replaced by fluorine atoms is 50% or more, which contains an ionic group, and which has an ion exchange rate of 53 or less, water, and a metal ion having a valency of 2 or more, wherein the composition has a content of the polymer of 250 ppm or less.

**25.** The composition according to any one of claims 22 to 24, wherein a content of the metal ion having a valency of 2 or more is 0.05 to 1,000 mg/L or more.

**26.** A water treatment method comprising a step of removing a water-soluble polymer in which a proportion of carbon atom-bonded hydrogen atoms replaced by fluorine atoms is 50% or more from water containing the water-soluble polymer.

**27.** A water treatment method comprising a step of removing a polymer in which a proportion of carbon atom-bonded hydrogen atoms replaced by fluorine atoms is 50% or more, which contains an ionic group, and which has an ion exchange rate of 53 or less from water containing the polymer.

**INTERNATIONAL SEARCH REPORT**

International application No.
PCT/JP2020/018044

A. CLASSIFICATION OF SUBJECT MATTER
C02F 1/52(2006.01)i; C02F 1/00(2006.01)i; C02F 1/28(2006.01)i; C02F 1/42(2006.01)i; C02F 1/56(2006.01)i
FI: C02F1/52 H; C02F1/52 J; C02F1/56 H; C02F1/56 J; C02F1/28 A; C02F1/42 D; C02F1/00 L
According to International Patent Classification (IPC) or to both national classification and IPC

B. FIELDS SEARCHED
Minimum documentation searched (classification system followed by classification symbols)
C02F1/52; C02F1/00; C02F1/28; C02F1/42; C02F1/56

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-78034 A (DAIKIN INDUSTRIES, LTD.) 27.04.2017 (2017-04-27) claims, paragraphs [0010]-[0022], [0027]-[0064], examples | 1-9, 11, 26-27<br>10-25 |
| X | JP 2016-144800 A (DAIKIN INDUSTRIES, LTD.) 12.08.2016 (2016-08-12) claims, paragraphs [0018]-[0032] | 1-3, 26-27 |
| Y | JP 2003-225680 A (ORGANO CORP.) 12.08.2003 (2003-08-12) claims, paragraph [0021] | 10-11 |
| X<br>Y | JP 2003-285076 A (JIEMUKO KK) 07.10.2003 (2003-10-07) claims, paragraphs [0010]-[0025], [0028] | 15-21, 23-27<br>12-25 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 July 2020 (09.07.2020) | 21 July 2020 (21.07.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/018044

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y | JP 2002-58966 A (DAIKIN INDUSTRIES, LTD.) 26.02.2002 (2002-02-26) claims, paragraphs [0003], [0013], [0016]-[0018], [0038], [0041]-[0043] | 15-18, 20-21, 23-27<br>12-25 |

Form PCT/ISA/210 (continuation of second sheet) (January 2015)

**INTERNATIONAL SEARCH REPORT**
Information on patent family members

International application No.
PCT/JP2020/018044

| Patent Documents referred in the Report | Publication Date | Patent Family | Publication Date |
|---|---|---|---|
| JP 2017-78034 A | 27 Apr. 2017 | US 2019/0055185 A1 claims, paragraphs [0018]-[0035], [0042]-[0097], examples<br>WO 2017/069034 A1<br>EP 3366665 A1<br>CN 108137470 A | |
| JP 2016-144800 A | 12 Aug. 2016 | FR 3032129 A1<br>CN 105836846 A | |
| JP 2003-225680 A | 12 Aug. 2003 | (Family: none) | |
| JP 2003-285076 A | 07 Oct. 2003 | WO 2003/066533 A1<br>AU 2003203383 A | |
| JP 2002-58966 A | 26 Feb. 2002 | US 2003/0168405 A1 claims, paragraphs [0003], [0013], [0016]-[0018], [0057], [0060]-[0062]<br>WO 2002/013953 A1<br>EP 1323460 A1<br>CN 1444503 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009241011 A
- JP 2016187779 A
- WO 2017017833 A
- WO 2014099453 A
- WO 2010075497 A
- WO 2010075496 A
- WO 2011008381 A
- WO 2009055521 A
- WO 1987007619 A
- JP 61293476 A
- WO 2010075494 A
- WO 2010075359 A
- WO 2012082454 A
- WO 2006119224 A
- WO 2013085864 A
- WO 2012082707 A
- WO 2012082703 A
- WO 2012082451 A
- WO 2006135825 A
- WO 2004067588 A
- WO 2009068528 A
- JP 2004075978 A
- JP 2001226436 A
- WO 1992017635 A
- WO 2014069165 A
- JP 11181009 A
- US 6841616 B
- WO 2013146950 A
- WO 2013146947 A
- US 20070015864
- US 20070015865
- US 20070015866
- US 20070276103
- US 20070117914
- US 2007142541
- US 20080015319
- US 3250808 A
- US 3271341 A
- JP 2003119204 A
- WO 2005042593 A
- WO 2008060461 A
- WO 2007046377 A
- WO 2007119526 A
- WO 2007046482 A
- WO 2007046345 A
- US 20140228531
- WO 2013189824 A
- WO 2013189826 A


### Non-patent literature cited in the description


- **YUJI WADA.** High Class Treatment System of Fluoride-Containing Wastewater. *Kagaku To Kogyo,* 2002, vol. 76, 557-564